# EUROPEAN PATENT APPLICATION

(11) **EP 4 287 597 A1**
(43) Date of publication of application: **06.12.2023**
(21) Application number: 23716398.5
(22) Date of filing: 11.01.2023
(51) Int. Cl.: H04M 1/72454, H04M 1/72403, H04M 1/02, G06F 3/0484, G06F 3/041, G06F 3/0488, G06F 3/04842

(54) **ELECTRONIC DEVICE FOR DISPLAYING SCREEN ON BASIS OF TRANSFORMATION OF DISPLAY, AND METHOD THEREFOR**

(30) Priority: 14.04.2022 KR 20220046573; 09.08.2022 KR 20220099388
(71) Applicant: Samsung Electronics Co., Ltd., Suwon-Si, Gyeonggi-do 16677 (KR)
(72) Inventor: JWA, Yeonjoo, Suwon-si Gyeonggi-do 16677 (KR); MOON, Hyeyoung, Suwon-si Gyeonggi-do 16677 (KR); LEE, Wonjun, Suwon-si Gyeonggi-do 16677 (KR); KANG, Yeonju, Suwon-si Gyeonggi-do 16677 (KR); KWON, Jinhee, Suwon-si Gyeonggi-do 16677 (KR); PARK, Junu, Suwon-si Gyeonggi-do 16677 (KR); LIM, Eunsil, Suwon-si Gyeonggi-do 16677 (KR)
(74) Representative: HGF
(86) International application number: PCT/KR2023/000530
(87) International publication number: WO 2023/200084

(57) **Abstract**

According to an embodiment, an electronic device includes a display, and a processor. The processor displays a plurality of screens in a displaying area of the display, based on execution of at least one application. The processor adjusts, in response to an input for transforming the display in a state that a ratio of sizes of the screens is a first ratio, size of the displaying area by transforming the display. The processor displays, in the adjusted displaying area, the screens based on a ratio selected by the input among the first ratio, or a second ratio different from the first ratio.

## Description

### [Technical Field]

The following descriptions relate to an electronic device and a method for displaying a screen based on a transformation of the display.

### [Background Art]

An electronic device having a deformable form factor using a flexible display has been developed. For example, an electronic device including a plurality of foldable housings may provide a user with a user experience based on a shape of the electronic device by using a flexible display disposed across the plurality of housings. For example, the electronic device may modify content displayed on the flexible display based on the shape of the flexible display that is folded or unfolded by the user's external force. As another example, an electronic device for folding or unfolding a flexible display has been developed.

### [Disclosure]

### [Technical Solution]

According to an embodiment, an electronic device may comprise a display, and a processor. The processor may display a plurality of screens in a displaying area of the display, based on execution of at least one application. The processor may adjust, in response to an input for transforming the display in a state that a ratio of sizes of the screens is a first ratio, size of the displaying area by transforming the display. The processor may display, in the adjusted displaying area, the screens based on a ratio selected by the input among the first ratio, or a second ratio different from the first ratio.

According to an embodiment, a method of an electronic device may include an operation of displaying a plurality of screens in a displaying area of a display, based on execution of at least one application. The method of the electronic device may include an operation of adjusting, in response to an input for transforming the display in a state that a ratio of sizes of the screens is a first ratio, size of the displaying area by transforming the display. The method of the electronic device may include an operation of displaying, in the adjusted displaying area, the screens based on a ratio selected by the input among the first ratio, or a second ratio different from the first ratio.

According to an embodiment, an electronic device may include a display, a memory for storing instructions, and at least one processor operatively coupled to the display and the memory. When the instructions are executed, the at least one processors may display a plurality of screens respectively corresponding to applications are executed by the at least one processor with a visual object for adjusting a position or a size of at least one of the plurality of screens in a displaying area. The at least one processors may transform, in response to receive a first input for adjusting a location of at least one of the plurality of screens by moving the visual object toward a first direction, the display. The at least one processors may modify a location of the at least one of the plurality of screens based on the received first input, in the displaying area adjusted by the transforming of the display. The at least one processors may cease, in response to receive a second input moving the visual object toward a second direction different from the first direction, displaying of at least one of the plurality of screens independent from the transforming of the display.

According to an embodiment, a method of an electronic device may include displaying a plurality of screens respectively corresponding to applications are executed by the at least one processor with a visual object for adjusting a position of at least one of the plurality of screens in a displaying area of a display of the electronic device. The method of the electronic device may include adjusting the displaying area of the display, in response to receiving a first input for adjusting the position of at least one of the plurality of screens by moving the visual object in a first direction, by inserting the display into the housing of the electronic device or extracting from the housing by transforming the display. The method of the electronic device may include modifying a location of the at least one of the plurality of screens based on the received first input, in the displaying area adjusted. The method of the electronic device may include cease, in response to receive a second input moving the visual object toward a second direction different from the first direction, displaying of at least one of the plurality of screens independent from the transforming of the display.

According to an embodiment, an electronic device may include a housing, a display, an actuator for adjusting a displaying area of the display by inserting the display into the housing or by extracting the display from the housing, a memory for storing instructions, and at least one processor operatively coupled to the display, the actuator, and the memory. When the instructions are executed, the at least one processor may display screens respectively corresponding to the applications executed by the at least one processor in the displaying area. The at least one processor may transform the display, in response to receiving an input for controlling the actuator, while a ratio of areas of the screens corresponds to a first ratio, by controlling the actuator. The at least one processor may display the screens based on a second ratio different from the first ratio in the displaying area adjusted by the transformation of the display.

According to an embodiment, a method of an electronic device may include displaying screens respectively corresponding to the applications executed by the electronic device in the displaying area of the electronic device. The method of the electronic device may include transforming the display by controlling the actuator, in response to receiving an input for controlling the actuator of the electronic device for inserting the display into a housing of the electronic device, or extracting the display from the housing while a ratio of areas of the screens corresponds to a first ratio. The method of the electronic device may include displaying the screens based on a second ratio different from the first ratio in the displaying area adjusted by the deformation of the display.

### [Description of the Drawings]

FIG. 1 is a block diagram of an electronic device according to an embodiment.
FIGS. 2A to 2B are exemplary diagrams for describing an operation in which an electronic device according to an embodiment is transformed between states in different shapes.
FIGS. 3A to 3B are exemplary diagrams for describing an operation in which an electronic device according to an embodiment displays a plurality of screens in a displaying area of a display.
FIG. 4 is a flowchart for describing an operation performed by an electronic device according to an embodiment in response to an input for transforming a display.
FIGS. 5A to 5C are diagrams for describing an operation of an electronic device transforming a display in response to an input related to a border line between screens or handles displayed on each of the screens, according to an embodiment.
FIGS. 6A to 6B are diagrams for describing an operation of an electronic device transforming a display based on an input performed on a border line and screens distinguished by the border line, according to an embodiment.
FIGS. 7A to 7B are diagrams for describing another operation of an electronic device transforming a display based on an input performed on a border line and the screens distinguished by the border line, according to an embodiment.
FIGS. 8A to 8C are diagrams for describing an operation performed by an electronic device based on an input related to a border line while transforming a display, according to an embodiment.
FIG. 9 is a diagram for describing an operation performed by an electronic device based on an input related to a handle of any one of the screens while transforming a display, according to an embodiment.
FIGS. 10A to 10C are diagrams for describing an operation performed by an electronic device based on simultaneously identifying a first input initiated on a border line and a second input for selecting one of the screens, according to an embodiment.
FIGS. 11A to 11B are diagrams for describing an operation performed by an electronic device based on inputs received in a second screen superimposed on a first screen, according to an embodiment.
FIGS. 12A to 12B are diagrams for describing an operation performed by an electronic device based on an input of dragging a second screen superimposed on a first screen, according to an embodiment.
FIGS. 13A to 13B are diagrams for describing another operation performed by an electronic device based on an input of dragging a second screen superimposed on a first screen, according to an embodiment.
FIGS. 14A to 14B are diagrams for describing an operation performed by an electronic device based on an input by pressing a button for transforming a display, according to an embodiment.
FIG. 15 is a diagram for describing an operation performed by an electronic device based on an input by pressing a button for transforming a display while displaying a second screen superimposed on a first screen, according to an embodiment.
FIG. 16 is a flowchart for describing an operation of an electronic device transforming a display based on an input for adjusting screens displayed in a display, according to an embodiment.
FIG. 17 is a flowchart for describing an operation of an electronic device transforming a display based on an input for adjusting screens displayed in the display, according to an embodiment.
FIG. 18 is a flowchart for describing an operation performed by an electronic device based on a direction of an input of dragging a first screen among screens, according to an embodiment.
FIG. 19 is a flowchart for describing an operation in which screens adjust a ratio of areas displayed in a displaying area of a display while an electronic device performs an operation of transforming a display, according to an embodiment.
FIG. 20 is a flowchart for describing an operation performed by an electronic device based on a change in an area of a displaying area by a transformation of a display while performing an operation of transforming a display, according to an embodiment.
FIG. 21A is a front view of a first state of an electronic device according to an embodiment.
FIG. 21B is a rear view of a first state of an electronic device according to an embodiment.
FIG. 21C is a front view of a second state of an electronic device according to an embodiment.
FIG. 21D is a rear view of the second state of the electronic device according to an embodiment.
FIG. 22A is an exploded perspective view of an electronic device according to an embodiment.
FIG. 22B is a cross-sectional view illustrating an example in which an electronic device according to an embodiment is cut along A-A' of FIG. 15A.

### [Mode for Invention]

Hereinafter, various embodiments of the present document will be described with reference to the accompanying drawings.

The various embodiments and terms used herein are not intended to limit the technical features described herein to specific embodiments and should be understood to include various modifications, equivalents, or substitutes of the embodiment. With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "the first", "the second", or "first", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

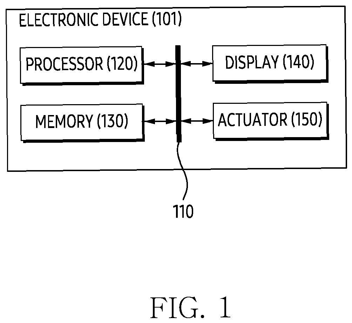

FIG. 1 is a block diagram of an electronic device 101 according to an embodiment. Referring to FIG. 1, according to an embodiment, the electronic device 101 may include at least one of a processor 120, a memory 130, a display 140, and an actuator 150. The processor 120, memory 130, display 140, and actuator 150 may be electrically and/or operably coupled with each other by electronical components such as a communication bus 110. Although illustrated based on different blocks, the embodiment is not limited thereto. The type and/or number of hardware components included in the electronic device 101 are not limited to those illustrated in FIG. 1. For example, the electronic device 101 may include only a part of the hardware components illustrated in FIG. 1.

According to an embodiment, the processor 120 of the electronic device 101 may include a hardware component for processing data based on one or more instructions. For example, the hardware component for processing data may include an arithmetic and logic unit (ALU), a floating point unit (FPU), a field programmable gate array (FPGA), an application processor (AP), and/or a central processing unit (CPU). The number of processors 120 may be one or more. For example, the processor 120 may have a structure of a multicore processor such as a dual core, a quad core, or a hexa core.

According to an embodiment, the memory 130 of the electronic device 101 may include a hardware component for storing data and/or instructions input and/or output to the processor 120. For example, the memory 130 may include a volatile memory such as random-access memory (RAM) and/or a non-volatile memory such as read-only memory (ROM). For example, the volatile memory may include at least one of a dynamic RAM (DRAM), a static RAM (SRAM), a cache RAM, and a pseudo SRAM (PSRAM). For example, the non-volatile memory may include at least one of a programmable ROM (PROM), an erasable PROM (EPROM), an Electrically Erasable PROM (EEPROM), a flash memory, a hard disk, a compact disk, and an Embedded MultiMedia Card (eMMC).

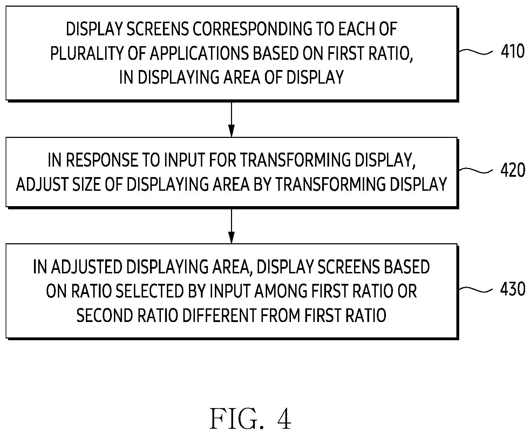

In the memory 130, one or more instructions indicating a calculation and/or an operation to be performed by the processor 120 on data may be stored. A set of one or more instructions may be referred to as firmware, operating system, process, routine, sub-routine, and/or application. For example, when a set of a plurality of instructions distributed in the form of an operating system, firmware, driver, and/or application is executed, the electronic device 101 and/or the processor 120 may perform at least one of the operations of FIGS. 4, 16 to 20. Hereinafter, the fact that the application is installed in the electronic device 101 may mean that one or more instructions provided in the form of the application are stored in the memory 130 of the electronic device 101, and the one or more applications are stored in an executable format (e.g., a file with a preset extension by the operating system of the electronic device 101) by the processor 120 of the electronic device 101. According to an embodiment, the electronic device 101 may execute applications stored in the memory 130 substantially simultaneously using the processor 120. Since the electronic device 101 executes the applications substantially simultaneously, the electronic device 101 may provide a user experience based on multitasking to the user.

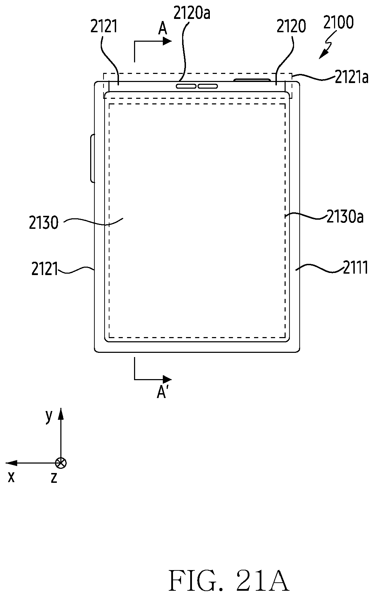

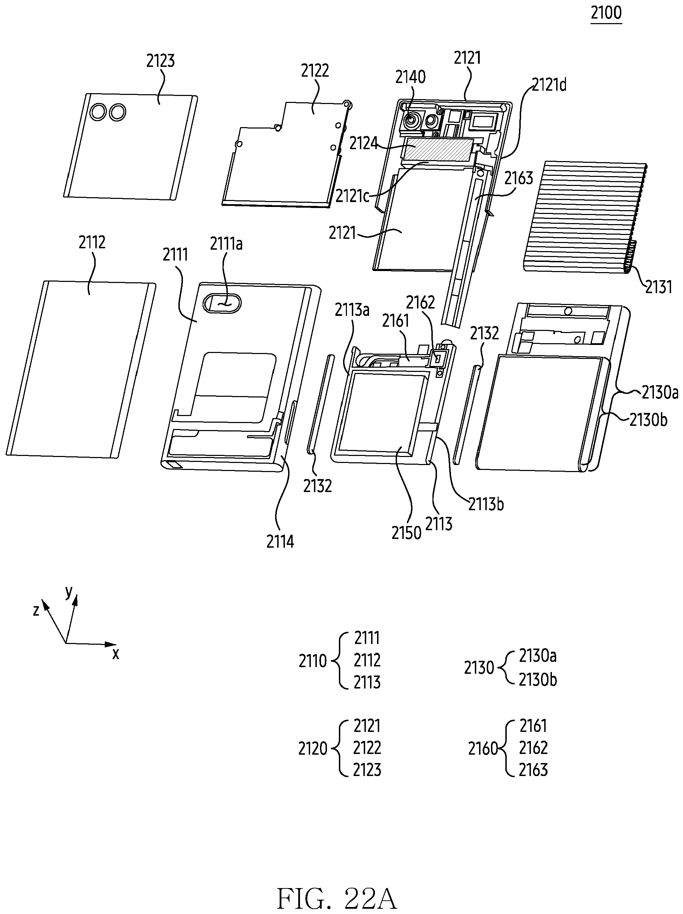

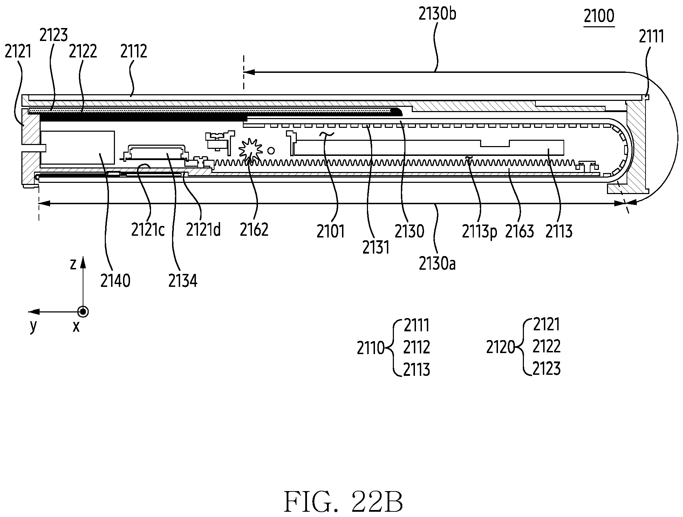

According to an embodiment, the display 140 of the electronic device 101 may output visualized information to a user. In an embodiment, the display 140 may be a flexible display that may be transformed by an external force applied to the display 140. The display 140 may include liquid crystal display (LCD), plasma display panel (PDP), one or more LEDs (Light Emitting Diode), and/or one or more OLEDs. An exemplary structure of the electronic device 101 to transform the shape of the display 140 will be described later with reference to FIGS. 21A to 21D and 22A to 22B. Herein, reference to transformation of the display 140 or transformation of the shape of the display 140 may include transforming (e.g., changing, modifying, adjusting, increasing, decreasing etc.) a visible, or exposed, area of the display 140, for example by transforming a size of a visible/exposed area of the display 140 such as by one or more of the method disclosed herein (e.g., refer to FIGs. 22A and 22B). That is, a reference to transforming the display 140 does not require that the display 140 is physically altered (e.g., in the sense of being made bigger or smaller). In certain embodiments, when a part of the display 140 is rolled (or curled, or furled etc.), transforming the display 140 may include unrolling the part of the display 140 or rolling another part of the display 140; here, the overall size of the display 140 may not change, but the form or shape of the display 140 is changed - hence use of the term "transforming". It will be appreciated that, in certain embodiments, transforming the display 140 may include changing a physical shape of the display 140, and so such an operation is not excluded. For example, if the display 140 includes a stretchable display, transforming the display 140 may comprise stretching the stretchable display to increase a displaying area or visible area of the display 140, or allowing the stretchable display to contract to decrease a displaying area or visible area of the display 140.

According to an embodiment, the display 140 may include a sensor (e.g., a touch sensor panel (TSP)) for detecting an external object (e.g., a user's finger) on the display 140. For example, based on the TSP, the electronic device 101 may detect an external object that is in contact with or floating on the display 140. In response to detecting the external object, the electronic device 101 may execute a function related to a specific visual object corresponding to a part of the display 140 in which the external object is in contact among the visual objects displayed in the display 140.

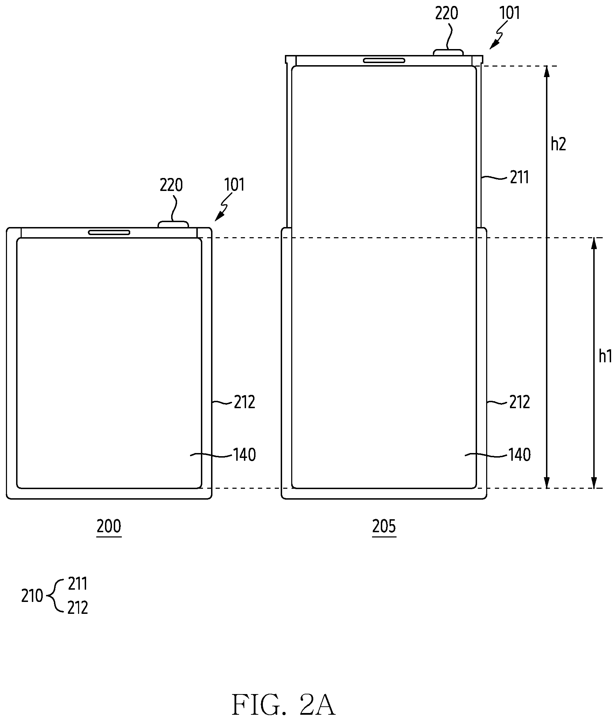

According to an embodiment, the actuator 150 of the electronic device 101 may modify a shape of the display 140 and/or the electronic device 101. The actuator 150 may be referred to as a driving unit. The actuator 150 may include a hardware (e.g., a motor) for outputting kinetic energy from electrical energy. In an embodiment in which actuator 150 includes a motor, the actuator 150 may include a gear (e.g., rack gear) for modifying the rotational motion of the motor to a linear motion (or translation motion) applied to the display 140. In an embodiment, the actuator 150 may include a plurality of gears engaged to each other to adjust the rotational force (e.g., torque) of the motor. The plurality of gears may be referred to as a gear assembly of the actuator 150 or a transmission unit. According to an embodiment, the processor 120 may adjust a speed and/or a direction at which display 140 and/or electronic device 101 are transformed by modifying the frequency, voltage, and/or current of the power signal applied to the motor of actuator 150. According to an embodiment, the processor 120 may adjust the speed and/or the direction at which the display 140 and/or the electronic device 101 are transformed by adjusting the positional relationship of a plurality of gears included in the gear assembly and/or the gear ratio between interconnected gears. According to an embodiment, exemplary operations in which the electronic device 101 controls the actuator 150 to adjust the shape of the display 140 will be described later with reference to FIGS. 2A to 2B.

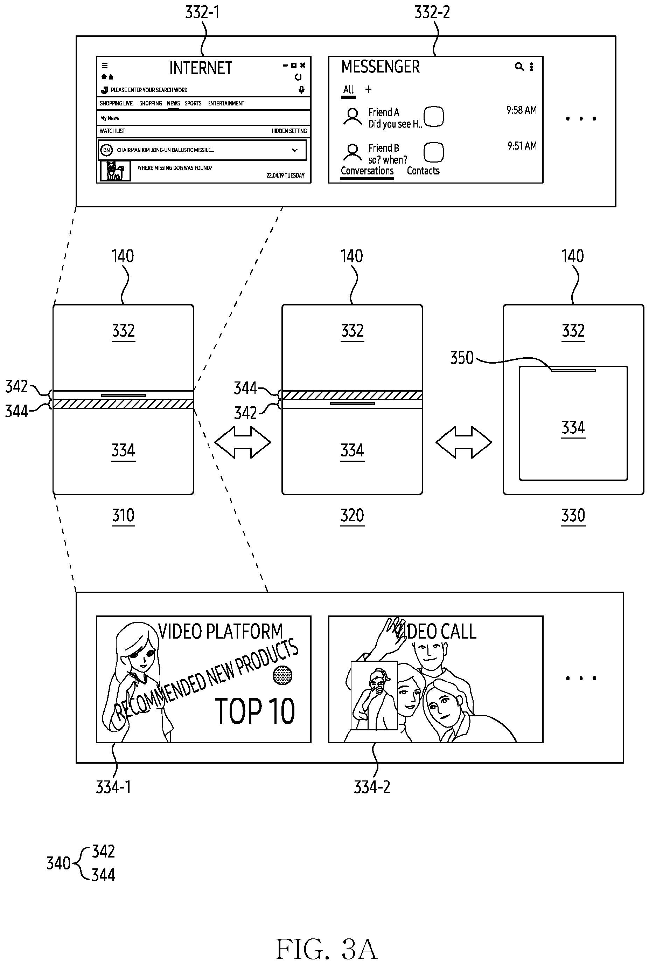

According to an embodiment, the electronic device 101 may display screens provided from each of the applications executed simultaneously on the display 140 and/or display screens provided from an application on the display 140. The electronic device 101 may display the screens in different parts of the display 140, or may display the screens by partially superimposing the screens. The electronic device 101 may display a visual object for receiving an input that adjusts a positional relationship between the screens on the display 140. According to an embodiment, an operation in which the electronic device 101 displays the screens on the display 140 will be described later with reference to FIGS. 3A to 3B.

According to an embodiment, the electronic device 101 may simultaneously perform a transformation of the display 140, and resizing and/or moving at least one of the screens displayed on the display 140. Adjusting the positional relationship of the screens by the electronic device 101 may include an operation of resizing and/or moving at least one of the screens. Resizing the screen by the electronic device 101 may include an operation of modifying an extent on which the screen is displayed by modifying a width and / or a height of the screen displayed on the display 140. Moving the screen by the electronic device 101 may include an operation of modifying a position of the screen displayed on the display 140.

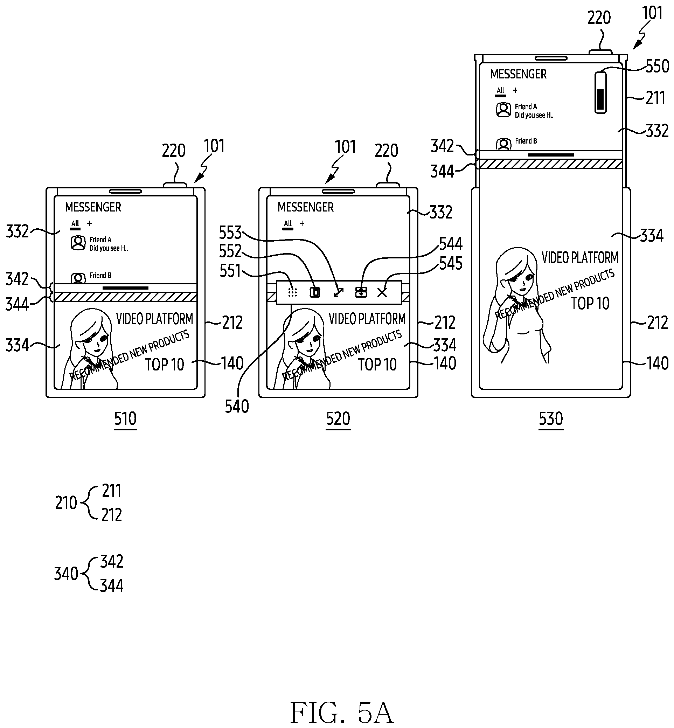

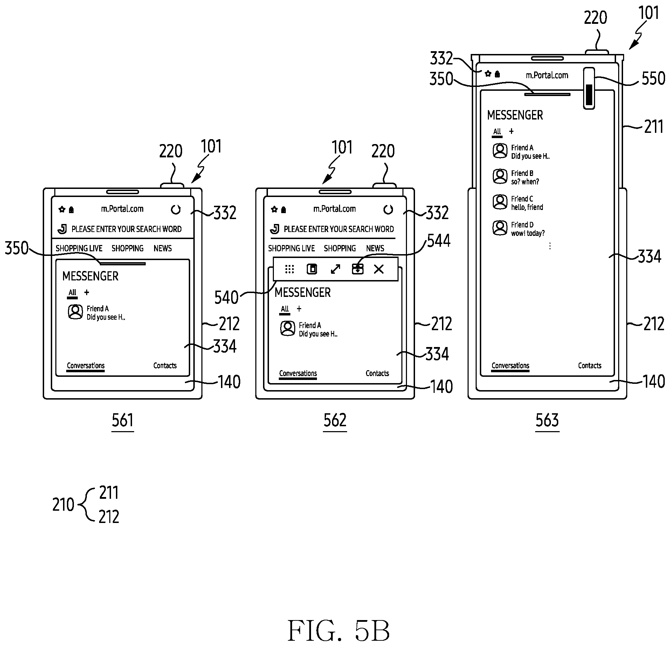

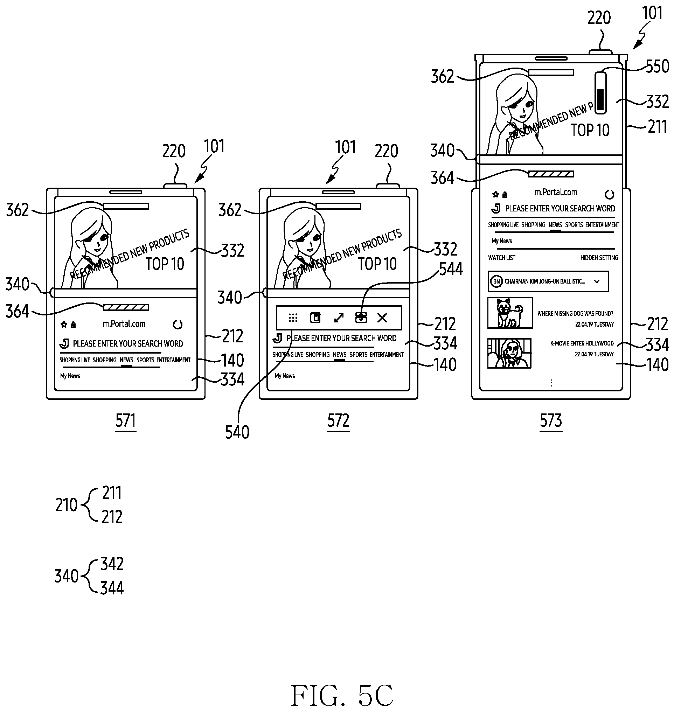

In an embodiment, the electronic device 101 may resize a specific screen focused by a user of the electronic device 101 to be more emphasized than other screens different from the specific screen. Focusing the specific screen may include an operation of preferentially executing a function of an application corresponding to the specific screen in response to the electronic device 101 receiving an input from the user. Emphasizing a specific screen among the plurality of screens by the electronic device 101 may include adjusting an area of the specific screen to be larger than an area of another screen different from the specific screen and/or making an increase rate of the area of the specific screen greater than an increase rate of the area of the other screen. An embodiment of simultaneously, or substantially simultaneously, performing an operation in which the electronic device 101 adjusts the positional relationship between screens displayed on the display 140 and an operation in which the electronic device controls the actuator 150 to transform the display 140 will be described later with reference to FIGS. 5 to 15.

Hereinafter, referring to FIGS. 2A to 2B, according to an embodiment, an operation in which the electronic device 101 controls the actuator 150 to transform the display 140 and/or the electronic device 101 will be described.

FIGS. 2A to 2B are exemplary diagrams for describing an operation in which an electronic device according to an embodiment is transformed between states in different shapes. The electronic device 101 of FIGS. 2A to 2B may be an example of the electronic device 101 of FIG. 1. For example, the electronic device 101 and the display 140 of FIG. 1 may include the electronic device 101 and the display 140 of FIGS. 2A to 2B.

Referring to FIGS. 2A to 2B, the electronic device 101 may be a terminal owned by a user. For example, the terminal may include a personal computer (PC) such as a laptop and a desktop, a smartphone, a smart pad, a tablet PC, a smartwatch, and a smart accessory such as a head-mounted device (HMD). According to an embodiment, the housing 210 of the electronic device 101 may include an internal space on which one or more hardware components (e.g., one or more hardware described above with reference to FIG. 1) included in the electronic device 101 are disposed. The housing 210 may form an external shape of the electronic device 101.

According to an embodiment, the electronic device 101 may have a deformable form factor. The transformation of the electronic device 101 may mean that at least one of the dimensions such as the width, height, and/or thickness of the electronic device 101 is modified. At least one of the dimensions may be manually modified by an external force applied to the electronic device 101 (e.g., by an externally applied pulling or pushing force), and/or may be actively modified by one or more actuators included in the electronic device 101 (e.g., actuator 150 in FIG. 1).

In order to support deformability of the electronic device 101, the housing 210 may be divided into an interconnected first housing 211 and a second housing 212. According to an embodiment, the electronic device 101 may modify the shape of the display 140 and/or the electronic device 101 by adjusting the positional relationship between the first housing 211 and the second housing 212 using the actuator 150. Referring to FIGS. 2A to 2B, the display 140 of the electronic device 101 may be disposed across one surface of the first housing 211 and/or one surface of the second housing 212. One surface on which the display 140 is disposed and formed by the first housing 211 and the second housing 212 may be referred to as a front surface. According to an embodiment, modifying the shape of the display 140 by the electronic device 101 may include modifying at least one of a width, height, and/or an extent of at least a portion exposed to the outside within the display 140.

Referring to FIGS. 2A to 2B, an embodiment in which the second housing 212 is slidably coupled to the first housing 211 will be shown. However, the embodiments are not limited thereto. The display 140 may be insertable into the second housing 212 or extractable from the second housing 212 based on the transformation of the electronic device 101. When the display 140 is inserted into the second housing 212, the size of an area in which the display 140 is exposed to the outside may be reduced. It will be appreciated that a part of the display 140 not exposed to the outside may not be visible from a position external to the electronic device 101, or may be visible from a position external to the electronic device 101 (e.g., in the event of a transparent housing part or window or the like). When the display 140 is extracted from the second housing 212, the size of an area in which the display 140 is exposed to the outside may be increased; e.g., a visible area of the display may increase in size. Hereinafter, a displaying area of the display 140 may mean an area formed by pixels disposed on the area in which the display 140 is exposed to the outside, among the pixels included in the display 140. For example, the displaying area may be referred to as an active area of the display 140, a visible area of the display 140, an exposed area of the display 140 etc.

Referring to FIGS. 2A to 2B, different states 200 and 205 of the electronic device 101 and/or the display 140 are illustrated. According to an embodiment, the electronic device 101 may switch between states 200 and 205 using an actuator (e.g., actuator 150 of FIG. 1). According to an embodiment, the states 200 and 205 of the electronic device 101 may be distinguished according to the sizes of the electronic device 101 and/or the display 140 (e.g., a width, a height, a thickness, and/or an aspect ratio). The states 200 and 205 may be distinguished according to a distance between the first housing 211 and the second housing 212 of the electronic device 101. For example, the distance between the first housing 211 and the second housing 212 may be a distance between one surface of the first housing 211 (e.g., the upper surface of the first housing 211) and the other surface of the second housing 212 parallel to the one surface of the first housing 211 and spaced apart from the one surface of the first housing 211. More generally, the distance between the first housing 211 and the second housing 212 may refer to a distance between a specific point/location on the first housing 211 and a specific point/location on the second housing 212.

As the electronic device 101 is transformed, each of the states 200 and 205 of FIGS. 2A to 2B may be in a state in which a surface area of the electronic device 101 and/or an area of the displaying area of the display 140 is minimized or maximized. Hereinafter, a state in which the surface area of the electronic device 101 and/or the displaying area is minimized as shown in the state 200 may be referred to as a slide-in state, a rolled state, a closed state, a roll-in state, and/or a contracted state. Hereinafter, a state in which the surface area of the electronic device 101 and/or the displaying area is maximized as shown in the state 205 may be referred to as a slide-out state, an unrolled state, an opened state, a roll-out state, and/or an extended state. In an embodiment, the state of the electronic device 101 may further include other state between a state 200 in which the area of the displaying area is the minimum and a state 205 in which the area of the displaying area is the maximum. The other states may be referred to as an intermediate state, a sub-rolled state, a sub-opened state, a partially opened state, a partially closed state, a partially contracted state, or a partially extended state.

Referring to FIGS. 2A to 2B, according to an embodiment, the display 140 included in the electronic device 101 may have a rectangular shape. In an embodiment, the corners of the display 140 may have a rounded corner shape. Hereinafter, among the sides that are the boundary of the rectangular display 140, a first direction parallel to a relatively long side may be referred to as a height direction, and the relatively long side may be referred to as a height. Hereinafter, among the sides that are the boundary of the rectangular display 140, a second direction parallel to the relatively short side may be referred to as a width direction, and the relatively short side may be referred to as a width.

Referring to FIG. 2A, an embodiment in which the electronic device 101 transforms the shape of the electronic device 101 in the height direction among the width direction or height direction of the display 140 is illustrated. The height h1 in the state 200 of FIG. 2A may be a minimum value of the height of the displaying area at a time point (e.g., the slide-in state) at which an area of a portion of the display 140 exposed to the outside is minimized. For example, with respect to the width w of the displaying area, the ratio of the height and the width in the state 200 may be 4.5:3. Alternatively, the height h1 in the state 200 of FIG. 2A may be the height in an intermediate state. The height h2 of the display 140 in the state 205 of FIG. 2A may be the maximum value of the height of the displaying area at a time point (e.g., the slide-out state) at which an area of a portion of the display 140 exposed to the outside is maximized. For example, with respect to the width w of the displaying area, the ratio of the height and the width in the state 205 may be 21:9. Alternatively, the height h2 in the state 205 of FIG. 2A may be the height in another intermediate state in which the height is greater than height h1. Although not shown, the state of the electronic device 101 may include not only states 200 and 205, but also an intermediate state in which the height and width ratio are 16:9.

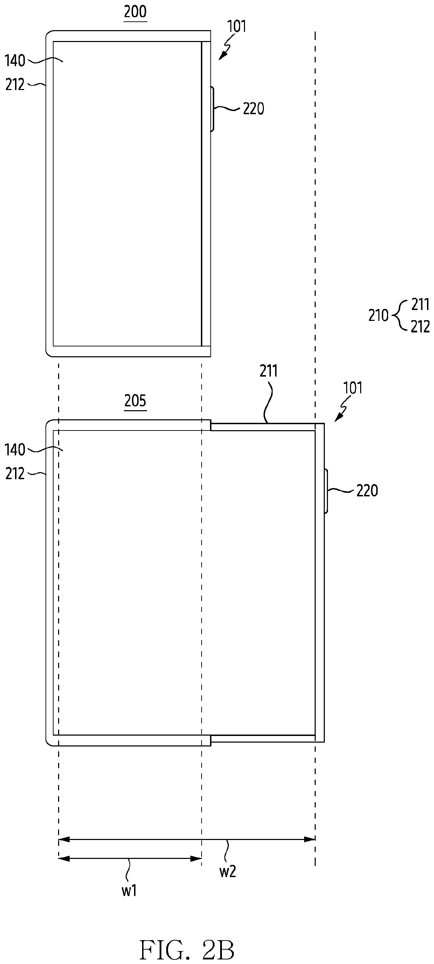

Referring to FIG. 2B, an embodiment in which the electronic device 101 transforms a shape of the electronic device 101 in the width direction among the width direction or the height direction is illustrated. Each of the width w1 in the state 200 of FIG. 2B and the width w2 in the state 205 may be a minimum value and a maximum value of the width of the transformable display 140. As the height and/or width of the display 140 is adjusted, the electronic device 101 may modify an aspect ratio of the display 140 to an aspect ratio suitable for content output from the electronic device 101. For example, the aspect ratio may be selected from 4.5:3, 16:9, and 21:9. Alternatively, the width w1 in the state 200 of FIG. 2B may be the width in an intermediate state, and/or the width w2 in the state 205 of FIG. 2B may the width in another intermediate state in which the width is greater than width w1.

According to an embodiment, the electronic device 101 may identify (or detect, or determine etc.) a state corresponding to a current shape of the electronic device 101 among states 200, 205, and intermediate states between states 200 and 205, by using one or more sensors (e.g., hall sensors). In an embodiment in which the electronic device 101 includes a hall sensor, a magnet included in the hole sensor may be disposed in the first housing 211, and one or more magnetic sensors included in the hole sensor may be disposed in the second housing 212. In an embodiment, the size of the magnetic field identified in each of the one or more magnetic sensors and generated from the magnet may be modified according to a positional relationship between the first housing 211 and the second housing 212. In an embodiment, the electronic device 101 may identify the shape of the electronic device 101 based on the size of the magnetic field identified by the one or more magnetic sensors. The identification of the shape by the electronic device 101 may be performed based on an operating system and/or firmware executed on the processor of the electronic device 101 (e.g., the processor 120 of FIG. 1).

According to an embodiment, the electronic device 101 may modify the shape of the display 140 and/or the electronic device 101 between states 200 and 205, based on the transformation of the display 140. According to an embodiment, the electronic device 101 may modify the shape in response to identifying a preset event. For example, the preset event may include a software interrupt (SWI) generated by an operating systems, a firmware, and/or application executed on the electronic device 101. The software interrupt may be generated by an application for playing multimedia content (e.g., video) having a specific aspect ratio. The software interrupt may be generated based on the location of the electronic device 101 identified by one or more sensors. The software interrupt may be generated based on a condition (e.g., time, place, occasion, or condition indicated by a combination thereof) input by the electronic device 101 and/or the user.

In an embodiment, a preset event for modifying the shape of the display 140 and/or the electronic device 101 may be generated based on a user's gesture. For example, the preset event may be generated by a gesture performed on display 140. The gesture may include at least one of a pinch-to-zoom gesture, a swipe gesture, or a gesture of touching a preset visual object (e.g., an icon displaying an aspect ratio) displayed on the display 140. For example, the gesture may be generated by a gesture of pressing the button 220 exposed to the outside in a part of the housing 210 of the electronic device 101.

According to an embodiment, the electronic device 101 may include a display 140 and/or a button 220 for receiving an input for modifying the shape of the electronic device 101. Referring to FIGS. 2A to 2B, a button 220 exposed to the outside from at least a portion of the housing 210 of the electronic device 101 is illustrated. In response to identifying the gesture of pressing the button 220, the electronic device 101 may identify the input by the user. In an embodiment where the button 220 maps to a plurality of functions (e.g., a power management function, and/or a fingerprint recognition function), the electronic device 101 may identify the input based on a pressure of pressing the button 220, a duration that an external object (e.g., the user's fingertip) is in contact with the button 220, and/or a duration that the button 220 is pressed. For example, a first gesture of pressing the button 220 beyond a preset duration (e.g., 5 seconds) may be matched to an input of turning on or off the electronic device 101. In the above example, a second gesture of pressing the button 220 shorter than the preset duration may be matched to an input for modifying the shape.

Referring to an embodiment of FIG. 2A, the button 220 may be exposed to the outside through an upper surface of the first housing 211. Referring to FIG. 2B, the button 220 may be exposed to the outside through a side surface of the first housing 211. The position of the button 220 is not limited to the examples of FIG. 2A and/or FIG. 2B. In an embodiment, the button 220 may be implemented as a softkey or user interface element provided on the display 140. For example, such a softkey or user interface element could be implemented in addition to a physical button 220 on the electronic device 101.

In an embodiment, a preset event for modifying the shape of display 140 and/or electronic device 101 may be generated based on the electronic device 101 receiving a voice signal including a preset word and/or sentence. Although not shown, the electronic device 101 may acquire the voice signal using one or more microphones. The preset event may be generated in response to the electronic device 101 receiving a wireless signal from an external electronic device (e.g., a remote control wirelessly connected to the electronic device 101, a wearable device configured to communicate with the electronic device 101, and/or pointing devices such as digitizers). The wireless signal may be transmitted from the external electronic device to the electronic device 101 based on a user's gesture identified through the external electronic device. For example, the gesture identified by the external electronic device may include at least one of a movement of the external electronic device following a preset trajectory and/or a gesture of pressing a button of the external electronic device. The trajectory may be referred to as a path.

According to an embodiment, the electronic device 101 may control the actuator based on the current shape of the electronic device 101 identified among states 200, 205 and intermediate states between states 200, 205 in response to a preset event for modifying the shape of the display 140 and/or the electronic device 101. While transforming the display 140 by controlling the actuator, the electronic device 101 may modify the positional relationship of the displayed screens based on multitasking, based on the displaying area adjusted by the transformation of the display 140. Modifying the positional relationship by the electronic device 101 may comprise adjusting the area and/or location of the screens in proportion to the area of the displaying area. In an embodiment, the electronic device 101 may extend the area of a specific screen among the screens independently of the change in the area of the displaying area. In an embodiment, the electronic device 101 may maintain or reduce an area of the other screen different from the specific screen among the screens, independently of the change in the area of the displaying area. The specific screen may match a focused application among applications executed in the electronic device 101.

As described above, according to an embodiment, the electronic device 101 may simultaneously modify the positional relationship of the screens displayed on the display 140 based on multitasking and the shape of the display 140 based on the states 200 and 205. For example, the electronic device 101 may transform the display 140 in response to receiving an input for modifying the positional relationship. Since the electronic device 101 simultaneously modifies the position relationship and the shape of the display 140, the electronic device 101 may support a multitasking function based on a modification of the shape of the display 140.

Hereinafter, referring to FIGS. 3A to 3B, according to an embodiment, an operation in which the electronic device 101 displays screens on the display 140 based on multitasking will be described.

FIGS. 3A to 3B are exemplary diagrams for describing an operation in which an electronic device according to an embodiment displays a plurality of screens in a displaying area of a display 140. The electronic devices of FIGS. 3A to 3B may be an example of the electronic device 101 of FIG. 1. For example, the display 140 of FIG. 1 may include the display 140 of FIGS. 3A to 3B. According to an embodiment, the electronic device may display a plurality of screens corresponding to each of applications executed by the processor (e.g., the processor 120 of FIG. 1) in the displaying area of the display 140. Referring to FIGS. 3A to 3B, according to an embodiment, states 310, 320, and 330 in which the electronic device displays two screens (e.g., the first screen 332 and the second screen 334) based on multitasking are illustrated. Hereinafter, referring to FIGS. 3A to 3B, an embodiment of performing multitasking based on two screens, such as a first screen 332 and a second screen 334, is described, but the embodiment is not limited thereto.

Hereinafter, a screen may refer to a user interface (UI) displayed within at least a portion of the display. For example, the screen may include activity of an Android operating system. According to an embodiment, the electronic device may improve the controllability of the screens by further adjusting the position or size of the screen selected by the user among the screens within the displaying area adjusted by the transformation of the display 140.

Referring to FIGS. 3A to 3B, according to an embodiment, a state in which the first screen 332 and the second screen 334 corresponding to each of a plurality of applications, which are substantially simultaneously executed by the electronic device based on multitasking (for example, the plurality of applications are executed concurrently), are displayed based on different parts of the displaying area as shown in FIGS. 3A to 3B may be referred to as a multiwindow and/or a split view. The electronic device may execute different applications in different parts of the displaying area based on the multiwindow view. In an embodiment, a multiwindow and/or split view may refer to a state in which the first screen 332 and the second screen 334 (i.e., a plurality of screens), corresponding to an application executed by the mobile device, are displayed based on different parts of the displaying area as shown in FIGS. 3A to 3B - here, multitasking may refer to the application providing two or more screens substantially simultaneously.

Referring to FIG. 3A, as an example of a screen displayed by an electronic device on a first screen 332, a first screen 332-1 displayed based on a web browser application and/or a first screen 332-2 for displayed based on a messenger application are illustrated. Referring to FIG. 3A, as an example of a screen displayed by the electronic device on a second screen 334, a second screen 334-1 displayed based on a video playback application and a second screen 334-2 displayed based on a phone application are illustrated. In response to an input for executing a combination of at least two applications among applications installed in the electronic device, the electronic device may display the first screen 332 and the second screen 334 based on the combination. Although the first screen 332-1 based on the web browser application is illustrated as an example of the first screen 332, the embodiment is not limited thereto. Similarly, although the first screen 332-2 based on the messenger application is illustrated as an example of the first screen 332, the second screen 334-1 based on the video playback application is illustrated as an example of the second screen 334, and the second screen 334-2 based on the phone application is illustrated as an example of the second screen 334, the embodiment is not limited thereto. For example, the electronic device may display the first screen 332 based on the execution of the phone application and the second screen 334 based on the execution of the web browser application.

According to an embodiment, while displaying a plurality of screens based on multitasking, the electronic device may display a visual object based on at least one border line among the plurality of screens. Using the visual object, the electronic device may modify a positional relationship between the plurality of screens. Referring to FIGS. 3A to 3B, in the state 310, the electronic device may display a first screen 332 and a second screen 334 on different portions of the display 140. The electronic device may display a visual object such as a frame 340 within a border line of the first screen 332 and the second screen 334. In an embodiment, the frame 340 may be referred to as a divider. The electronic device may display a visual object such as a handle 342 for adjusting the position of the border line within the frame 340. In an embodiment, the electronic device may modify areas (e.g., increase or decrease sizes of the areas) of the first screen 332 and the second screen 334 in response to identifying a gesture dragging the handle 342. For example, the electronic device may modify the areas based on a location in the display 140 where the handle 342 is dragged. Although the bar-shaped handle 342 is exemplary illustrated in an embodiment of FIG 3A, the embodiment is not limited thereto.

Referring to FIG. 3A, the electronic device may display a visual object such as an indicator 344 for indicating a focused screen among the first screen 332 and the second screen 334, within the frame 340. The location at which the electronic device displays the indicator 344 within the frame 340 may include edges corresponding to a specific screen focused among the first screen 332 and the second screen 334, among the first edge of the frame 340 adjacent to the first screen 332 and the second edge of the frame 340 adjacent to the second screen 334. In an embodiment, the indicator 344 may be a bar-shaped visual object having a preset color such as blue. For example, in the state 310 in which the second screen 334 is focused by the user, the electronic device may display the indicator 344 on the second edge of the frame 340 adjacent to the second screen 334. Although an example in which the indicator 344 has a bar shape is illustrated, the embodiment is not limited thereto. For example, the indicator 344 may have a shape of an outline of a focused specific screen. The electronic device may display the handle 342 on the first edge of the frame 340 adjacent to the first screen 332.

According to an embodiment, the electronic device may select a focused screen from among the first screen 332 and the second screen 334, based on an interaction between the user and the electronic device. For example, in the state 310 in which the second screen 334 is activated by the user, the electronic device may identify the interaction based on the user's first screen 332. In response to identifying the interaction based on the first screen 332, the electronic device may enter the state 320 in which the first screen 332 is focused from the state 310. Referring to FIG. 3A, in the state 320, the electronic device may modify the position of the indicator 344 within the frame 340 to the first edge of the frame 340 adjacent to the first screen 332. In the state 320, the electronic device may modify the position of the handle 342 within the frame 340 to the second edge of the frame 340 adjacent to the second screen 334. According to an embodiment, the electronic device may display the first screen 332 and the second screen 334 based on a picture-by-picture (PBP), such as states 310 and 320.

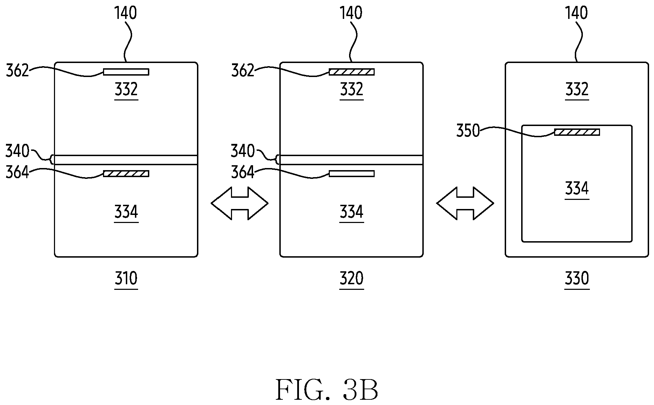

Referring to FIG. 3B, according to an embodiment, the electronic device may receive an input for adjusting the size and/or position of the screens based on the frame 340 and the handles superimposed on each of the screens (e.g., the first screen 332 and the second screen 334) corresponding to different applications. Referring to FIG. 3B, according to an embodiment, an example of a frame 340 displayed by the electronic device between the first screen 332 and the second screen 334 is illustrated. Unlike an embodiment in FIG. 3A in which the frame 340 displays the indicator 344 and the handle 342, the frame 340 may be displayed independently of the indicator 344.

Referring to FIG. 3B, the first handle 362 corresponding to the first screen 332 may be displayed on a portion adjacent to the upper end of the first screen 332. According to an embodiment, similar to the first handle 362, the electronic device may display the second handle 364 on a portion adjacent to the upper end of the second screen 334 by superimposing. According to an embodiment, the electronic device may modify the display of handles superimposed on different screens to display a focused screen among the screens. For example, the electronic device may emphasize the focused screen by adjusting the color and/or shape of the superimposed handle on the focused screen. Referring to FIG. 3B, in the state 310 in which the second screen 334 is focused, the electronic device may display the color of the second handle 364 superimposed on the second screen 334 as a first preset color (e.g., a primary color such as blue) for indicating the focused screen. In state 310, the electronic device may display the color of the first handle 362 superimposed on the first screen 332 as a second preset color (e.g., achromatic color such as gray) different from the first preset color.

Referring to FIG. 3B, in the state 320 in which the first screen 332 is focused, the electronic device may display a color of the first handle 362 superimposed on the first screen 332 as the first preset color. In state 320, the electronic device may display a color of the second handle 364 superimposed on the second screen 334 as the second preset color. The electronic device may enter any one of the states 310 and 320 in response to an input indicating that the electronic device interacts with one of the first screen 332 and the second screen 334.

Referring to FIGS. 3A to 3B, as in the state 330, the electronic device may display the first screen 332 and the second screen 334 based on a picture-in-picture (PIP). A state 330 in which the electronic device displays the second screen 334 superimposed on the first screen 332 is exemplary illustrated, but the embodiment is not limited thereto. The electronic device may display a visual object such as a handle 350 on the second screen 334 superimposed on the first screen 332. Similar to the handle 342 displayed within the states 310 and 320, the electronic device may receive an input for adjusting the positional relationship between the first screen 332 and the second screen 334 through the handle 350. For example, based on a gesture of dragging the handle 350, the electronic device may adjust the position of the second screen 334. In an embodiment, a first screen 332 may correspond to a screen such as a home screen, a settings screen, an idle screen etc., such as may be provided by an operating system (OS) or a corresponding application. As such, it may be considered that one application is executed and providing second screen 334, where second screen 334 is superimposed over a part of the first screen 332 and the first screen 332 is provided by an OS as opposed to being thought of as provided by an application (although in other examples the first screen 332, such as a home screen, may be provided by an application). In other examples, at least one application is executed and providing one or more screens (including second screen 334) superimposed over at least part of the first screen 332 and the first screen 332 is provided by an OS as opposed to being thought of as provided by an application (although in other examples the first screen 332, such as a home screen, may be provided by an application).

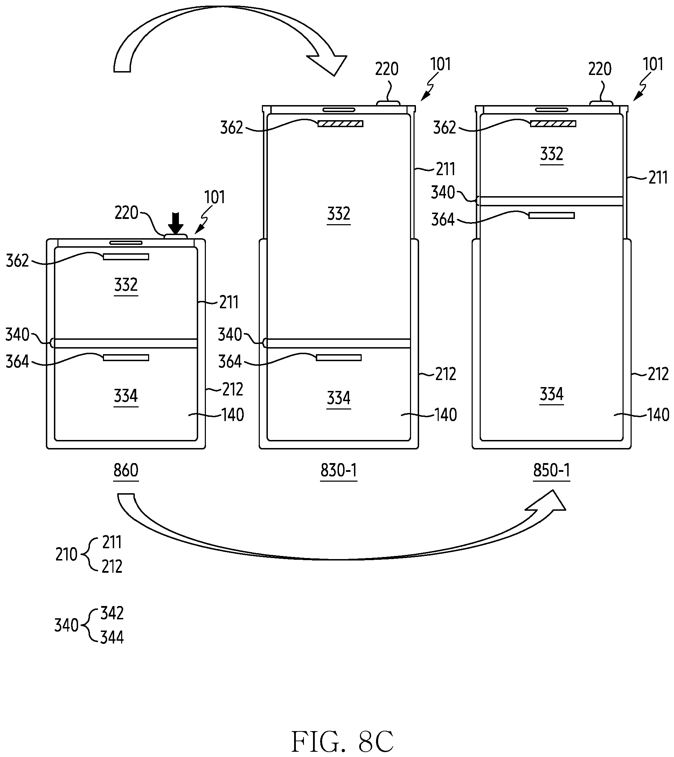

According to an embodiment, in response to receiving an input based on a visual object (e.g., handle 342, 350) to adjust the positional relationship of the screens (e.g., the first screen 332 and the second screen 334) displayed in the display 140, the electronic device may perform all of transformation of the display 140 based on the actuator (e.g., actuator 150 in FIG. 1) and adjustment of the position relationship. Based on the input related to the handle 342, an embodiment in which the electronic device performs the transformation of the display 140 and the adjustment of the position relationship will be described later with reference to FIGS 5A, 6A to 6B, 8A to 8C, and 10A to 10C. Based on the handles (e.g., the first handle 362 and the second handle 364) superimposed on each of the screens, an embodiment in which the electronic device performs the transformation of the display 140 and adjustment the positions and/or sizes of the screens will be described later with reference to FIGS. 5C and/or 8C. Based on the input related to handle 350, an embodiment in which the electronic device performs transformation of the display 140 and adjustment of the position relationship will be described later with reference to FIGS. 5B, 9, 11A to 11B, 12A to 12B, and 13A to 13B.

As described above, according to an embodiment, the electronic device may adjust at least one of the areas of the first screen 332 and the second screen 334 displayed in the display 140 independently of the change in the area of the displaying area caused by the transformation of the display 140. For example, the electronic device may extend the other screens, or maintain the area of a specific screen selected by the user among the first screen 332 and the second screen 334. In the above example, when the area of the displaying area increases, the electronic device may extend the area of the specific screen based on an increase rate exceeding an increase rate of the area of the displaying area. In the above example, when the area of the displaying area is reduced, the electronic device may maintain the area of the specific screen. According to an embodiment, the electronic device may provide a multitasking experience based on the transformation of the display 140.

Hereinafter, an operation of the electronic device according to an embodiment will be described with reference to FIG. 4.

FIG. 4 is a flowchart for describing an operation performed by an electronic device according to an embodiment in response to an input for transforming a display. The electronic device of FIG. 4 may be an example of the electronic device 101 of FIG. 1. For example, at least one of the operations of FIG. 4 may be performed by the electronic device 101 of FIG. 1 and/or the processor 120 of FIG. 1. It will be understood that one or more of the operations of FIG. 4 may be omitted, and/or the order of the operations of FIG. 4 may be changed, and/or other operations may be performed in addition to, or instead of, one or more of the operations in FIG. 4.

Referring to FIG. 4, in operation 410, the electronic device according to an embodiment may display screens corresponding to each of a plurality of applications (or screens corresponding to an application) based on the first ratio in the displaying area of the display. For example, the electronic device may execute the plurality of applications substantially simultaneously based on multitasking. The electronic device may display screens provided from each of the plurality of applications on portions spaced apart in the displaying area (e.g., states 310 and 320 of FIGS. 3A to 3B), or display screens provided from each of the plurality of applications by superimposing at least a part thereof (e.g., states 330 of FIGS. 3A to 3B).

Referring to FIG. 4, in operation 420, in response to an input for transforming the display (or an input for adjusting the size of the displaying area), the electronic device according to an embodiment may adjust (or change, or modify etc.) the size of the displaying area, such as by transforming the display. Various examples of input for transforming the display will be described with reference to the following drawings. Adjusting the size of the displaying area may be performed by the transformation of the display based on the actuator 150 of FIG. 1. For example, in response to the input, the reduction of the displaying area or the expansion of the displaying area may be selectively performed.

Referring to FIG. 4, in operation 430, the electronic device according to an embodiment may display screens based on a ratio selected by an input of operation 410 among a first ratio or a second ratio different from the first ratio within the adjusted displaying area. For example, the input may indicate both the transformation of the display and the adjustment of the ratio of the sizes of the screens. For example, the input may include different gestures performed substantially simultaneously or sequentially. The gestures may indicate the transformation of the display and the adjustment of the ratio, respectively.

According to an embodiment, adjusting the ratio between the sizes of the screens by the electronic device based on operation 430 may be performed based on a specific screen selected by the user or focused. For example, when the displaying area is reduced based on operation 420, the electronic device may preferentially reduce the size of another screen different from the specific screen in order to maintain the size of the specific screen based on the input. For example, when the displaying area is extended based on operation 420, the electronic device may maintain the size of the other screen in order to relatively extend the size of the specific screen based on the input.

As described above, according to an embodiment, since the electronic device adjusts the ratio between the sizes of the screens, along with the transformation of the display, based on the input received from the user, the electronic device may support multiwindow adjustment accompanied by the transformation of the display. The electronic device may support multiwindow adjustment based on one focused screen among the screens, thereby promoting interaction between the user and the focused screen.

Hereinafter, referring to FIGS. 5A to 5C, an operation of transforming a display based on the touch input on the display by an electronic device according to an embodiment will be described.

FIGS. 5A to 5C are diagrams for describing an operation of an electronic device transforming a display in response to an input related to a border line between screens or handles displayed on each of the screens, according to an embodiment. The electronic device 101 of FIGS. 5A to 5C may be an example of the electronic device 101 of FIG. 1. For example, the display 140 of FIG. 1 may include the display 140 of FIG. 4.

According to an embodiment, FIG. 5A is a diagram for explaining an operation of transforming the display 140 based on a visual object provided by the electronic device 101 based on a border line between screens. The UI illustrated in FIG. 5A may be related to the UI described above with reference to FIGS. 3A to 3B. According to an embodiment, in a state in which screens (e.g., the first screen 332 and the second screen 334) provided from different applications (or, alternatively (and not illustrated in FIG. 5A), the same application) are displayed, the electronic device 101 may receive an input for adjusting the positional relationship of the screens, such as the frame 340 and/or the handle 342. In response to receiving the input, the electronic device 101 may transform the display 140.

According to an embodiment, the electronic device 101 may simultaneously display screens (e.g., the first screen 332 and the second screen 334) corresponding to each of the processes executed independently, such as multiwindow, in the display 140. The processes may be allocated to one or more applications executed in the electronic device 101 by an operating system executed in the electronic device 101. Referring to FIG. 5A, the electronic device 101 may display the first screen 332 and the second screen 334 on different portions of the displaying area of the display 140. The first screen 332 and the second screen 334 of FIG. 5A may be an example of the first screen 332 and the second screen 334 of FIGS. 3A to 3B. Referring to FIG. 5A, the electronic device 101 may display the frame 340 on a border line between the first screen 332 and the second screen 334. In the frame 340, the electronic device 101 may display an indicator 344 for indicating one screen focused among the first screen 332 and the second screen 334 based on the handle 342 for adjusting the position of the border line (or the ratio of the areas of the first screen 332, and the second screen 334) and the position in the frame 340. The frame 340, the handle 342, and the indicator 344 of FIG. 5A may be examples of the frame 340, the handle 342, and the indicator 344 of FIG. 3A.

Referring to FIG. 5A, there are illustrated different states 510, 520, and 530 of the electronic device 101 that are switched between based on an input performed on the frame 340 and/or the handle 342 (or via another user interface element not shown in FIG. 5A). The state 510 may include the state 310 of FIG. 3A. In an embodiment in which the electronic device 101 includes the transformable display 140, the state 510 may include a slide-in state (e.g., the state 200 of FIG. 2A). Hereinafter, the operation of the electronic device 101 based on the state 510 in which the second screen 334 is focused will be described, but the embodiment is not limited thereto.

According to an embodiment, the electronic device 101 may receive an input for adjusting the sizes of the first screen 332 and the second screen 334, based on the frame 340 and/or the handle 342. For example, the input may include a gesture of tapping the frame 340 and/or the handle 342. In the state 510, based on receiving the gesture, the electronic device 101 may enter the state 520 from the state 510. Referring to FIG. 5A, in the state 520, the electronic device 101 may display a visual object such as a menu 540 superimposed on the frame 340.

According to an embodiment, the electronic device 101 may display one or more selectable options related to a multiwindow based on the frame 340 using the menu 540. Referring to FIG. 5A, an embodiment in which the electronic device 101 displays buttons 551, 552, 553, 544, and 545 corresponding to each of the options in the menu 540. The electronic device 101 may display the menu 540 including buttons 551, 552, 553, 544, and 545 by superimposing on the border line (e.g., a border line where frame 340 is displayed) between a plurality of screens based on multitasking. In response to receiving an input for selecting any one of the buttons 551, 552, 553, 544, and 545, the electronic device 101 may execute a function corresponding to the selected specific button. Since the second screen 334 is focused within the state 520, a function corresponding to the specific button may be executed based on the second screen 334 among the first screen 332 and the second screen 334. Although the image-based buttons 551, 552, 553, 544, and 545 are illustrated, embodiments are not limited thereto.

For example, the button 551 may correspond to a function for replacing an application executed in the focused second screen 334. For example, the button 552 may correspond to a function of switching from a state in which the first screen 332 and the second screen 334 are displayed based on the PBP to another state (e.g., the state 330 of FIGS. 3A to 3B) displaying the second screen 334 superimposed on the first screen 332 based on the PIP. For example, the button 553 may correspond to a function of executing a specific application corresponding to second screen 334 based on the entire displaying area of display 140 in the state 520. For example, the button 545 may correspond to a function of ceasing to display a specific screen (in the state 420 of FIG. 5A, the second screen 334) corresponding to the menu 540 among the first screen 332 and the second screen 334. For example, the button 545 may correspond to a function of ceasing execution of a multiwindow such as displaying a first screen 332 and a second screen 334 at the same time.

According to an embodiment, the electronic device 101 may display a button 544 for performing a transformation of the display 140 (e.g., a transformation of the display 140 based on the actuator 150 of FIG. 1) or for performing adjusting of a size of the display 140 in the menu 540, at the same time as adjustment of the position or area of the focused specific screen among the first screen 332 and the second screen 334. In an embodiment, the button 544 may be referred to as a resize and slide button. In response to receiving an input for selecting the button 544, the electronic device 101 may activate the actuator to switch the shape of display 140 from the shape of display 140 in state 520 to a different shape. Referring to FIG. 5A, the electronic device 101 may include the housing 210 supporting the possibility of transforming; that is, the housing 210 configured to be transformable. The housing 210 may be divided into a first housing 211 and a second housing 212 that are slidably coupled. Referring to FIG. 5A, in response to receiving an input for selecting the button 544, the electronic device 101 may switch from the state 520 corresponding to the slide-in state to the state 530 corresponding to the slide-out state. In an embodiment, the button 544 may cause execution of a function for toggling between the slide-in state and the slide-out state. Although the operation of toggling between the slide-in state and the slide-out state of the electronic device 101 based on the button 544 will be described later, the embodiment is not limited thereto. For example, the button 544 may correspond to a function for toggling between the slide-in state and an intermediate state different from the slide-out state.

According to an embodiment, while the electronic device 101 enters the state 530 from the state 520, the area of the displaying area may be increased by the transformation of the display 140. For example, in response to receiving an input related to the button 544, in the state 520 in which a portion of the display 140 is inserted into, or accommodated in, housing 210, the electronic device 101 may extract the portion (or at least part thereof) from the housing 210. In another example, in response to receiving an input on frame 340 or handle 342 (i.e., without displaying menu 540), in the state 520 in which a portion of the display 140 is inserted into, or accommodated in, housing 210, the electronic device 101 may extract the portion (or at least part thereof) from the housing 210. While transforming the area of the displaying area, the electronic device 101 may increase the area of the focused second screen 334 and maintain the area of the first screen 332 different from the focused second screen 334.

In an embodiment, since the area of the first screen 332 is maintained, the increase rate of the area of the second screen 334 may exceed the increase rate of the area of the displaying area. For example, in a state 520 in which the area of the displaying area is 100, it is assumed that the area of the first screen 332 is 50 and the area of the second screen 334 is 50. In the above example, since the area of the first screen 332 is maintained at 50, in a case in which the electronic device 101 receives an input related to the button 544 thereby entering the state 530 in which the area of the displaying area is 200, the area of the second screen 334 may be increased to 150. In the above example, the area of the displaying area may be increased by 2 times, and the area of the second screen 334 may be increased by 3 times exceeding the 2 times (thereby exceeding the increase rate of the displaying area). As in the above example, while the electronic device 101 transforms from the state 520 to the state 530, the electronic device 101 may enhance the visibility of the focused second screen 334 by transforming the display 140 while maintaining the area of the first screen 332 different from the focused second screen 334. Referring to FIG. 5A, since the area of the first screen 332 is maintained after the area of the displaying area of the display 140 is increased as the state 520 is switched to the state 530, the area of the second screen 334 may be increased by an increased area of the displaying area. Based on the increased area of the second screen 334, as shown in the state 530 of FIG. 5A, the electronic device 101 may display the second screen 334 based on an area larger than the first screen 332.

Referring to FIG. 5A, there are illustrated states 510, 520, and 530 in which the area of the displaying area of the display 140 is adjusted while the electronic device 101 displays the first screen 332 based on the messenger application and the second screen 334 based on the video streaming application substantially simultaneously. The embodiment is not limited thereto, and the combination of applications displayed by the electronic device 101 through the first screen 332 and the second screen 334 is not limited to the example of FIG. 5A.

Referring to FIG. 5A, after switching to the state 530 having a shape of the slide-out state based on the input for selecting the button 544, the electronic device 101 may display a visual object, such as a slide bar 550 for transformation of the display 140. The slide bar 550 may be referred to as a seek bar and/or a slider. The electronic device 101 may visually output an area of the displaying area in the state 530 based on a shape of the slide bar 550 or a figure (e.g., square) and/or an image displayed within the slide bar 550.

According to an embodiment, the electronic device 101 may transform the display 140 in response to receiving an input within the slide bar 550. The input received within slide bar 550 may include a drag gesture and/or a swipe gesture performed in the preset direction (e.g., the longitudinal direction of slide bar 550) within slide bar 550. For example, within the state 530 corresponding to the slide-out state, in response to receiving the input, the electronic device 101 may control the actuator to enter another state (e.g., a slide-in state, or an intermediate state) different from the slide-out state. For example, after entering the state 530 based on the button 544, the electronic device 101 may support manual transformation of display 140 based on the slide bar 550.

In response to receiving an input based on the slide bar 550, the electronic device 101 according to an embodiment may transform the display 140 to reduce an area of the displaying area. While reducing the area of the displaying area, the electronic device 101 may make the reduction rate of the area of the second screen 334 different from the reduction rate of the area of the first screen 332 that is different from the second screen 334, so that the focused second screen 334 is emphasized. For example, while switching from a slide-out state to a slide-in state (or an intermediate state), the electronic device 101 may reduce the area of the first screen 332 while maintaining the area of the second screen 334.

The operation of the electronic device 101 in another state in which the first screen 332 is focused may be similar to the operation of the electronic device 101 described above based on the state in which the second screen 334 is focused 510. For example, within the other states, the electronic device 101 may display the menu 540 in response to receiving an input for selecting the frame 340 and/or the handle 342. In response to receiving an input for selecting the button 544 within the other state in which the first screen 332 is focused, the electronic device 101 having the shape of the slide-in state may increase the area of the first screen 332 within the displaying area of the display 140 while changing to the shape of the slide-out state. At the same time as the area of the first screen 332 increases, the electronic device 101 may maintain an area of the second screen 334 different from the focused first screen 332. Since the area of the second screen 334 is maintained, the increase rate of the area of the first screen 332 may exceed the increase rate of the area of the displaying area.

As described above, according to an embodiment, the electronic device 101 may perform both transformation of the display 140 based on hardware and modification of the positional relationship of the screens based on software, based on a single input received through the button 544 for controlling at least one of the multitasking-based screens (e.g., the first screen 332 and the second screen 334). As with the sequential transformation of the states 510, 520, and 530 of FIG. 5A, the electronic device 101 may adjust the positional relationship of the screens so that the focused single screen (the second screen 334 in the example of FIG. 5A) among the screens is emphasized.

An embodiment of displaying screens based on PBP is described, but the embodiment is not limited thereto. Hereinafter, referring to FIG. 5B, according to an embodiment, while the electronic device 101 displays screens based on multitasking based on the PIP, an operation of performing both of the transformation of the display 140 and the modification of the positional relationship of the screens will be described based on the reception of a single input.

FIG. 5B is a diagram illustrating an operation of the electronic device 101 transforming the display 140 based on an input related to a handle of any one of the screens, according to an embodiment. For example, the housing 210 of the electronic device 101 of FIG. 5B may be divided into a first housing 211 and a second housing 212 slidably coupled to FIGS. 2A to 2B.

According to an embodiment, the electronic device 101 may display screens (e.g., the first screen 332 and the second screen 334) corresponding to each of processes executed independently (or corresponding to a single process), such as a pop-up window, within the display 140 by at least partially superimposing. Referring to FIG. 5B, a state 561 in which the electronic device 101 has a shape of the slide-in state, and displays a first screen 332 and a second screen 334 superimposed on the first screen 332 is illustrated. The state 561 may include the state 330 of FIGS. 3A to 3B. In the state 561, the electronic device 101 may display a handle 350 adjacent to the border line and for controlling multitasking based on the second screen 334. Although an embodiment in which the electronic device 101 displays a bar-shaped handle 350 adjacent to an edge of the second screen 334 is illustrated, but the embodiment is not limited thereto.

Referring to FIG. 5B, different states 561, 562, and 563 of the electronic device 101 that are switched based on an input performed on the handle 350 are illustrated. In the state 561, the electronic device 101 may identify a gesture performed on the handle 350. For example, in response to receiving an input based on a gesture of tapping the handle 350, the electronic device 101 may display the menu 540 superimposed on the handle 350. For example, in response to receiving the input, the electronic device 101 may switch from the state 561 to the state 562. The menu 540 of FIG. 5B may match the menu 540 of FIG. 5A. Among the descriptions related to the menu 540 of FIG. 5B, a description overlapping the menu 540 of FIG. 5A may be omitted. As is the case with FIG. 5A and other embodiments herein, the menu 540 may include one or more of buttons 551, 552, 553, 544 and 545 (e.g., the menu 540 need not include all off these buttons but may instead include any button in isolation or in any combination with another button(s)). In other embodiments, an input to the handle 350 may result in transforming of the display 140 (e.g., without displaying menu 540), such as increasing a size of the displaying area as the handle 350 is dragged in one direction (e.g., towards the top of the first housing 211) and the display 140 is not in the open state, or reducing a size of the displaying area as the handle 350 is dragged in another direction (e.g., towards the bottom of the second housing 212) and the display 140 is not in the closed state.

Referring to FIG. 5B, in the state 562, the electronic device 101 may identify a gesture of tapping the button 544 displayed in the menu 540. The electronic device 101 having a shape of the slide-in state may switch to the state 563 having a shape of the slide-out state in response to identifying the gesture of tapping the button 544. While transforming from state 562 to state 563, the electronic device 101 may make the increase rate of the area of the second screen 334 superimposed on the first screen 332 larger than the increase rate of the area of the displaying area by the transformation of the display 140. For example, the electronic device 101 may emphasize the second screen 334 which is the highest screen among the screens stacked based on the PIP, based on the transformation of the display 140. Referring to FIG. 5B, while the electronic device 101 transforms the display 140, a first rate of change in the area of the first screen 332 may match a second rate of change in the area of the displaying area by the transformation of the display 140, and a third rate of change in the area of the second screen 334 may exceed the first rate of change and the second rate of change. For example, the increase rate of the area of the second screen 334 may exceed the increase rate of the area of the displaying area.

Referring to FIG. 5B, after switching to a state 563 having a shape of a slide-out state, the electronic device 101 may display a slide bar 550 for manual transformation of the display 140 in the display 140. The electronic device 101 may display the slide bar 550 on the border line of the second screen 334 corresponding to the pop-up window, within the state 563 supporting multitasking based on PIP. The embodiment is not limited thereto, and for example, the electronic device 101 may display the slide bar 550 within a portion of the displaying area adjacent to the button 220 for triggering the transformation of the display 140. The slide bar 550 of FIG. 5B may match the slide bar 550 of FIG. 5A. For example, the electronic device 101 may transform the display 140 into a shape matching another state (e.g., an intermediate state, and/or a slide-in state) different from the slide-out state based on the input performed within the slide bar 550.

Referring to FIG. 5B, there are illustrated exemplary states 561, 562, and 563 in a process of increasing the exposed area of the display 140 while the electronic device 101 simultaneously displays the first screen 332 based on the web browser application and the second screen 334 based on the messenger application. The combination of applications displayed by the electronic device 101 through the first screen 332 and the second screen 334 in each of the states 561, 562, and 563 is not limited to an example of FIG. 5B.

Referring to FIG. 5C, according to an embodiment, a diagram illustrating an operation of transforming the display 140 by the electronic device 101 in the state 310 of FIG. 3B in response to an input to one of the handles (e.g., the first handle 362, and the second handle 364) for adjusting the position and/or size of the screens. Referring to FIG. 5C, states 571 and 572 of the electronic device 101 may be a state in which the first screen 332 and the second screen 334 are displayed based on the slide-in state. In the state 571, the electronic device 101 may display a first handle 362 and a second handle 364 superimposed on each of the first screen 332 and the second screen 334, based on the state 310 of FIG. 3B. In the state 571 in which the second screen 334 is focused, the electronic device 101 may display the second handle 364 superimposed on the second screen 334 based on the preset color for emphasizing the focused screen.

According to an embodiment, the electronic device 101 may display a visual object such as the menu 540 in response to an input for handles superimposed on each of the screens. For example, within the state 571, in response to an input indicating that a second handle 364 is selected (e.g., an input including a tap gesture for the second handle 364), the electronic device 101 may display the menu 540 by superimposing on the second handle 364 as in the state 572 (e.g., the menu 540 may be displayed proximate to, superimposed on, or adjacent to the second handle 364). In the state 572, in response to an input indicating that button 544 in the menu 540 is selected, the electronic device 101 may transform the display 140. For example, in the state 572 in which the electronic device 101 has the shape of a slide-in state, in response to an input indicating that a button 544 is selected, the electronic device 101 may extend the displaying area based on the transformation of the display 140.

Referring to FIG. 5C, in the state 572, in response to an input indicating that the button 544 is selected, the electronic device 101 may extend a specific screen selected by the input in the extended displaying area than the other screen. For example, the electronic device 101 may maintain the size of the first screen 332 different from the second screen 334 selected by the input independently from the expansion of the displaying area by the input. In the above example, based on the maintenance of the size of the first screen 332 and the expansion of the displaying area, the electronic device 101 may discriminately extend the second screen 334. Referring to FIG. 5C, the electronic device 101 may switch from the state 572 to the state 573 based on the input indicating that button 544 is selected within state 572. The electronic device 101 may display a second screen 334 larger than the first screen 332 in the displaying area based on the discriminative expansion of the second screen 334, within the state 573.

Referring to FIG. 5C, exemplary states 571, 572, and 573 to increasing the displaying area of the display 140 are illustrated, while the electronic device 101 simultaneously displays the first screen 332 based on the video streaming application and the second screen 334 based on the web browser application. The combination of applications displayed, through the first screen 332 and the second screen 334, by the electronic device 101 in each of the states 571, 572, and 573 is not limited to an example of FIG. 5C.

As described above, according to an embodiment, the electronic device 101 may display a button 544 for simultaneously transforming the ratio of areas of the screens stacked (e.g., the first screen 332 and the second screen 334), and the shape of the display 140. While the area of the displaying area of the display 140 is increased, the ratio may be modified by the electronic device 101 to emphasize the highest-level, or focused, screen (in an example of FIG. 5B, a second screen 334 that is not occluded by another screen such as a first screen 332) among the screens. The electronic device 101 may improve a multitasking-based user experience by not only adjusting the ratio of the areas of the screens in the displaying area, but also adjusting the area of the displaying area by the transformation of the display 140.

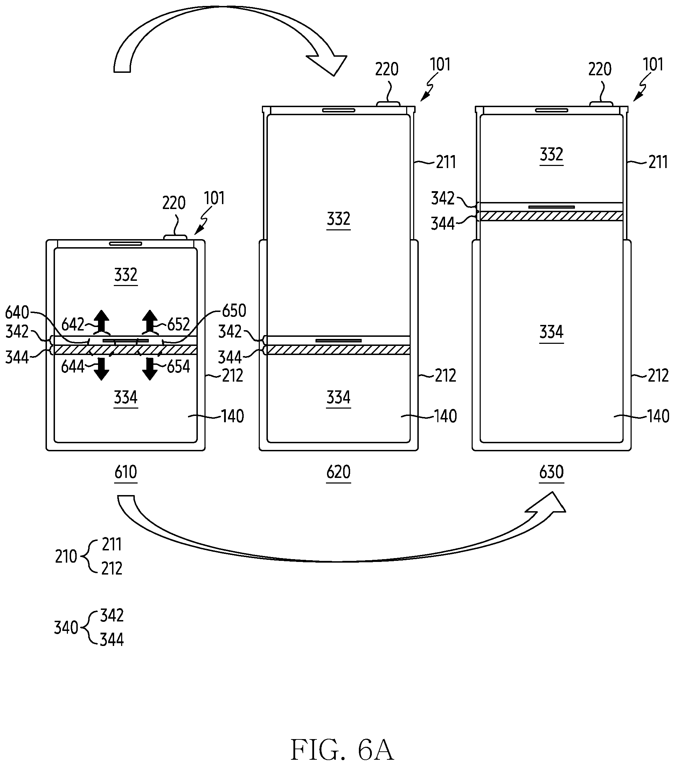

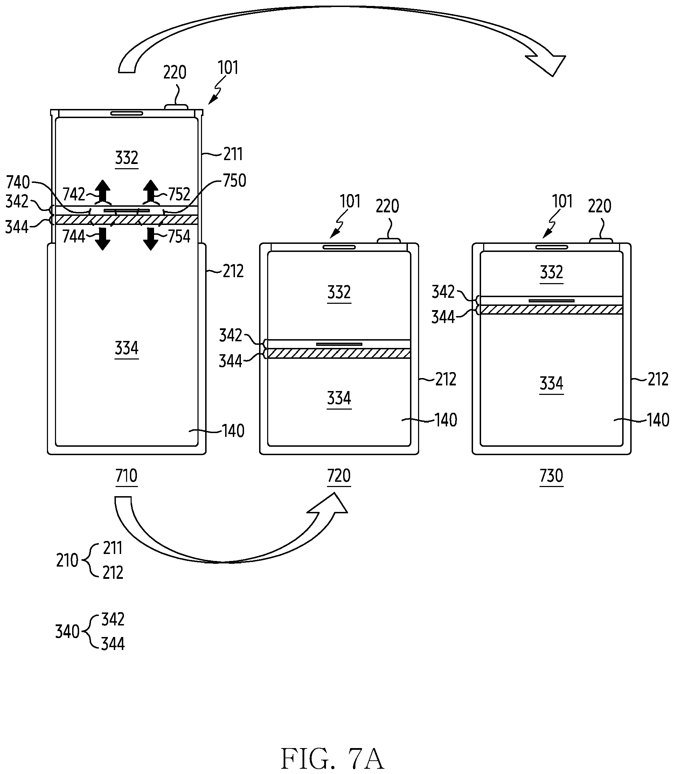

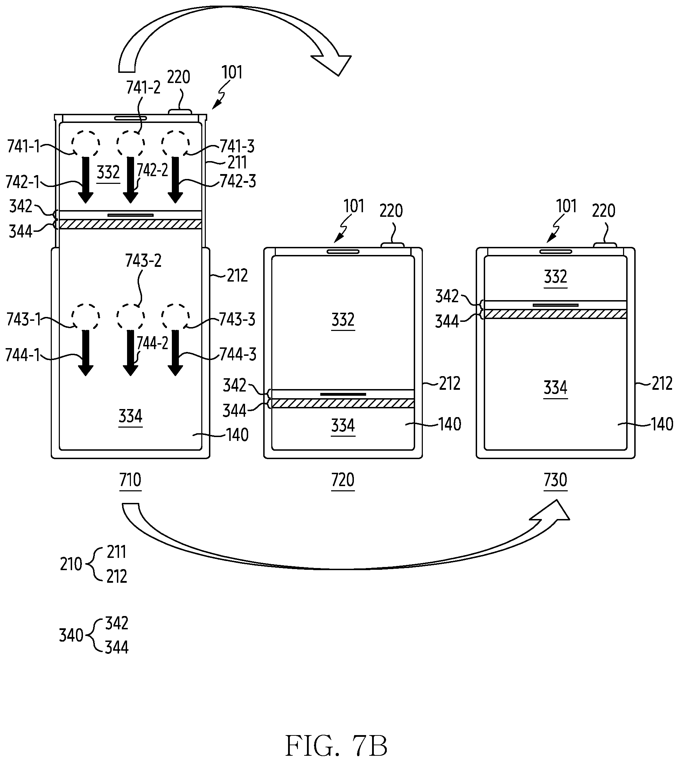

Hereinafter, referring to FIGS. 6A to 6B, and/or FIG. 7, according to an embodiment, the operation of performing both the discriminative adjustment of the areas of the screens and the transformation of the display 140 will be described based on the input performed on the border line between screens displayed by the electronic device 101 based on multitasking.

FIGS. 6A to 6B are diagrams for describing an operation of an electronic device 101 transforming a display 140 based on an input performed on a border line and screens distinguished by the border line, according to an embodiment. The electronic devices 101 of FIGS. 6A to 6B may be examples of the electronic devices 101 of FIGS. 1 to 2, 5A to 5B, and the electronic devices of FIGS. 3A to 3B. For example, the display 140 of FIG. 1 may include the display 140 of FIGS. 6A to 6B. For example, the housing 210 of the electronic device 101 of FIGS. 6A to 6B may be divided into a first housing 211 and a second housing 212 that are slidably coupled as described above with reference to FIGS. 2A to 2B.

FIG. 6A is an exemplary diagram for explaining an operation of the electronic device 101 transforming the display 140 (i.e., transforming a displaying area of the display 140) based on an input initiated on a border line, according to an embodiment. Referring to FIG. 6A, there are illustrated different states 610, 620, and 630 of the electronic device 101 that are switched between based on input performed on the frame 340. The state 610 of FIG 6A may be a state in which the electronic device 101 having the shape of a slide-in state simultaneously displays the first screen 332 and the second screen 334 based on multitasking. For example, the state 610 of FIG. 6A may include the state 310 of FIG. 3A and/or the state 510 of FIG. 5A. Referring to FIG. 6A, in the state 610, the electronic device 101 may display the frame 340 on the border line of the first screen 332 and the second screen 334. In the frame 340, the electronic device 101 may display a handle 342 and/or an indicator 344. The frame 340, the handle 342, and the indicator 344 of FIG. 6A may correspond to the frame 340, the handle 342, and the indicator 344 of FIG. 3A. For example, the electronic device 101 may modify positions of border lines of the first screen 332 and the second screen 334 based on the gesture performed on the frame 340 and/or the handle 342. For example, the electronic device 101 may indicate a specific screen focused among the first screen 332 and the second screen 334 based on the position of the indicator 344 within the frame 340.

According to an embodiment, the electronic device 101 may identify a gesture initiated on the frame 340 and dragging one or more external objects. Identifying the gesture by the electronic device 101 may be performed independently of identifying a gesture tapping the frame 340 and/or the handle 342, described above with reference to FIGS. 3A to 3B. According to an embodiment, the electronic device 101 may initiate the transformation of the display 140 based on a multi-touch gesture (e.g., a drag gesture, and/or a swipe gesture) initiated on the frame 340 and performed by a preset number of external objects. Referring to FIG. 6A, the electronic device 101 may identify external objects in contact with the points 640 and 650 spaced apart in the frame 340. The external objects may be different fingertips. Hereinafter, an embodiment in which the electronic device 101 transforms the display 140 based on the trajectories of two external objects in contact with the frame 340 is described, but the preset number of external objects causing the transformation of the display 140 is not limited.

According to an embodiment, the electronic device 101 may initiate the transformation of the display 140 and adjustment of areas of the first screen 332 and the second screen 334 based on the trajectory in which external objects in contact with the points 640 and 650 are dragged on the display 140. For example, in response to identifying that each of the external objects in contact with the points 640 and 650 is dragged along the directions 642 and 652, the electronic device 101 may switch from the state 610 to the state 630. For example, in response to identifying that each of the external objects in contact with the points 640 and 650 is dragged along the directions 644 and 654, the electronic device 101 may switch from the state 610 to the state 620. In the above examples, the direction in which the external objects in contact with the points 640 and 650 are dragged may indicate one screen having an area to be increased among the first screen 332 and the second screen 334.

Referring to FIG. 6A, based on external objects initiated on the points 640 and 650 on the frame 340, and dragged along the directions 644 and 654, the electronic device 101 may switch from the state 610 to the state 620. Referring to the states 610 and 620, the gesture initiated on the points 640 and 650, and dragged or swept along the directions 644 and 654 may be a gesture that triggers the expansion of the displaying area based on the transformation of the display 140, and the selective expansion of the first screen 332. During the transformation from state 610 to state 620, the electronic device 101 may control the actuator (e.g., actuator 150 in FIG. 1) to be transformed from a slide-in state to a slide-out state, and increase simultaneously the area of the first screen 332 that is not superimposed with external objects dragged along directions 644 and 654. the electronic device 101 may increase the area of the first screen 332, and may simultaneously maintain the area of the second screen 334 superimposed with the external objects dragged along the directions 644 and 654, independent from the expansion of the displaying area.

Referring to FIG. 6A, the electronic device 101 may switch from the state 610 to the state 630 based on external objects initiated on the points 640 and 650 on the frame 340, and dragged along the directions 642 and 652. Referring to the states 610 and 630, the gesture initiated on the points 640 and 650, and dragged or swept along the directions 642 and 652 may be a gesture that triggers the expansion of the displaying area based on the transformation of the display 140, and the selective expansion of the second screen 334. During the transformation from state 610 to state 630, the electronic device 101 may transform the display 140 to switch to the slide-out state, and increase simultaneously the area of the second screen 334 different from the first screen 332 superimposed with the external objects dragged along the directions 642 and 652. The electronic device 101 may maintain the area of the first screen 332 superimposed with the external objects together with increasing the area of the second screen 334.

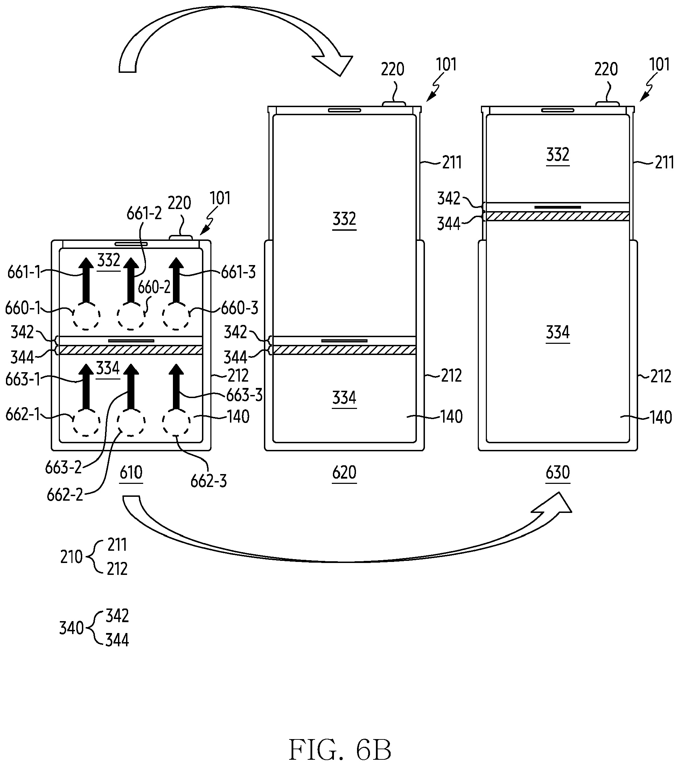

Referring to FIG. 6B, according to an embodiment, the electronic device 101 may transform the display 140 based on a multi-touch gesture performed in one of the first screen 332 or the second screen 334 distinguished by the frame 340. Referring to FIG. 6B, in the state 610, the electronic device 101 may identify a multi-touch gesture performed by three external objects (e.g., fingertips) within one of the first screen 332 and the second screen 334. The multi-touch gesture may include a gesture in which a preset number (e.g., three) of the external objects are dragged in parallel from a number of spaced points (e.g., three spaced points) in the display 140. Hereinafter, an operation of the electronic device 101 based on a gesture performed on the display 140 by three fingertips is described, but the embodiment is not limited thereto.

For example, the electronic device 101 may identify a gesture based on external objects dragged along directions 661-1, 661-2, 661-3 from each of the points 660-1, 660-2, and 660-3 in the first screen 332. In response to identifying the gesture initiated within the first screen 332, the electronic device 101 may switch from the state 610 to the state 620. During the transformation from the state 610 to the state 620, the electronic device 101 may extend the first screen 332 selected by the gesture. During the transformation from the state 610 to the state 620, the electronic device 101 may maintain the size and/or area of the second screen 334 different from the first screen 332.

For example, the electronic device 101 may identify a gesture based on external objects dragged along directions 663-1, 663-2, and 663-3 from each of the points 662-1, 662-2, and 662-3 in the second screen 334. Based on the gesture initiated from the points 662-1, 662-2, and 662-3 in the second screen 334, the electronic device 101 may switch from the state 610 to the state 630. During the transformation from the state 610 to the state 630, the electronic device 101 may control the actuator to transform to the slide-out state. The electronic device 101 may extend the second screen 334 selected by the gesture in the displaying area extended by the transformation of the display 140. The electronic device 101 may maintain the size and/or area of another screen (e.g., the first screen 332) different from the second screen 334 selected by the gesture in the state 630.

Although the operation of the electronic device 101 based on the frame 340 of FIG. 3A is described, an embodiment is not limited thereto. For example, based on the multi-touch gesture performed on the frame 340 of FIG. 3B, the electronic device 101 may simultaneously perform transformation of the display 140, and selective adjustment of the sizes of screens distinguished by the frame 340.

As described above, according to an embodiment, the electronic device 101 may simultaneously perform transformation of the display 140 and adjustment of the positional relationship of the screens based on the multi-touch gesture performed on the border line (e.g., the frame 340) between screens (e.g., first screen 332 and second screen 334) based on multitasking. For example, based on a swipe gesture performed by a preset number (e.g., two) of separated external objects, the electronic device 101 may initiate the transformation of the display 140. For example, based on a swipe gesture performed by a preset number (e.g., three) of spaced external objects, the electronic device 101 may initiate the transformation of the display 140. In the displaying area adjusted by the transformation of the display 140, the electronic device 101 may extend an area of a specific screen selected by the swipe gesture, among the screens, larger than an area of another screen different from the specific screen. For example, the swipe gesture may be an input for performing the transformation of the display 140 and selecting a specific screen to be emphasized by the transformation of the display 140.

Similar to the embodiment of FIGS. 6A to 6B, which selectively switches from the state 610 included in the slide-in state to one state of the states 620 and 630 included in the slide-out state, the electronic device 101 may switch from the slide-out state (i.e., the open state) to the slide-in state (i.e., the closed state) in response to the reception of the multi-touch gesture performed on the frame 340 in the slide-out state. Hereinafter, referring to FIG. 7, in the states 630 of FIGS. 6A to 6B, based on the multi-touch gesture initiated on the frame 340, an operation in which the electronic device 101 emphasizes a specific screen selected by the transformation of the display 140, and the multi-touch gesture more than other screens will be described.

FIGS. 7A to 7B are diagrams for describing another operation of an electronic device 101 transforming a display based on an input performed on a border line and the screens distinguished by the border line, according to an embodiment. The electronic device 101 of FIGS. 7A to 7B may be an example of the electronic device 101 of FIGS. 6A to 6B. For example, referring to FIG. 7A, different states 710, 720, and 730 of the electronic device 101 switched based on an input performed on the frame 340 are illustrated. States 710 of FIGS 7A to 7B may be states in which the electronic device 101 displays the first screen 332 and the second screen 334 within the slide-out state, based on multitasking. For example, the states 710 of FIGS. 7A to 7B may match the states 630 of FIGS. 6A to 6B. Hereinafter, a description overlapping the description of FIGS. 6A to 6B will be omitted.

Referring to FIG. 7A, according to an embodiment, an operation of the electronic device 101 transforming the display 140 based on an input initiated on a border line between screens is described. In the state 710 of FIG. 7A, the electronic device 101 may detect a multi-touch gesture initiated on the frame 340. The multi-touch gesture may be a gesture in which external objects (e.g., fingertips) in contact with the points 740 and 750 spaced apart in the frame 340 drag or swipe the display 140. Similar to FIGS. 6A to 6B, in response to identifying the multi-touch gesture, the electronic device 101 having a shape of a slide-out state may switch from the slide-out state to a slide-in state by controlling the actuator (e.g., actuator 150 in FIG. 1). Since it is switched from the slide-out state to the slide-in state, the area of the display 140 may be reduced based on the identification of the multi-touch gesture. During the transformation to the slide-in state, the electronic device 101 may emphasize a specific screen selected by the multi-touch gesture among the first screen 332 and the second screen 334 based on multitasking. The emphasis of the specific screen may include an operation of maintaining or extending an area in the displaying area of the specific screen, even though the area of the specific screen is reduced. Accordingly, in certain embodiments, a result of identifying the input (e.g., the multi-touch gesture) depends on the state: if the display 140 and/or electronic device 101 is in a closed state, identifying an input for transforming a displaying area (e.g., a multi-touch gesture on the frame 340) results in switching the electronic device to the open state (e.g., by controlling the actuator accordingly); whereas, if the display 140 and/or electronic device 101 is in an open state, identifying an input for transforming a displaying area (e.g., the same type of input as for the case of the closed state) results in switching the electronic device to the closed state (e.g., by controlling the actuator accordingly).

For example, in response to identifying the movement of external objects initiated on points 740 and 750 in frame 340, and dragged along directions 744 and 754, the electronic device 101 may switch from the state 710 to the state 720. Referring to the states 710 and 720, among the first screen 332 and the second screen 334, the area of the second screen 334 superimposed with external objects dragged along the directions 744 and 754 may be reduced, and the area of the first screen 332 may be maintained. For example, a gesture initiated on points 740, 750, and dragged or swept along directions 744, 754 may be a gesture to reduce the displaying area based on the slide-in state, and to emphasize the first screen 332. Reducing the area of the second screen 334 based on external objects dragged along directions 744 and 754 by the electronic device 101 may be performed, while at least one of the area, width, or height of the second screen 334 is lower limit or more.

For example, in response to identifying the movement of external objects initiated on points 740, 750 in frame 340 and dragged along directions 742, 752, the electronic device 101 may switch from the state 710 to the state 730. Referring to states 710 and 730, the area of the first screen 332 superimposed with external objects dragged along the directions 742 and 752 may be reduced, and the area of the second screen 334 may be maintained, among the first screen 332 and the second screen 334. For example, a gesture initiated on points 740, 750, and dragged or swiped along directions 744, 752 may be a gesture for reducing the displaying area based on the transformation of the display 140 and emphasizing the second screen 334. Reducing the first screen 332 based on external objects dragged along directions 742 and 752 by the electronic device 101 may be performed, while at least one of the width, height, or area of the first screen 332 is the lower limit or more.

Referring to FIG. 7B, according to an embodiment, the electronic device 101 may switch from the slide-out state to the slide-in state based on the multi-touch gesture performed within one of the first screen 332 or the second screen 334 distinguished by the frame 340. Referring to FIG. 7B, in the state 710, the electronic device 101 may identify a multi-touch gesture performed by a preset number (e.g., three) of external objects (e.g., fingertips) within one of the first screen 332 or the second screen 334. The multi-touch gesture may include a gesture in which the external objects that touch substantially simultaneously the spaced points are dragged. Hereinafter, the operation of the electronic device 101, which receives a multi-touch gesture by dragging three external objects, is described, but the embodiment is not limited to the number of external objects or the type of gesture.

For example, the electronic device 101 may identify a gesture in which external objects in contact with points 741-1, 741-2, 741-3 in the first screen 332 are dragged along the directions 742-1, 742-2, and 742-3. The electronic device 101 may switch from the state 710 to the state 730 based on identifying the gesture. For example, the gesture may be a gesture for preferentially reducing the first screen 332 in contact with external objects. Referring to FIG. 7B, the electronic device 101 may control the actuator so that the shape of the electronic device 101 becomes the slide-in state while switching from the state 710 to the state 730. In the state 730, the electronic device 101 may reduce the first screen 332 selected by the gesture to a smaller size than the second screen 334. While the first screen 332 is reduced, the electronic device 101 may maintain the area, width, and height of the second screen 334 independently of the transformation of the display 140. Maintaining the area, width, and height of the second screen 334 by the electronic device 101 may be performed while at least one of the area, width, and height of the reduced first screen 332 is the lower limit or more. For example, when the height of the first screen 332 is reduced to the lower limit, the electronic device 101 may maintain the height of the first screen 332 to the lower limit by reducing the second screen 334. Since the electronic device 101 reduces the first screen 332, the second screen 334 may be emphasized in the state 730.

For example, the electronic device 101 may identify a gesture dragged along the directions 744-1, 744-2, and 744-3 from points 743-1, 743-2, and 743-3 in the second screen 334. The electronic device 101 may switch from the state 710 to the state 720 based on the gesture. During the transformation from the state 710 to the state 720, the electronic device 101 may control the actuator to switch from the slide-out state to the slide-in state. According to the transformation to the slide-in state, the area and/or size of the displaying area of the display 140 may be reduced. In state 720, the electronic device 101 may reduce and display the second screen 334 selected by the gesture compared to other screens (e.g., the first screen 332) within the reduced displaying area. For example, during the transformation from state 710 to state 720, the rate and/or speed at which the size of the second screen 334 is reduced may be greater than the rate and/or speed at which the size of the first screen 332 is reduced. The electronic device 101 may maintain the size of the first screen 332 while reducing the second screen 334. The size of the first screen 332 may be maintained until a time point when the size of the second screen 334 is reduced to the lower limit of the preset by the reduction of the second screen 334. For example, the electronic device 101 may initiate the reduction of the first screen 332 based on identifying the size of the second screen 334 reduced to the preset lower limit.

As described above, according to an embodiment, the electronic device 101 may maintain or extend an area of a specific screen selected by a user among a plurality of screens while reducing the displaying area based on the transformation from the slide-out state to the slide-in state. For example, the electronic device 101 may simultaneously perform reduction of the displaying area and emphasis on a specific screen indicated by a single input, based on the single input such as the multi-touch gesture illustrated with reference to FIGS. 7A to 7B.

Although the operation of the electronic device 101 based on the frame 340 of FIG. 3A is described, an embodiment is not limited thereto. For example, the electronic device 101 may simultaneously perform reduction of the displaying area and selective adjustment of sizes of screens distinguished by the frame 340 based on the multi-touch gesture performed on the frame 340 of FIG. 3B.

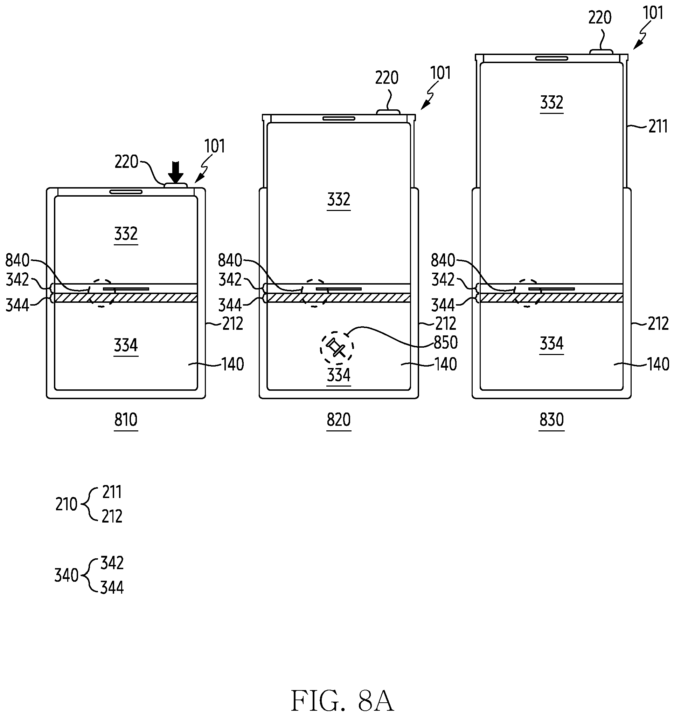

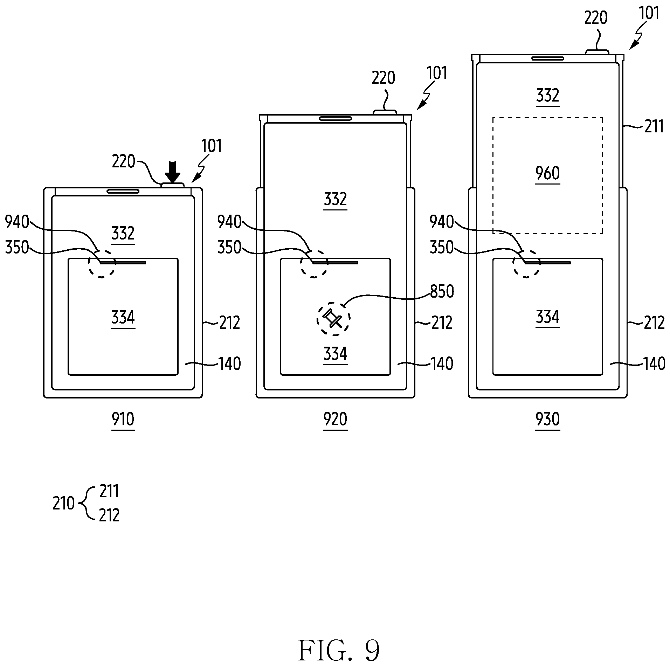

According to an embodiment, the electronic device 101 may simultaneously receive a first input by an external object in contact with the display 140 and a second input for pressing the button 220 that triggers the transformation of the display 140. Hereinafter, referring to FIGS. 8A to 8C, and/or FIG. 9, an operation performed by the electronic device 101 that simultaneously receives the first input and the second input in a time domain will be described.

FIGS. 8A to 8C are diagrams for describing an operation performed by an electronic device 101 based on an input related to a border line while transforming a display 140, according to an embodiment. The electronic devices 101 of FIGS. 8A to 8C may be examples of the electronic devices 101 of FIGS. 1 to 2, FIGS. 5A to 5B, FIGS. 6A to 6B, FIGS. 7A to 7B, and the electronic devices of FIGS. 3A to 3B. For example, the display 140 of FIG. 1 may include the display 140 of FIGS. 8A to 8C. For example, a housing 210 of the electronic device 101 of FIGS. 8A to 8C may be distinguished into the first housing 211 and the second housing 212 that are slidably coupled as described above with reference to FIGS. 2A to 2B.

Referring to FIGS. 8A to 8C, different states 810, 820, 830, 840, 850, and 860 of the electronic device 101 switched by an input received through a frame 340 and a button 220 are illustrated. The button 220 of FIGS. 8A to 8C may be an example of the button 220 of FIG. 2. State 810 of FIGS. 8A to 8B may be a state in which the electronic device 101 having a shape of slide-in state simultaneously displays the first screen 332 and the second screen 334 based on multitasking. For example, state 810 of FIGS. 8A to 8B may include state 310 of FIG. 3A, state 510 of FIG. 5A , and/or states 610 of FIGS. 6A to 6B. The frame 340, a handle 342, and an indicator 344 of FIGS. 8A to 8B may correspond to the frame 340, the handle 342, and the indicator 344 of FIGS. 3A. For example, the electronic device 101 may modify the position of the border line of the first screen 332 and the second screen 334 based on a gesture performed on the frame 340 and/or the handle 342. For example, the electronic device 101 may indicate a specific screen focused among the first screen 332 and the second screen 334, based on the location of the indicator 344 within the frame 340.

In response to receiving an input pressing the button 220 in the states 810 of FIGS. 8A to 8B, the electronic device 101 in the slide-in state may transform the display 140 in order to switch from the slide-in state to the slide-out state. For example, the input pressing the button 220 may be an input, between the slide-in state and the slide-out state, for toggling the shape of the electronic device 101 and/or the display 140. In response to receiving the input pressing the button 220, the electronic device 101 displaying the first screen 332 and the second screen 334 based on multitasking may adjust the area of the first screen 332 and the area of the second screen 334 in proportion to the change in the area of displaying area due to the transformation of the display 140. For example, the electronic device 101 may maintain a ratio of areas of the first screen 332 and the second screen 334 while the area of the displaying area is modified.

According to an embodiment, in response to identifying a second input performed on the frame 340 with a first input pressing the button 220, the electronic device 101 may adjust the area of the first screen 332 and the area of the second screen 334 based on the second input. Referring to FIG. 8A, the electronic device 101 may identify the second input by an external object contacting the point 840 in the frame 340 together with the first input pressing the button 220 in the state 810. The electronic device 101 may adjust the positions of the frame 340 and/or the border line of the first screen 332 and the second screen 334 in the displaying area of the display 140 based on the second input, while initiating the transformation of the display 140 based on the first input. In certain embodiments, identifying only the first input or only the second input does not result in transforming of the display 140; both first and second input are required to initiate transformation of the display 140.

Referring to FIG. 8A, a state 820 while the electronic device 101 transforms the display 140 based on a first input pressing the button 220 is illustrated. In the state 820, the shape of the electronic device 101 may correspond to an intermediate state between the state 810 included in the slide-in state and the state 830 included in the slide-out state. Referring to states 810 and 820, as the position of the external object in contact with the frame 340 is maintained at the point 840, among the first screen 332 and the second screen 334, the area of the first screen 332 may be increased, and the area of the second screen 334 may be maintained. In an example, if the button 220 is released in state 820, the intermediate state is maintained.

Referring to FIG 8A, in response to identifying that the area of the second screen 334 is maintained by the position of the frame 340 in the display 140 based on an external object in contact with the point 840 or based on the first screen 332 being focused, the electronic device 101 may superimpose and display a visual object such as an icon 850 on the second screen 334. Referring to FIG. 8A, the icon 850 including an image such as a pin is exemplarily illustrated. The embodiment is not limited thereto, and for example, the electronic device 101 may adjust the brightness of the second screen 334 to less than the brightness of the first screen 332 based on the dimming layer by reducing the area of the second screen 334 (e.g., reducing to a preset ratio such as 2%), and/or adjusting the thickness of the outline of the portion where the second screen 334 is displayed in the display 140.

Referring to FIG. 8A, in response to identifying that the area of the first screen 332 is increased based on, in the display 140, the position of the frame 340 adjusted by an external object in contact with the point 840, the electronic device 101 may output a visual effect indicating an increase of the first screen 332. The visual effect may include a blur of the first screen 332. For example, while transforming the display 140 (e.g., state 820), the electronic device 101 may apply different visual effects to each of the screens that are discriminately adjusted by input performed based on frame 340. For example, the visual effect may include at least one of superposition of visual objects such as blur, dimming, and icon 850, or reduction.

Referring to FIG. 8A, a state 830 after transforming the display 140 based on an external object in contact with the point 840 in the frame 340 is illustrated. Referring to states 810, 820, and 830, the electronic device 101 that identifies the external object maintained on the point 840 may use the displaying area, which increases with transformation from slide-in state (e.g., state 810) to slide-out state (e.g., state 830), to increase the area of the first screen 332 among the first screen 332 and the second screen 334. In case that the external object moves to a different point from the point 840 while transforming the display 140, the electronic device 101 may extend and/or reduce the first screen 332 and the second screen 334 based on the frame 340 shifted toward the different point.

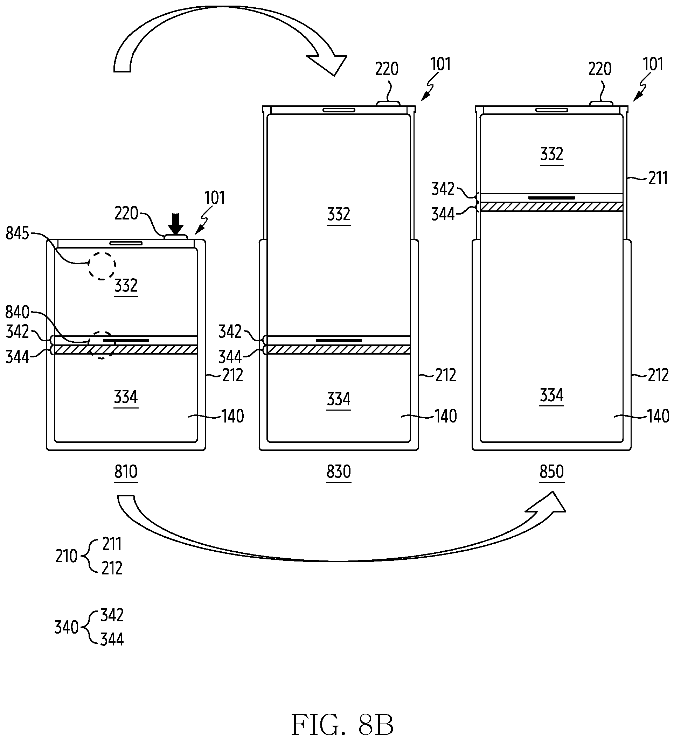

Referring to FIG. 8B, in the state 810 having a shape of the slide-in state, the electronic device 101 may selectively switch to any one of the states 830 and 850 having the shape of the slide-out state based on a second input selecting a first screen 332 or a second screen 334, along with a first input pressing the button 220. For example, as described above with reference to FIG. 8A, the electronic device 101 may switch from the state 810 to the state 830 based on the second input identified substantially simultaneously with the first input and touching the point 840 in the frame 340.

For example, the electronic device 101 may switch from the state 810 to a state 850 in which a second screen 334 different from the first screen 332 is emphasized, based on the second input, identified substantially simultaneously with the first input and touching the point 845 in the first screen 332. The point 845 may be included in a portion of the display 140 on which the first screen 332 is displayed, or may be superimposed with the handle of the first screen 332.

Referring to FIG. 8C, in state 860 having a shape of the slide-in state, an example in which the electronic device 101 selectively switches to any one of the states 830-1 and 850-1 is illustrated, based on one handle selected by the user among the first handle 362 or the second handle 364, with an input pressing button 220. In the state 860 of FIG. 8C, the electronic device 101 may display the first screen 332 and the second screen 334 in the displaying area based on any one of the states 310 and 320 of FIG. 3B.

In the state 860 of FIG. 8C, the electronic device 101 may extend the displaying area based on the transformation of the display 140 in response to the first input indicating the pressing of the button 220. Based on the transformation of the display 140, the shape of the electronic device 101 may be adjusted from a shape in the slide-in state to a shape within the slide-out state. According to an embodiment, the electronic device 101 may extend one screen corresponding to the handle selected by the second input among the first screen 332 and the second screen 334 based on the second input indicating that any one of the first handle 362 and the second handle 364 is selected, with the first input. For example, when the second input indicates that the first handle 362 is selected, the electronic device 101 may switch from the state 860 to a state 830-1 in which the first screen 332 corresponding to the first handle 362 is relatively greatly extended. For example, when the second input indicates that the second handle 364 is selected, the electronic device 101 may switch from the state 860 to a state 850-1 in which the second screen 334 corresponding to the second handle 364 is relatively greatly extended.

As described above, according to an embodiment, the electronic device 101 may initiate the transformation of the display 140 in response to receiving an input for pressing the button 220. The electronic device 101 may modify the position of at least one of screens (e.g., the first screen 332 and the second screen 334), while the transformation of the display 140 is performed, based on the position of the visual object (e.g., the frame 340 and/or the handle 342) being adjusted by an external object in the displaying area. According to an embodiment, based on a second input of touching any one screen among the different screens (e.g., the first screen 332 and the second screen 334) distinguished by the frame 340, together with a first input pressing the button 220, the electronic device 101 may adjust the area and/or size of another screen different from the screen while maintaining the area and/or size of the screen touched by the second input.

Similar to an embodiment of FIGS. 8A to 8C that supports multitasking based on PBP, the electronic device 101 may support multitasking based on PIP. Hereinafter, an operation performed based on receiving a first input pressing a button 220 while the electronic device 101 supports multitasking based on PIP will be described with reference to FIG. 9.

FIG. 9 is a diagram for describing an operation performed by an electronic device 101 based on an input related to a handle of any one of the screens while transforming a display 140, according to an embodiment. An electronic device 101 of FIG. 9 may be an example of the electronic devices 101 of FIGS. 1 to 2, 5A to 5B, 6A to 6B, 7A to 7B, 8A to 8C, and the electronic devices of FIGS. 3A to 3B. For example, a display 140 of FIG. 1 may include a display 140 of FIG. 9. For example, a housing 210 of the electronic device 101 of FIG. 9 may be divided into the first housing 211 and the second housing 212 slidably coupled to FIGS. 2A to 2B.

Referring to FIG. 9, different states 910, 920, and 930 of the electronic device 101 that are switched based on a first input pressing the button 220 and a second input performed on the handle 350 are illustrated. The state 910 of FIG. 9 may be an example of the state 561 of FIG. 5B and/or the state 330 of FIGS. 3A to 3B. For example, a first screen 332, a second screen 334, and the handle 350 that the electronic device 101 displays within the display 140 in the state 910 may correspond to the first screen 332, the second screen 334, and the handle 350 in the states 330 of FIGS. 3A to 3B. In response to receiving the first input pressing the button 220 in the state 910 having a shape of the slide-in state, the electronic device 101 may modify a shape of the display 140 to a shape of the slide-out state. For example, the state 930 may include a state after being modified to the shape of the slide-out state by the first input. For example, a shape of the electronic device 101 in the state 920 may correspond to a shape of the electronic device 101 and/or the display 140 (e.g., a shape of the intermediate state) during the transformation from the state 910 to the state 930.

Referring to FIG. 9, the electronic device 101 may identify an external object in contact with the point 940 on the handle 350 in the display 140, while transforming the display 140 based on the first input pressing the button 220. The electronic device 101 may adjust the position of the second screen 334 corresponding to the handle 350 in the display 140 based on the position of the external object identified while transforming the display 140. Referring to FIG. 9, as the position of the external object is maintained at the point 940 during switching between states 910, 920, and 930, the electronic device 101 may maintain the position in the display 140 of the second screen 334 based on the point 940.

According to an embodiment, in response to identifying that the position in the display 140 of the second screen 334 is maintained by the external object in contact with the point 940, The electronic device 101 may superimpose to display the icon 850 on the second screen 334. Similar to the icon 850 of FIG. 8A, the icon 850 of FIG 9 may indicate that a position of a specific screen (e.g., the second screen 334 in the example of FIG. 9) in which the icon 850 is superimposed among screens displayed in the display 140 based on multitasking is maintained. Indicating that the position of the second screen 334 is maintained in the electronic device 101 may be performed based on visual effects (e.g., blur, and/or dimming) different from the icon 850.

Referring to FIG. 9, a state 930 after transforming the display 140 based on a first input pressing the button 220 is illustrated. The position of the second screen 334 in the state 930 may be adjusted by an external object that has been in contact with the handle 350 while the display 140 is transformed. The transformation of the display 140 may cause parallel movement of pixels included in the display 140. Referring to FIG. 9, an area 960 in the state 930 may indicate the positions of pixels that previously displayed the second screen 334 in the state 910. In the case of receiving only the first input among the first input pressing the button 220 and the second input in contact with point 940, the electronic device 101 may display the second screen 334 in the area 960. In state 930, the electronic device 101 may display the second screen 334 at a different position from the area 960, based on receiving additionally the second input. In an example, the additional receiving of the second input results in the second screen 334 being fixed in place relative to the second housing 212 while, and after, the transformation of the displaying area of the display 140.

As described above, according to an embodiment, the electronic device 101 may adjust the positional relationship between the screens (e.g., the first screen 332 and the second screen 334) based on the input received simultaneously with the transformation of the display 140. Although the operation of the electronic device 101 during the transformation from the slide-in state to the slide-out state is described with reference to FIGS. 8A to 8C, and/or 9, the electronic device 101 may adjust the positional relationship of the screens based on a gesture performed within the handle 350 and/or the frame 340 during the transformation from the slide-out state to the slide-in state.

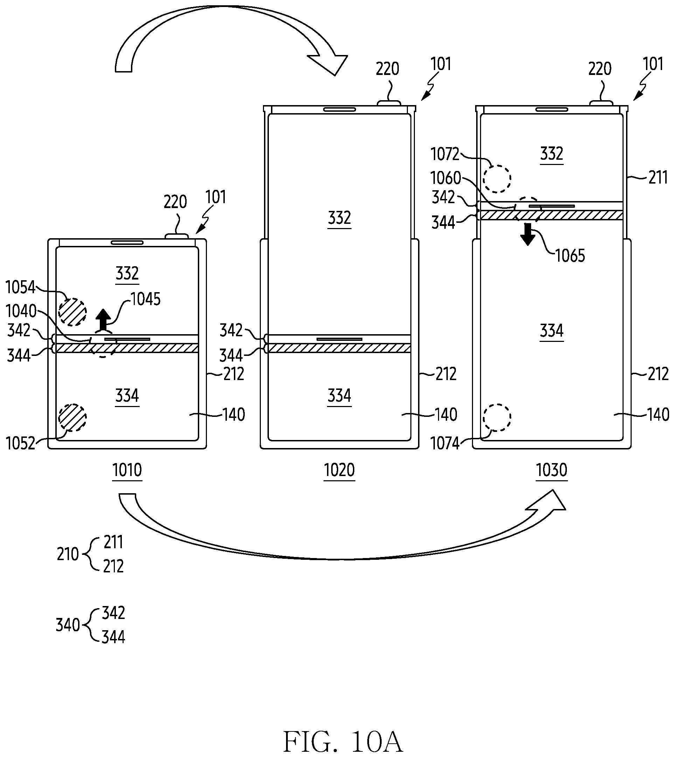

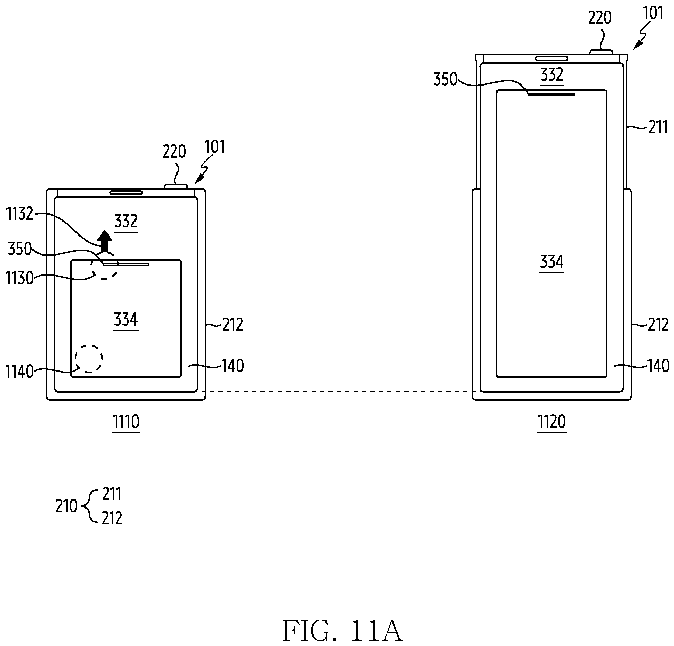

Hereinafter, referring to FIGS. 10A to 10C, and/or FIGS. 11A to 11B, the operation of the electronic device 101 that simultaneously receives the first gesture performed in the handle 350 and/or the frame 240, and the second gesture distinguished from the first gesture and performed in the display 140 will be described.

FIGS. 10A to 10C are diagrams for describing an operation performed by an electronic device 101 based on simultaneously identifying a first input initiated on a border line and a second input for selecting one of the screens, according to an embodiment. The electronic devices 101 of FIGS. 10A to 10C may be an example of the electronic devices 101 of FIGS. 1 to 2, 5A to 5B, 6A to 6B, 7A to 7B, 8A to 8C, and 9 and the electronic device of FIGS. 3A to 3B. For example, the display 140 of FIG. 1 may include a display 140 of FIGS. 10A to 10C. For example, a housing 210 of the electronic device 101 of FIGS. 10A to 10C may be divided into the first housing 211 and the second housing 212 that are slidably coupled, as described above with reference to FIGS. 2A to 2B.

Referring to FIGS. 10A to 10C, different states 1010, 1020, 1030, 1090, and 1095 of the electronic device 101 switched by an input received from a user are illustrated. The states 1010, 1090, and 1095 of FIGS 10A to 10C may be a state in which the electronic device 101 simultaneously displays a first screen 332 and a second screen 334 corresponding to each of applications executed in the electronic device 101. The state 1010 of FIG. 10A may include the state 310 of FIG. 3A, the state 510 of FIG. 5A, the state 610 of FIGS. 6A to 6B, and/or the state 810 of FIGS. 8A to 8B. The frame 340, the handle 342, and the indicator 344 of FIGS. 10A to 10C may correspond to the frame 340 of FIG. 3A, the handle 342, and the indicator 344.

According to an embodiment, the electronic device 101 may simultaneously perform transformation of the display 140 and emphasis on the specific screen, in response to receiving a first input related to the frame 340, and a second input for selecting a specific screen among the first screen 332 and the second screen 334. A time period in which the electronic device 101 receives the first input and a time period in which the electronic device 101 receives the second input may at least partially overlap within a time domain. Referring to FIG. 10A, the first input may include a gesture of an external object initiated at a point 1040 within the frame 340 and dragged or swiped along direction 1045. In response to receiving the first input, the electronic device 101 in the slide-in state may switch from the slide-in state to another state (e.g., the slide-out state) different from the slide-in state by controlling the actuator (e.g., the actuator 150 in FIG. 1).

According to an embodiment, the electronic device 101 may receive a first input by an external object dragged from the point 1040 in the frame 340 toward the direction 1045, and simultaneously receive a second input for selecting one of the first screen 332 and the second screen 334. The second input may include a gesture (e.g., a long-touch gesture that touches the display 140 above a preset threshold such as 1.5 seconds) touching a preset position in one of the first screen 332 and the second screen 334, exceeding a preset period. The preset position may be a position adjacent to at least one of the corners of each of the first screen 332 and the second screen 334. For example, the preset position may include a left lower end or a right lower end of the second screen 334. For example, the preset position may include a position adjacent to at least one of the corners of the first screen 332. For example, the preset position may be included in an area in which a touch event of a corresponding application is not generated in each of the first screen 332 and the second screen 334.

Referring to FIG. 10A, in response to receiving the first input together with the second input based on the point 1052 in the second screen 334, the electronic device 101 may switch from the state 1010 to the state 1030 for emphasizing the second screen 334 selected by the second input. Referring to FIG. 10A, in response to receiving the first input together with the second input touching the point 1054 in the first screen 332 beyond the preset period, the electronic device 101 may switch from the state 1010 to the state 1020 for emphasizing the first screen 332.

Referring to FIG. 10A, in each of the states 1020 and 1030, the electronic device 101 may extend and display one screen selected, among the first screen 332 and the second screen 334, by the second input different from the first input initiated on the point 1040 in the frame 340. The electronic device 101 may emphasize the selected screen by maintaining or reducing the area of another screen different from the screen selected by the second input. For example, as in state 1020, the electronic device 101 may extend the area of the first screen 332 selected by the second input, and match an area of the second screen 334 different from the first screen 332 with an area of the second screen 334 within the state 1010.

Although an embodiment of switching from the slide-in state 1010 to any one of the slide-out state 1020 and 1030 is described, the embodiment is not limited thereto. According to an embodiment, the electronic device 101 may adjust the degree of transformation of the display 140 based on the trajectory of the first input initiated within the point 1040. For example, the electronic device 101 may determine an area of the displaying area to be extended by transforming the display 140 based on the movement speed and/or movement distance of the external object moving along direction 1045.

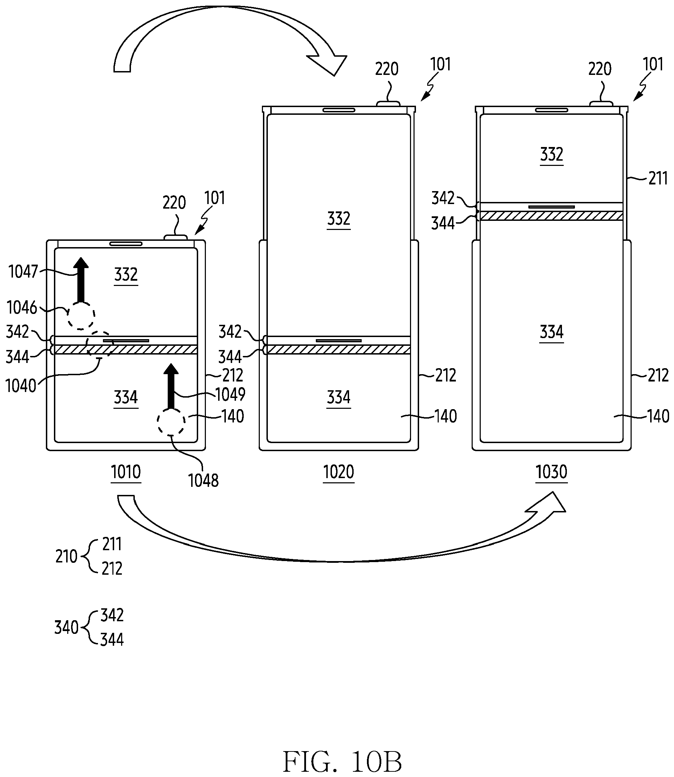

Referring to FIG. 10B, according to an embodiment, the electronic device 101 may simultaneously perform transformation of the display 140 and expansion of the specific screen based on receiving a second input for selecting a specific screen of the first screen 332 or the second screen 334 together with the first input touching the frame 340. Although the first input is exemplary described based on the frame 340 of FIG. 3A, the embodiment is not limited thereto. For example, the first input may be identified based on the gesture touching a point on the frame 340 of FIG. 3B or the gesture touching a point on the second handle 364 adjacent to the frame 340 among the handles (e.g., the first handle 362, and the second handle 364) of FIG. 3B. Referring to FIG. 10B, the first input may include a gesture of touching a point 1040 in the frame 340. The second input may include a first gesture dragged along the direction 1047 from the point 1046 in the first screen 332, and/or a second gesture dragged along direction 1049 from the point 1048 in the second screen 334. According to an embodiment, based on detecting the first gesture performed substantially simultaneously with the first input, the electronic device 101 may switch from the state 1010 to the state 1020 in which the first screen 332 selected by the first gesture is emphasized. According to an embodiment, based on detecting the second gesture performed substantially simultaneously with the first input, the electronic device 101 may switch from the state 1010 to the state 1030 in which the second screen 334 selected by the second gesture is emphasized. The electronic device 101 selectively switching from the state 1010 to any one of the states 1020 and 1030 may be performed similarly as described above in FIG. 10A.

According to an embodiment, similar to an example of FIGS. 10A to 10B switching from the slide-in state to the slide-out state, the electronic device 101 may switch from the slide-out state to the slide-in state. Referring to FIG. 10A, in the state 1030, in response to identifying that an external object in contact with point 1060 in the frame 340 is dragged along direction 1065, the electronic device 101 may switch from the slide-out state to the slide-in state by transforming the display 140. Based on a second input selecting one screen of the first screen 332 and the second screen 334, the electronic device 101 may emphasize the selected one screen while receiving the first input by the external object. For example, in the state of receiving the second input selecting the first screen 332 based on the point 1072, the electronic device 101 may maintain or extend the area of the first screen 332 while switching to the slide-in state based on the first input. In the above example, the area of the first screen 332 after switching to the slide-in state may exceed the area of the second screen 334. For example, in case that a second input selecting the second screen 334 is received based on the point 1074 so that the area of the second screen 334 exceeds the area of the first screen 332 in the slide-in state.

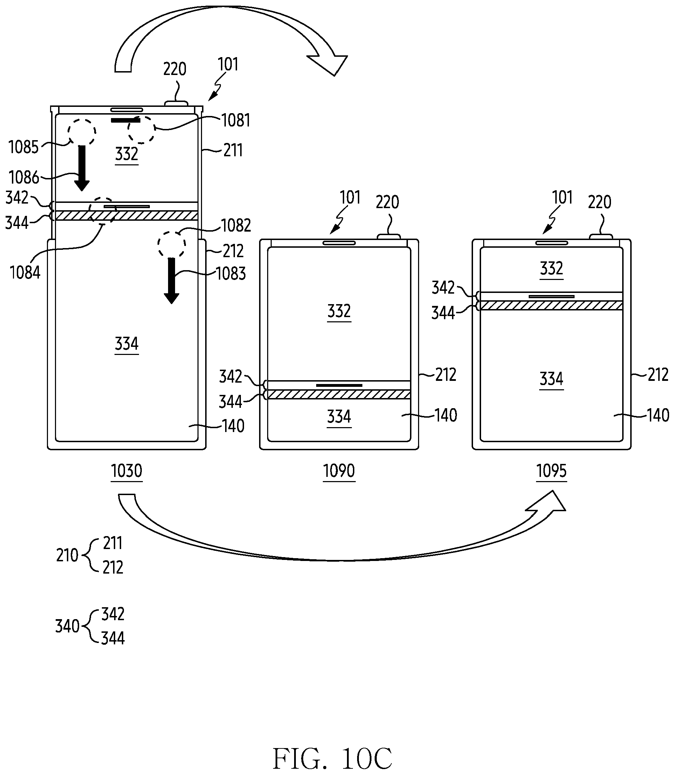

Referring to FIG. 10C, according to an embodiment, the electronic device 101 may switch from the slide-out state to the slide-in state based on a multi-touch gesture. The multi-touch gesture may include a first gesture selecting any one of the first screen 332 and the second screen 334, and a second gesture triggering the transformation of the display 140. The first gesture may include a gesture touching, and/or clicking a point (e.g., the handle, and/or the frame 340) within any one of the first screen 332 and the second screen 334. The second gesture may include a gesture dragged along the preset direction.

Referring to FIG. 10C, different multi-touch gestures received within the state 1030 in which the electronic device 101 has the slide-out state are exemplarily illustrated. According to an embodiment, in response to substantially simultaneously identifying the first gesture selecting the point 1081 overlapping the handle in the first screen 332, and the second gesture dragged from the point 1085 in the first screen 332 along the direction 1086, the electronic device 101 may switch from the state 1030 to a state 1095 in which the first screen 332 is relatively further reduced. In the state 1095, the electronic device 101 may emphasize a second screen 334 different from the first screen 332 selected by the first gesture. According to an embodiment, based on identifying the first gesture selecting the frame 340(or the handle of the second screen 334) and the second gesture dragged from the point 1082 in the second screen 334 along the direction 1083, the electronic device 101 may switch from the state 1030 to a state 1090 in which the second screen 334 is relatively further reduced. As described above with reference to FIG. 10C, according to an embodiment, the electronic device 101 may simultaneously perform the transformation (e.g., transformation from the slide-out state to the slide-in state) of the display 140 and the emphasis (e.g., emphasis on a screen different from a specific screen selected by the multi-touch gesture) on a specific screen among different screens, based on multi-touch gestures.

An embodiment of displaying screens based on PBP is described, but the embodiment is not limited thereto. Hereinafter, referring to FIGS. 11A to 11B, an operation performed by the electronic device 101 displaying the screens based on the PIP will be described based on the multi-touch gesture performed on display 140.

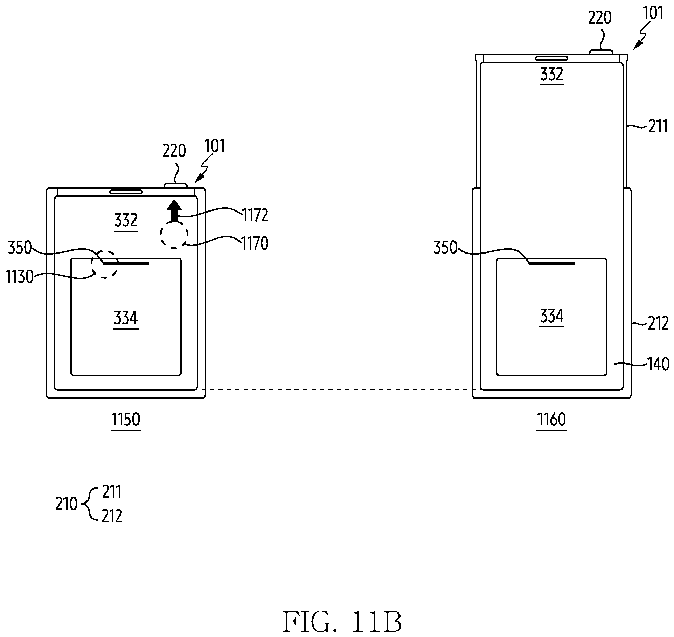

FIGS. 11A to 11B are diagrams for describing an operation performed by an electronic device 101 based on inputs received in a second screen 334 superimposed on a first screen 332, according to an embodiment. An electronic device 101 of FIG. 11 may be an example of the electronic device 101 of FIGS. 1 to 2, FIGS. 5 to 9, FIGS. 10A to 10C, and the electronic device of FIGS. 3A to 3B. For example, the display 140 of FIG. 1 may include a display 140 of FIGS. 11A to 11B. For example, a housing 210 of the electronic devices 101 of FIGS. 11A to 11B may be divided into the first housing 211 and the second housing 212 that are slidably coupled as described above with reference to FIGS. 2A to 2B.

Referring to FIG. 11A, a state 1110 in which the electronic device 101 in the slide-in state displays the first screen 332 and the second screen 334 superimposed on the first screen 332 is illustrated. The state 1110 of FIG. 11A may include the state 330 of FIGS. 3A to 3B, the state 561 of FIG. 5B, and/or the state 910 of FIG. 9. Referring to FIG. 11A, the electronic device 101 may display a visual object, such as the handle 350, for adjusting the position in the displaying area of the second screen 334 having an area less than the area of the displaying area of the display 140. According to an embodiment, the electronic device 101 may perform transformation of the display 140 in response to receiving the first input based on the handle 350.

Referring to FIG. 11A, in the state 1110, the electronic device 101 having a shape of the slide-in state may identify an external object in contact with the point 1130 in the handle 350. The first input for transformation of display 140 may include a gesture in which the external object is dragged along direction 1132. In response to receiving the first input, the electronic device 101 having a shape of the slide-in state may switch to a shape of the slide-out state (or the intermediate state different from the slide-in state). According to an embodiment, the electronic device 101 may adjust the area of the second screen 334 based on a second input overlapping the first input in the time domain and received in the second screen 334.

Referring to FIG. 11A, in the state 1110, independently of the first input including a gesture dragged along the direction 1132, the electronic device 101 may receive the second input based on another external object in contact with the point 1140 of the second screen 334. The point 1140 may be included in a preset position for receiving the second input. For example, The preset position may include a position adjacent to at least one of the corners of the second screen 334, and/or an area within the second screen 334 to which a touch event of an application corresponding to the second screen 334 is not mapped. The electronic device 101 receiving both the first input and the second input may emphasize the second screen 334 based on the second input while transforming the display 140 based on the first input.

Referring to FIG. 11A, a state 1120 in which the electronic device 101 receiving the first input including a gesture dragged along the direction 1132 a second input including a gesture touching a point 1140 in a second screen 334 enters, in state 1110 is illustrated. During the transformation from the state 1110 to the state 1120, the electronic device 101 may increase a ratio in which the second screen 334 occupies the displaying area. As the ratio increases, a ratio between an area of the second screen 334 and an area of the displaying area may increase during transformation from the state 1110 to the state 1120.

Referring to the state 1150 of FIG. 11B, an example in which the electronic device 101 having a shape within the slide-in state receives a first input based on the handle 350 and a second input performed in the first screen 332 is illustrated. The first input may indicate touching the point 1130 on the handle 350. The second input may indicate that the external object in contact with the point 1170 in the first screen 332 is dragged along the direction 1172. The second input may indicate the transformation of the display 140 based on the direction 1172. According to an embodiment, the electronic device 101 may switch from the state 1150 to the state 1160 in response to the first input and the second input.

Referring to FIG. 11B, during the transformation from the state 1150 to the state 1160, the electronic device 101 may extend the displaying area based on the transformation of the display 140. While the displaying area is extending, the electronic device 101 may cease extending the second screen 334, among the screens, different from a specific screen (the first screen 332 in an embodiment of FIG. 11B) on which the second input indicating the transformation of the display 140 is performed. For example, based on the first input indicating that the second screen 334 is selected, the electronic device 101 may maintain the size of the second screen 334, independent of the expansion of the displaying area.

Similar to an example of FIGS. 11A to 11B switching from a slide-in state to a slide-out state, in the slide-out state 1120, the electronic device 101 according to an embodiment may receive a first input for transforming toward the slide-in state and a second input for emphasizing the second screen 334. For example, the first input received within the state 1120 may include a gesture of dragging or swiping the handle 350 in another direction (e.g., other direction opposite to direction 1132) different from the direction 1132. Similar to the gesture of touching the point 1140 in the second screen 334, the second input received in the state 1120 may include a gesture of touching at least one of the corners of the second screen 334 in the state 1120. While transforming from the state 1120 in the slide-out state to the slide-in state, the electronic device 101 received the first input and the second input may maintain the area of the second screen 334 related to the second input. When the area of the displaying area of the display 140 is reduced to less than the area of the second screen 334 in the state 1120 based on the transformation to the slide-in state, the electronic device 101 may adjust the reduction rate at which the area of the second screen 334 is reduced to less than the reduction rate at which the area of the displaying area is reduced.

As described above, according to an embodiment, the electronic device 101 may simultaneously perform transformation of the display 140 and emphasis of a specific screen among the screens (e.g., the first screen 332 and the second screen 334) based on different gestures performed within the display 140. The electronic device 101 may provide a multitasking experience coupled the transformation of the display 140 to the user based on the gestures. For example, the user may simultaneously perform the transformation of the display 140 and control of the screens.

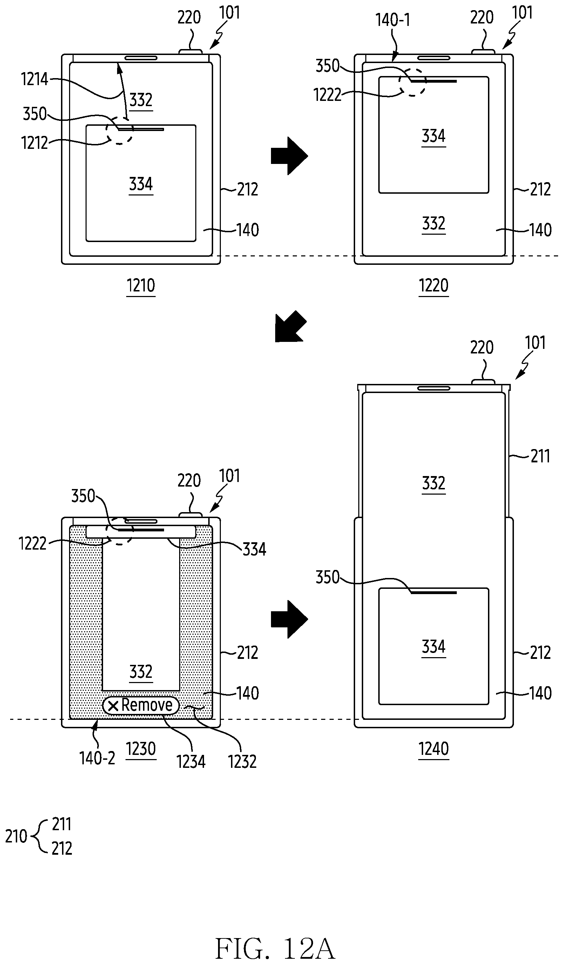

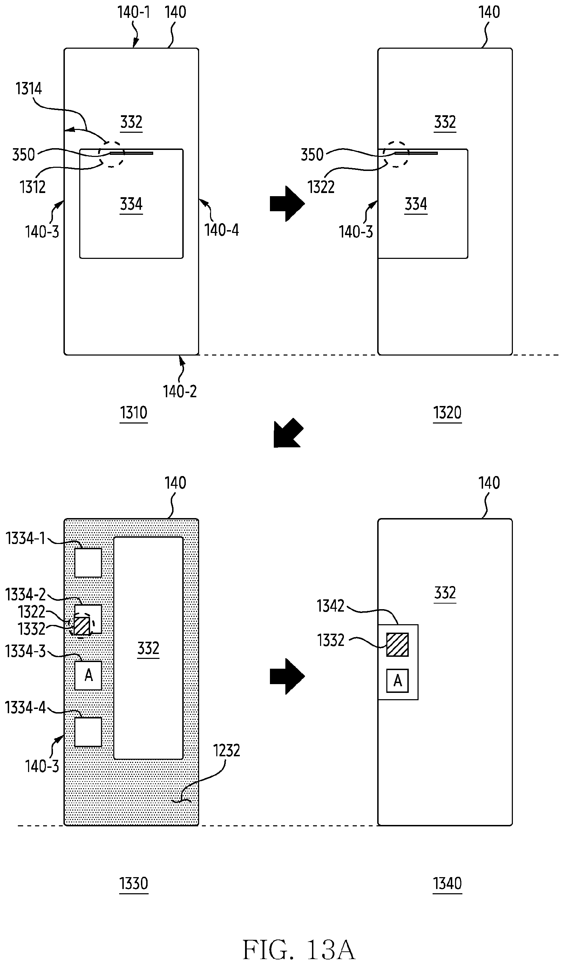

According to an embodiment, the electronic device 101 may perform the transformation of the display 140, independently of the gestures illustrated in FIGS 11A to 11B, based on another gesture of dragging the handle 350 to the edge of the displaying area of display 140. Hereinafter, referring to FIGS. 12A to 12B, and/or FIGS. 13A to 13B, an operation performed by the electronic device 101 according to an embodiment is described based on an input of dragging the second screen 334 to the edge of the displaying area of the display 140 using the handle 350.

FIGS. 12A to 12B are diagrams for describing an operation performed by the electronic device 101 based on an input of dragging a second screen 334 superimposed on a first screen 332, according to an embodiment. The electronic device 101 of FIGS. 12A to 12B may be an example of the electronic device 101 of FIGS. 1 to 2, FIGS. 5 to 11, and the electronic device of FIGS. 3A to 3B. For example, the display 140 of FIG. 1 may include a display 140 of FIGS. 12A to 12B. For example, a housing 210 of the electronic devices 101 of FIGS. 12A to 12B may be divided into the first housing 211 and the second housing 212 that are slidably coupled as described above with reference to FIGS. 2A to 2B.

Referring to FIGS. 12A to 12B, different states 1210, 1220, 1230, 1240, 1250, 1260, and 1270 of the electronic device 101 switched by an exemplary input dragging the second screen 334. The state 1210 may be a state in which the electronic device 101 in the slide-in state simultaneously displays a plurality of screens (e.g., the first screen 332 and the second screen 334) based on the PIP. The state 1210 of FIG. 12A may include the state 330 of FIGS. 3A to 3B , the state 561 of FIG. 5B, the state 910 of FIG. 9, and/or the state 1110 of FIG. 11A. The handle 350 of FIGS. 12A to 12B may correspond to the handle 350 of FIGS. 3A to 3B.

According to an embodiment, the electronic device 101 may adjust the position of the handle 350 and/or the second screen 334 in the display 140, based on the trajectory of the external object dragging the handle 350. Referring to FIG. 12A, in the state 1210, the electronic device 101 may identify a trajectory 1214 of an external object dragging the point 1212 in the handle 350. According to the adjustment of the position of the handle 350 and the second screen 334 based on the identified trajectory 1214, the electronic device 101 may switch from the state 1210 to the state 1220 in which the second screen 334 is moved in the displaying area. In the state 1220, the electronic device 101 may identify that the handle 350 and/or the second screen 334 are moved by the external object to a point 1222 adjacent to the first edge 140-1. In response to identifying that the distance between the point 1222 and the first edge 140-1 is less than the preset distance, the electronic device 101 may switch from the state 1220 to the state 1230. In an embodiment, the electronic device 101 may switch from the state 1220 to the state 1230 in response to identifying that the external object contacts the point 1222 less than the preset distance from the first edge 140-1, beyond the preset period (e.g., 2 seconds).

Referring to FIG. 12A, the state 1230 may be a state for receiving an input for transforming the display 140, unlike the state 1220 in which the position of the second screen 334 is adjusted based on the trajectory in which the external object in contact with the point 1222 is dragged. In the state 1230, the electronic device 101 may reduce the area of the first screen 332 that overlaps the second screen 334 in the states 1210 and 1220 and corresponds to the entire displaying area, and display a visual object 1232 for notifying the entry into the state 1230. In the visual object 1232, the electronic device 101 may display a visual object 1234 for ceasing the display of the second screen 334 based on the PIP. According to an embodiment, the electronic device 101 may receive an input for at least temporarily ceasing to display the first screen 332 and the second screen 334 based on multitasking, through a visual object 1234. Although an example of the visual object 1234 based on a button including preset text (e.g., "remove") is illustrated, the embodiment is not limited thereto.

For example, in response to identifying that an external object in contact with the point 1222 is dragged to the visual object 1234, the electronic device 101 may cease the display of the second screen 334 and switch to another state in which the first screen 332 is displayed alone. The electronic device 101 may display the visual object 1234 adjacent to the second edge 140-2 faced away the first edge 140-1 adjacent to the external object of the time point entering the state 1230.

Referring to FIG. 12A, the electronic device 101 may initiate the transformation of the display 140 based on the position of the external object in contact with the display 140 in the state 1230. For example, in response to identifying that the external object contacts a portion of the display 140 adjacent to the first edge 140-1, such as a point 1222, the electronic device 101 may initiate the transformation of the display 140. The electronic device 101 may adjust the position of the second screen 334 in the displaying area and the position of the handle 350 in the second screen 334 in order to notify that the transformation of the display 140 is initiated, such as the second screen 334 in the state 1230. In an embodiment, the first edge 140-1 may correspond to the direction in which the display 140 is unfolded while switching from the slide-in state to the slide-out state.

Referring to FIG. 12A, the state 1240 may be a state after the transformation of the display 140 initiated in the state 1230. The shape of the electronic device 101 and/or the display 140 may correspond to the slide-out state in the state 1240. Since an input emphasizing the second screen 334 (e.g., the input of FIG. 11A) has not been received independently of the input dragging the handle 350, the area of the second screen 334 in the state 1240 may match the area of the second screen 334 in the state 1210.

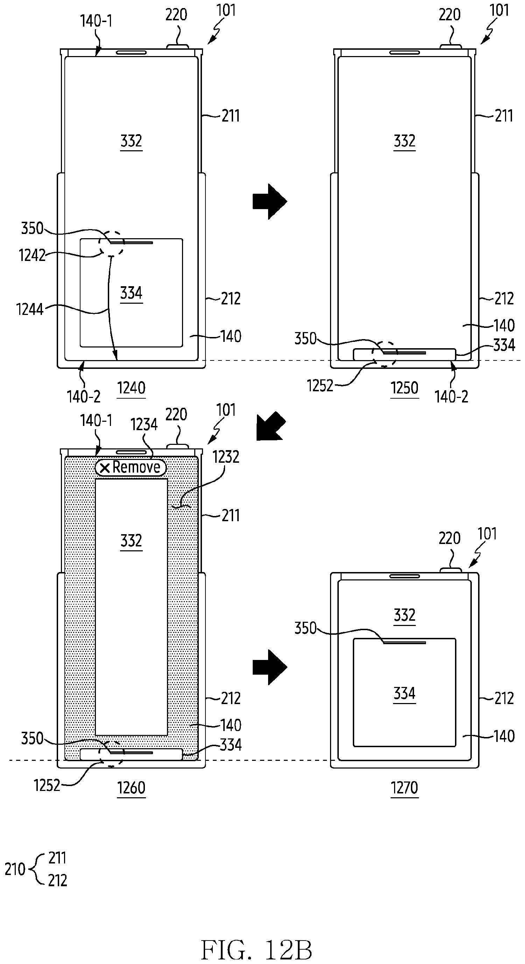

Similar to the operation performed by the electronic device 101 in the slide-in state based on the input of dragging the handle 350, described with reference to FIG. 12A, the electronic device 101 may transform the display 140 based on the input dragging the handle 350 in the slide-out state. Referring to FIG. 12B, in the slide-out state 1240, the electronic device 101 may identify the movement of the external object in contact with the point 1242 in the handle 350 of the second screen 334. It is assumed that the external object moves to the second edge 140-2 of the displaying area along the trajectory 1244. In response to identifying the trajectory 1244, the electronic device 101 may switch from the state 1240 to the state 1250.

Referring to FIG. 12B, in a state 1250, the electronic device 101 may identify the external object moved to the point 350 spaced apart from the second edge 140-2 by less than a preset distance. In response to identifying that the external object is in contact beyond the preset period within an area less than the preset distance from the second edge 140-2 such as the point 350, the electronic device 101 may switch from the state 1250 to the state 1260. Similar to the state 1230 of FIG. 12A, the state 1260 may be a state in which an input for transforming the display 140 is received. In the state 1260, the electronic device 101 may reduce the area of the first screen 332 to less than the area of the displaying area, and display the visual object 1232 indicating an entry into the state 1260. The electronic device 101 may display a visual object 1234 for ceasing the display of the second screen 334 together with the visual object 1232. Unlike the state 1230 of FIG. 12A, in the state 1260, the electronic device 101 may display the visual object 1234 on a portion of the displaying area adjacent to the first edge 140-1.

Referring to FIG. 12B, in state 1260, the electronic device 101 may transform the display 140 based on the trajectory of an external object that adjusts the position of the second screen 334 by dragging the handle 350. In response to identifying that the external object contacts the point 1252, the electronic device 101 may switch from the slide-out state 1260 to the slide-in state. Referring to FIG. 12B, the state 1270 may be a state after the transformation of the display 140 initiated in the state 1260. For example, the shape of the electronic device 101 and/or the display 140 in the state 1270 may correspond to the slide-in state. While switching between states 1260, and 1270, the electronic device 101 may maintain the area of the second screen 334 as the area of the second screen 340 in the state 1240 and/or adjust the area of the second screen 334 to be less than or equal to the area of the displaying area in the state 1270.

As described above, according to an embodiment, The electronic device 101 may transform the display 140 in response to receiving an input for adjusting the position of at least one (e.g., the second screen 334) of a plurality of screens. The input may be related to an edge perpendicular to the direction in which the display 140 is rolled or unfolded, such as the first edge 140-1 and/or the second edge 140-2. For example, in a slide-in state, the input of dragging the second screen 334 to the first edge 140-1 may be an input for switching from the slide-in state to the slide-out state. For example, in a slide-out state, the input of dragging the second screen 334 to the second edge 140-2 may be an input for switching from the slide-out state to the slide-in state. In an embodiment where the electronic device 101 inserts the display 140 into the housing 210 or extracts from the housing 210, the second edge 140-2 may be formed between the displaying area where the display 140 is exposed to the outside and at least a portion of the display 140 rolled by the actuator.

According to an embodiment, in each of the states 1230 and 1260, the electronic device 101 may cease to display the second screen 334 based on the input of dragging the handle 350 and/or the second screen 334 to another edge different from the first edge 140-1 and the second edge 140-2 of FIGS. 12A to 12B. The electronic device 101 may display a visual object for resuming display of the second screen 334, together with ceasing the display of the second screen 334. Hereinafter, referring to FIGS. 13A to 13B, according to an embodiment, an operation performed by the electronic device 101 based on an input of dragging the handle 350 and/or the second screen 334 to the other edge will be described.

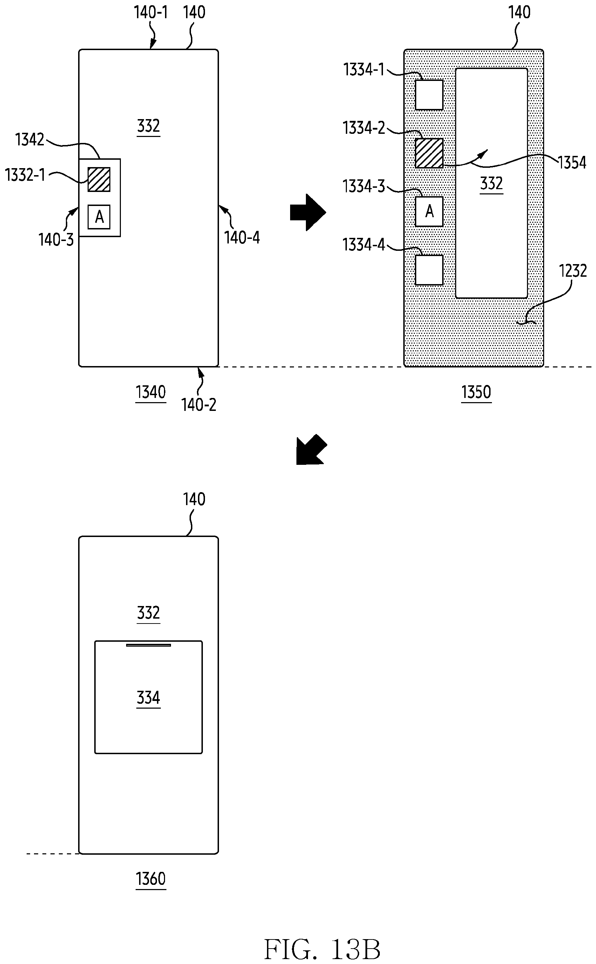

FIGS. 13A to 13B are diagrams for describing another operation performed by an electronic device based on an input of dragging a second screen 334 superimposed on a first screen 332, according to an embodiment. An electronic devices of FIGS. 13A to 13B may be examples of the electronic devices of FIGS. 1 to 2, FIGS. 5A to 12, and the electronic devices of FIGS. 3A to 3B. For example, the display 140 of FIG. 1 may include a display 140 of FIGS. 13A to 13B. It will be appreciated that the embodiments of FIGS. 13A and 13B, and the features thereof, may be applied or combined with any other embodiments disclosed herein; for example, preceding or following transformation of the display in response to an input.

Referring to FIGS. 13A to 13B, different states 1310, 1320, 1330, 1340, 1350, and 1360 of the electronic device switched by an input for adjusting the position of the second screen 334 using the handle 350 are illustrated. The state 1310 of FIG. 13A may include the state 1210 of FIG. 12A and/or the state 1240 of FIGS. 12A to 12B. For example, independently of the slide-in state, or slide-out state, the state 1310 may include a state in which the electronic device displays screens (e.g., the first screen 332 and the second screen 334 superimposed on the first screen 332) based on the PIP in the displaying area of the display 140.

In the state 1310 of FIG. 13A, the displaying area of the display 140 may include a first edge 140-1, a second edge 140-2 faced the first edge 140-1 (e.g., located on an opposite side of the display 140 to the first edge 140-1), a third edge 140-3 extending from one end of the first edge 140-1 to one end of the second edge 140-2, and a fourth edge 140-4 extending from the other end of the first edge 140-1 to the other end of the second edge 140-2 (e.g., the fourth edge 140-4 may be opposite the third edge 140-3). The first edge 140-1 and the second edge 140-2 may include a first edge 140-1 and a second edge 140-2 of FIGS. 12A to 12B. In the state 1310, according to an embodiment, the electronic device may identify a trajectory 1314 of an external object dragging the handle 350 (e.g., a trajectory of a drag input). When the external object is dragged to the first edge 140-1 or the second edge 140-2, the electronic device may initiate the transformation of the display 140 described above with reference to FIGS. 12A to 12B.

According to an embodiment, in response to identifying that the external object is dragged to an edge (e.g., the third edge 140-3 or the fourth edge 140-4) different from the first edge 140-1 and the second edge 140-2, the electronic device may cease to display screens based on the PIP. Hereinafter, it is assumed that the external object moves to the third edge 140-3 along the trajectory 1314. Based on the trajectory 1314, in response to identifying an external object dragged to the third edge 140-3, the electronic device may switch from the state 1310 to the state 1320. In state 1320, the electronic device may identify whether the distance between the point 350 where the external object is in contact and the third edge 140-3 is less than the preset distance. For example, in case that a period in which the distance is less than the preset distance exceeds a preset period (e.g., 2 seconds), the electronic device may switch from the state 1320 to the state 1330. It will be appreciated that other inputs may be used to cause the transition from state 1320 to state 1330.

Referring to FIG. 13A, the state 1330 may be a state for receiving an input to cease the display of the second screen 334 corresponding to the handle 350 dragged by the external object. In the state 1330, the electronic device may reduce the area of the first screen 332 having the entire area of the displaying area in the states 1310 and 1320 before the state 1330. The electronic device may display a visual object 1232 for notifying the entry into the state 1330. The sum of the area of the visual object 1232 and the reduced area of the first screen 332 may smaller than the entire area of the displaying area.

Referring to FIG. 13A, in the state 1330, the electronic device may display one or more visual objects, such as one or more slots 1334-1, 1334-2, 1334-3 and 1334-4 for calling a pop-up window based on the PIP such as a second screen 334 in the visual object 1232. An embodiment in which the electronic device displays four slots 1334-1, 1334-2, 1334-3 and 1334-4 is illustrated, but the embodiment is not limited thereto. Each of the slots 1334-1, 1334-2, 1334-3, and 1334-4 displayed by the electronic device in the state 1330 may be referred to as a tray. Referring to FIG. 13A, the electronic device may display the slots 1334-1, 1334-2, 1334-3, and 1334-4 adjacent to the third edge 140-3 adjacent to the point 1322 where the external object is in contact in the state 1330.

According to an embodiment, the electronic device may store one or more pop-up windows using the slots 1334-1, 1334-2, 1334-3, and 1334-4. When a user previously stored the pop-up window such as the slot 1334-3, the electronic device may display an icon of an application corresponding to the pop-up window previously stored by the user in the slot 1334-3. When the user does not allocate the pop-up window such as the slots 1334-1, 1334-2, and 1334-4, the electronic device may not display any icons in the slots 1334-1, 1334-2, and 1334-4.

In the state 1330, the electronic device may display an icon 1332 replacing the second screen 334. The icon 1332 may be an icon of an application providing the second screen 334. Similar to how the electronic device adjusts the position of the second screen 334 based on the dragged position of the external object in the states 1310 and 1320, the electronic device may adjust the position of the icon 1332 based on the position at which the external object is dragged in the state 1330. According to an embodiment, in response to identifying a gesture in which the external object releases the icon 1332 on any one of the slots 1334-1, 1334-2, and 1334-4 to which the pop-up window is not allocated, the electronic device may cease to display the slots 1334-1, 1334-2, 1334-3, and 1334-4, and the visual object 1232. Referring to FIG. 13A, it is assumed that the electronic device identifies a gesture in which the external object releases the icon 1332 on the slot 1334-2.

Referring to FIG. 13A, a state 1340 of an electronic device switched from a state 1330 in response to the external object identifying a gesture of releasing the icon 1332 on the slot 1334-2 is illustrated. According to an embodiment, in response to identifying the gesture, the electronic device may cease simultaneously displaying the first screen 332 and the second screen 334 superimposed on the first screen 332, and display the first screen 332 among the first screen 332 and the second screen 334. The electronic device may display the first screen 332 on the entire displaying area of the display 140. The electronic device may display a visual object, such as a menu 1342 for resuming multi-tasking based on a PIP, adjacent to an edge of the displaying area (e.g., the third edge 140-3). The electronic device may display one or more icons corresponding to one or more applications previously allocated to slots 1334-1, 1334-2, and 1334-4 by a user, such as the icon 1332 corresponding to an application providing the second screen 334 in the menu 1342. Since the display of the second screen 334 is ceased based on transforming to the state 1340, the electronic device may at least temporarily cease the execution of the application corresponding to the second screen 334.

Referring to FIG. 13A, although the operation of the electronic device based on the trajectory 1314 facing the third edge 140-3 is described, the embodiment is not limited thereto. For example, in response to receiving an input dragging the second screen 334 toward the fourth edge 140-4, the electronic device may display the slots 1334-1, 1334-2, 1334-2, and 1334-4. In the above example, the electronic device may display the slots 1334-1, 1334-2, 1334-2, and 1334-4 adjacent to the fourth edge 140-4.

According to an embodiment, the electronic device may resume multitasking based on the PIP in response to receiving an input related to the menu 1342 in the state 1340. Referring to FIG. 13B, in the state 1340, the electronic device may switch from the state 1340 to the state 1350 in response to identifying a gesture tapping the menu 1342. In the state 1350, the electronic device may reduce an area in which the first screen 332 is displayed to less than the area of the displaying area. In the state 1350, the electronic device may display the slots 1334-1, 1334-2, 1334-3, and 1334-4. Referring to the state 1330 of FIG. 13A and the state 1350 of FIG. 13B, as an application corresponding to the second screen 334 is allocated to the slot 1334-2 in the state 1330 of FIG. 13A, the electronic device may display an icon (e.g., the icon 1332 of FIG. 13A) of the application corresponding to the second screen 334 in the slot 1334-2.

In response to receiving an input selecting a specific slot to which a specific application has been allocated, among the slots 1334-1, 1334-2, 1334-3, and 1334-4, the electronic device may display the specific screen provided from the specific application by superimposing on the first screen 332. In the state 1350 of FIG. 13B, in response to identifying a gesture initiated within the slot 1334-2 and dragged along the trajectory 1354, the electronic device may resume execution of the application (e.g., the application corresponding to the second screen 334) allocated in the slot 1334-2. In response to identifying the gesture, the electronic device may switch to a state in which execution of the application is resumed. In the state 1360, similar to the state 1310 of FIG. 13A, the electronic device may simultaneously display the first screen 332 and the second screen 334 superimposed on the first screen 332. For example, in the state 1360, the electronic device may resume displaying screens based on the PIP.

As described above, according to an embodiment, the electronic device may control at least one of transformation of the display 140 or multitasking based on the PIP based on edges of the displaying area (e.g., the first edge 140-1 to the fourth edge 140-4). For example, while the external object dragging the handle 350 exceeds the preset distance from the edges, the electronic device may adjust the position of the second screen 334 based on the position of the handle 350 to be dragged. In the above example, when the external object approaches one of the edges less than the preset distance, the electronic device may initiate the transformation of the display 140 or at least temporarily cease multitasking based on the second screen 334. The electronic device may cause the user to intuitively control at least one among parallel movement of the second screen 334 corresponding to the handle 350, transformation of the display 140, and multitasking based on the second screen 334.

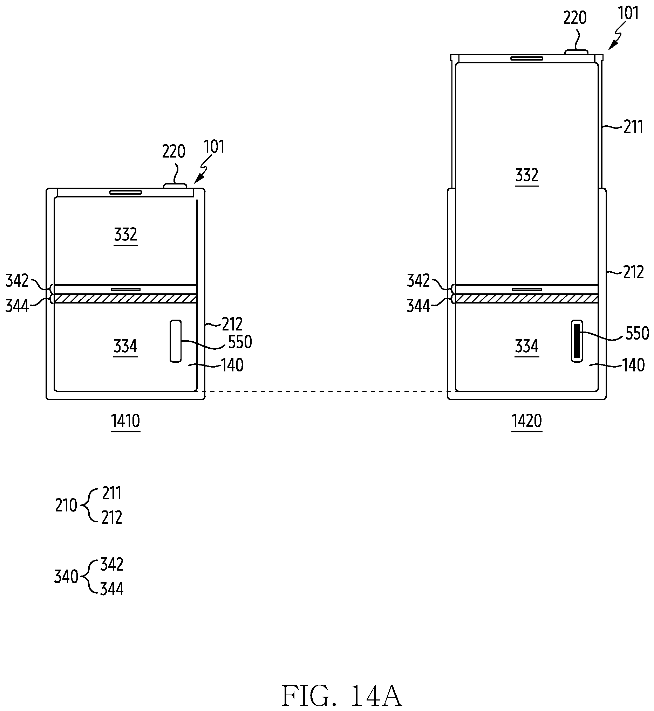

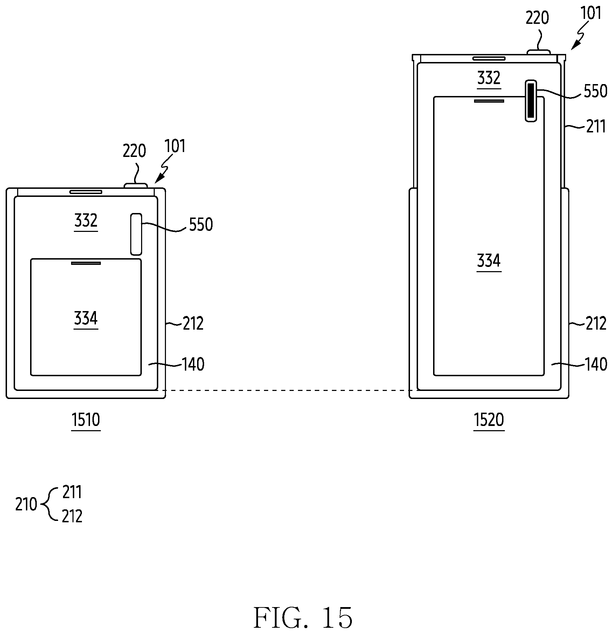

Hereinafter, referring to FIGS. 14A to 14B, and/or FIG. 15, according to an embodiment, an operation performed by the electronic device based on an input of pressing a button for transformation of the display 140 (e.g., buttons 220 of FIGS. 2A to 2B) will be described.

FIGS. 14A to 14B are diagrams for describing an operation performed by an electronic device 110 based on an input by pressing a button 220 for transforming a display 140, according to an embodiment. The electronic devices 101 of FIGS. 14A to 14B may be an example of the electronic devices 101 of FIGS. 1 to 2, and 5A to 12, and the electronic device of FIGS. 3A to 3B, and/or 13. For example, the display 140 of FIG. 1 may include a display 140 of FIGS. 14A to 14B. For example, a housing 210 of the electronic device 101 of FIGS. 14A to 14B may be divided into the first housing 211 and the second housing 212 that are slidably coupled as described above with reference to FIGS. 2A to 2B. For example, the button 220 of FIGS. 2A to 2B may include a button 220 of FIGS. 14A to 14B.

Referring to FIGS. 14A to 14B, different states 1410, 1420, 1430, and 1440 of the electronic device 101 switched by an input pressing the button 220 are illustrated. The states 1410 and 1430 of FIGS. 14A to 14B may be a state in which the electronic device 101 in the slide-in state displays screens (e.g., the first screen 332 and the second screen 334) based on the multitasking. Referring to FIG. 14A, in the state 1410 in which the first screen 332 among the first screen 332 and the second screen 334 is focused, the electronic device 101 may display an indicator 344 in the frame 340 on the border line between the first screen 332 and the second screen 334 on one edge adjacent to the first screen 332. In the state 1410, the electronic device 101 may display a handle 342 for adjusting the position of the border line in the frame 340.

According to an embodiment, the electronic device 101 may toggle the shape of the electronic device 101 and/or the display 140 between the slide-in state and the slide-out state based on receiving an input pressing the button 220. For example, in the slide-in state 1410, in response to receiving the input pressing the button 220, the electronic device 101 may switch to the slide-out state 1420. In the slide-out state 1420, in response to receiving the input pressing the button 220, the electronic device 101 may switch to the slide-in state 1410.

According to an embodiment, the electronic device 101 may emphasize a specific screen (e.g., the first screen 332 in the case of FIG. 14A) that is focused among the screens displayed in the displaying area. Referring to FIG. 14A, during a transformation from the state 1410 to the state 1420, the electronic device 101 may increase the area of the focused first screen 332 and maintain the area of the second screen 334, which is different from the first screen 332. Referring to the states 1410 and 1420, during the transformation from the state 1410 to the state 1420, the area of the first screen 332 may be increased beyond the area of the second screen 334.

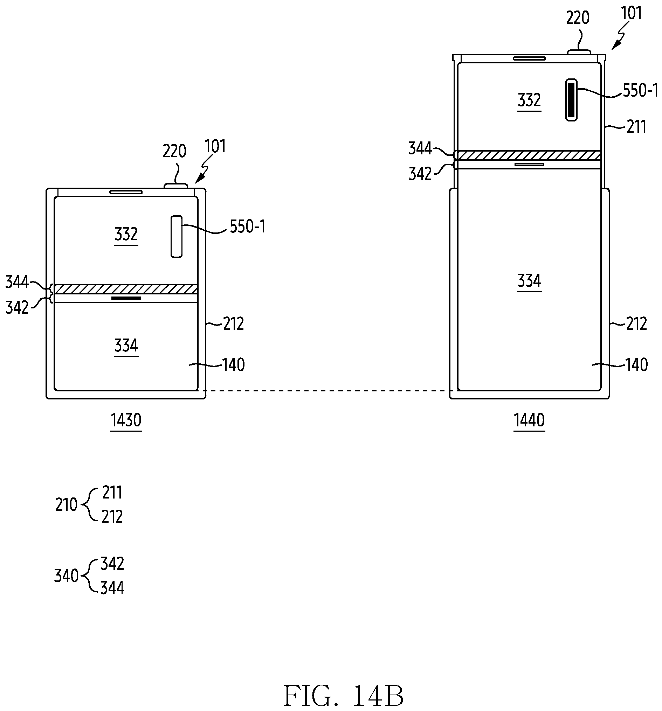

Similarly, referring to FIG. 14B, while the second screen 334 is focused and switched to the slide-out state by pressing the button 220, the electronic device 101 may increase the area of the second screen 334 to exceed an increase rate of the area of the first screen 332. For example, based on identifying the input of pressing the button 220 from the state 1430 in which the second screen 334 is a focused, having the shape of the slide-in state, the electronic device 101 may display the slide bar 550-1 in the display 140. Based on identifying a gesture (e.g., a drag gesture) performed on the slide bar 550-1, the electronic device 101 may transform from a state 1430 having a shape of the slide-in state to a state 1440 having a shape of the slide-out state. During the transformation from the state 1430 to the state 1440, the electronic device 101 may extend the focused second screen 334 larger than the first screen 332.

According to an embodiment, the electronic device 101 may display the slide bar 550 on a portion adjacent to the button 220 in the displaying area in response to receiving an input pressing the button 220. According to an embodiment, the electronic device 101 may superimpose and display the position of the slide bar 550 on a focused specific screen among screens displayed based on the PBP. Referring to FIG. 14A, according to an embodiment, the electronic device 101 may display the slide bar 550 on the focused second screen 334. Meanwhile, referring to FIG. 14B, according to an embodiment, the electronic device 101 may display the slide bar 550-1 on the focused first screen 332. The slide bars 550 of FIGS. 14A to 14B may include the slide bars 550 of FIG. 5A. Referring to the states 1410 and 1420 of FIG. 14, the slide bar 550 may visually indicate the shape (e.g., the size of the display 140 extracted from the housing 210) of the display 140. In response to receiving an input based on the slide bar 550, the electronic device 101 may adjust the shape of the display 140 based on the received input.

In response to receiving an input pressing the button 220 while displaying screens based on the PIP, the electronic device 101 may operate similarly to an embodiment of FIGS. 14A to 14B in which screens are displayed based on the PBP.

FIG. 15 is a diagram for describing an operation performed by an electronic device 101 based on an input by pressing a button 220 for transforming a display 140 while displaying a second screen 343 superimposed on a first screen 332, according to an embodiment. The electronic device 101 of FIG. 15 may be an example of the electronic devices 101 of FIGS. 1 to 2, 5A to 12, 14A to 14B, and/or the electronic devices of FIGS. 3A to 3B, and 13. For example, the display 140 of FIG. 1 may include a display 140 of FIG. 15. For example, a housing 210 of the electronic device 101 of FIG. 15 may be divided into the first housing 211 and the second housing 212 that are slidably coupled as described above with reference to FIGS. 2A to 2B. For example, the button 220 of FIGS. 2A to 2B may include the button 220 of FIG. 15.

Referring to FIG. 15, states 1510 and 1520 in which the electronic device 101 displaying the first screen 332 and the second screen 334 superimposed on the first screen 332 based on the PIP enters by an input pressing the button 220 are illustrated. The state 1510 may be included in a slide-in state. The state 1520 may be included in the slide-out state. According to an embodiment, the electronic device 101 may toggle between the slide-in state and the slide-out state in response to receiving an input pressing the button 220. Referring to FIG. 15, in response to receiving the input pressing the button 220, the electronic device 101 may display the slide bar 550 in a portion adjacent to the button 220 in the displaying area of the display 140. The electronic device 101 may adjust the shape of the display 140 based on an input performed within the slide bar 550.

Referring to FIG. 15, in response to receiving the input pressing the button 220, the electronic device 101 may emphasize highest-level screen (the second screen 334 in an example of FIG. 15) among the stacked screens. For example, during the transformation from the state 1510 to the state 1520 based on the input, the electronic device 101 may make the increase rate of the area of the second screen 334 exceed the increase rate of the area of the first screen 332 (or the increase rate of the area of the displaying area). A ratio in which the second screen 334 occupies the displaying area in the state 1520 may be greater than a ratio in which the second screen 334 occupies the displaying area in the state 1510.

As described above, according to an embodiment, in response to receiving an input transforming the display 140, the electronic device 101 may modify a ratio between screens in the displaying area of the display 140 together with the transformation of the display 140. Based on the modification of the ratio, the electronic device 101 may improve the user experience related to multitasking by combining with the transformation of the display 140.

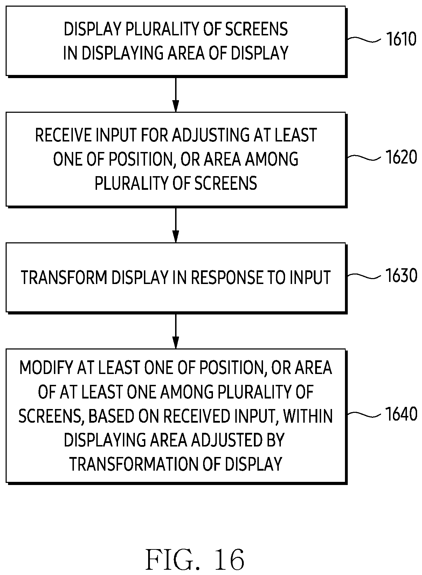

FIG. 16 is a flowchart for describing an operation of an electronic device transforming a display based on an input for adjusting screens displayed in a display, according to an embodiment. The electronic device of FIG. 16 may include the electronic device described above. For example, the electronic device and display of FIG. 16 may include the electronic device 101 and display 140 of FIG. 1. At least one of the operations of FIG. 16 may be performed by the electronic device 101 of FIG. 1 and/or the processor 120 of FIG. 1. It will be understood that one or more of the operations of FIG. 16 may be omitted, and/or the order of the operations of FIG. 16 may be changed, and/or other operations may be performed in addition to, or instead of, one or more of the operations in FIG. 16.

Referring to FIG. 16, in operation 1610, the electronic device according to an embodiment may display a plurality of screens in a displaying area of the display. The displaying area may be a portion of the display exposed to the outside. The plurality of screens may be generated based on each of different processes which are executed by the processor of the electronic device, related to one or more applications, and distinguished by a process ID (PID). For example, the plurality of screens may include screens from an application, screens from a plurality of applications, a home screen, a settings screen, an idle screen, a lock screen or any combination thereof. According to an embodiment, the electronic device may display the plurality of screens on each of different portions connected within the displaying area (e.g., states 310 and 320 of FIGS. 3A to 3B). According to an embodiment, the electronic device may hierarchically display the plurality of screens within the displaying area (e.g., states 330 of FIGS. 3A to 3B). The electronic device may display a visual object (e.g., frames 340 of FIGS. 3A to 3B) for adjusting the position or size of at least one of the plurality of screens together with the plurality of screens.

Referring to FIG. 16, in operation 1620, the electronic device according to an embodiment may receive an input for adjusting at least one of the position, or area among a plurality of screens. The input may include an input of tapping the button 544 of FIGS. 5A to 5B and the gestures illustrated with reference to FIGS. 6 to 11 and 12A to 12B. The input may include a gesture of pressing the button 220 of FIGS. 14A to 14B and/or FIG. 15.

Referring to FIG. 16, in operation 1630, the electronic device according to an embodiment may transform the display in response to an input of the operation 1620. The electronic device may initiate the transformation of the display based on the operation 1630 in response to receiving the input of the operation 1620. The electronic device may transform the display by controlling an actuator (e.g., actuator 150 of FIG. 1). According to an embodiment, transforming the display by the electronic device may cause a transformation between the states 200 and 205 of FIGS. 2A to 2B.

Referring to FIG. 16, in operation 1640, the electronic device according to an embodiment may modify at least one of position, or an area of at least one among a plurality of screens, based on the received input of the operation 1620, within the displaying area adjusted by the transform of the display. For example, the electronic device may modify the areas of a plurality of screens based on the direction of the multi-touch gesture, such as the multi-touch gesture of FIGS. 7A to 7B. For example, as FIGS. 5A to 5B, an area of a specific screen focused by another input before the input of the operation 1620 may be discriminately modified from other screens.

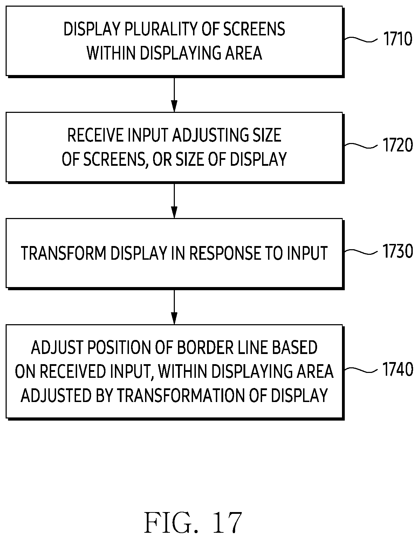

FIG. 17 is a flowchart for describing an operation of an electronic device transforming a display based on an input for adjusting screens displayed in the display, according to an embodiment. The electronic device of FIG. 17 may include the electronic device described above. For example, the electronic device and display of FIG. 17 may include the electronic device 101 and display 140 of FIG. 1. At least one of the operations of FIG. 17 may be performed by the electronic device 101 of FIG. 1 and/or the processor 120 of FIG. 1. It will be understood that one or more of the operations of FIG. 17 may be omitted, and/or the order of the operations of FIG. 17 may be changed, and/or other operations may be performed in addition to, or instead of, one or more of the operations in FIG. 17.

Referring to FIG. 17, in operation 1710, the electronic device according to an embodiment may display a plurality of screens in a displaying area. For example, the electronic device may perform the operation 1710 similar to the operation 1610 of FIG. 16.

Referring to FIG. 17, in operation 1720, the electronic device according to an embodiment may receive an input for adjusting the size of the screens or the size of the display. The input may include an input related to a border line between a plurality of screens. The input related to the border line may be received while the electronic device displays a frame superimposed on the border line (e.g., frame 340 of FIGS. 3A to 3B). The input related to the border line may include a multi-touch gesture performed on the frame of FIGS. 6 to 7, and/or the frame of FIGS. 10A to 10C, and/or a drag gesture performed on the handle 350 of FIG. 11A, and/or a swipe gesture.

Referring to FIG. 17, in operation 1730, the electronic device according to an embodiment may transform the display in response to an input of the operation 1720. For example, in response to receiving the input of the operation 1720, the electronic device may perform the operation 1730. The electronic device may transform the display, for example, by controlling the actuator 150 of FIG. 1. Transforming the display based on the operation 1730 by the electronic device may cause a change in the area of the displaying area of the operation 1710.

Referring to FIG. 17, in operation 1740, the electronic device according to an embodiment may adjust the position of the border line based on the received input within the displaying area adjusted by the transform of the display. For example, similar to the embodiment described above with reference to FIGS. 8A to 8C, the electronic device may adjust the position of the border line based on the input received while transforming the display based on the operation 1730. For example, the electronic device may adjust the position of the border line based on a specific screen focused by another input performed before the input of the operation 1720.

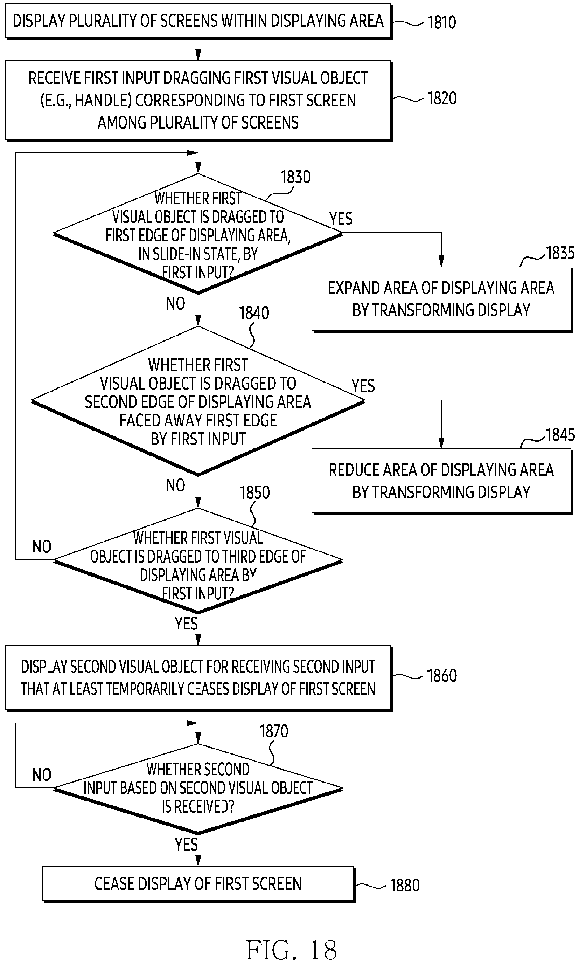

FIG. 18 is a flowchart for describing an operation performed by an electronic device based on a direction of an input of dragging a first screen among screens, according to an embodiment. The electronic device of FIG. 18 may include the electronic device described above. For example, the electronic device and display of FIG. 18 may include the electronic device 101 and display 140 of FIG. 1. At least one of the operations of FIG. 18 may be performed by the electronic device 101 of FIG. 1 and/or the processor 120 of FIG. 1. It will be understood that one or more of the operations of FIG. 18 may be omitted, and/or the order of the operations of FIG. 18 may be changed, and/or other operations may be performed in addition to, or instead of, one or more of the operations in FIG. 18.

Referring to FIG. 18, in operation 1810, the electronic device according to an embodiment may display a plurality of screens in a displaying area. For example, the electronic device may perform the operation 1810 similar to the operation 1610 of FIG. 16 and/or the operation 1710 of FIG. 17.

Referring to FIG. 18, in operation 1820, the electronic device according to an embodiment may receive a first input dragging a first visual object (e.g., a handle) corresponding to the first screen among a plurality of screens. The first visual object may include the handle 350 of FIGS. 12A to 12B and/or 13A to 13B. Based on the trajectory identified by the first input and in which the first visual object is dragged, the electronic device may modify the position of the first screen or initiate a transformation of the display.

Referring to FIG. 18, in operation 1830, the electronic device according to an embodiment may determine whether the first visual object is dragged to a first edge of the displaying area in a slide-in state by the first input. For example, the electronic device may identify a gesture initiated on the point 1212 in the handle 350 and dragged along the trajectory 1214 to the first edge 140-1, as the state 1210 of FIG. 12A.

In the state of identifying that the first visual object is dragged to the first edge of the displaying area by the first input within the slide-in state 1830-YES, the electronic device according to an embodiment may extend the area of the display area by transforming the display in operation 1835. For example, the electronic device may extract a portion of the display inserted into the housing (e.g., the housing 210 of FIG. 2) in the slide-in state. In operation 1835, the electronic device may extend the area in which the first screen is displayed. For example, the electronic device may switch from the slide-in state to the slide-out state.

In the state that the state of the electronic device is not the slide-in state, or the first visual object is not dragged to the first edge 1830-NO, in operation 1840, the electronic device according to an embodiment may determine whether the first visual object is dragged to the second edge of the displaying area faced away the first edge by the first input within the slide-out state. For example, the electronic device may identify a gesture initiated on the point 1242 in the handle 350 and dragged along the trajectory 1244 to the second edge 140-2, as the state 1240 of FIG. 12B.

In the state in which it is identified that the first visual object is dragged to the second edge of the displaying area in the slide-out state by the first input 1840-YES, in operation 1845, the electronic device according to an embodiment may reduce the area of the displaying area by transforming the display. For example, the electronic device may insert a portion of the display extracted from the housing into the housing in the slide-out state. According to an embodiment, the electronic device may reduce an area in which a second screen different from the first screen of the operation 1820 is displayed.

In the state that the state of the electronic device is not the slide-out state, or the first visual object is not dragged to the second edge 1840-NO, in operation 1850, the electronic device according to an embodiment may determine whether the first visual object is dragged to the third edge of the displaying area, which is different from the first edge of the operation 1830 and the second edge of the operation 1840, by the first input. The third edge may include, for example, the third edge 140-3 and the fourth edge 140-4 of FIGS. 13A and 13B. In case that the first visual object is not dragged to the third edge by the first input 1850-NO, the electronic device may track the direction and/or trajectory in which the first visual object is dragged based on the operations 1830, 1840, and 1850.

In the state in which the first visual object is dragged to the third edge by the first input 1850-YES, in operation 1860, the electronic device according to an embodiment may display a second visual object for receiving a second input that at least temporarily ceases the display of the first screen. The second visual object may include the visual object 1262 of FIGS. 13A to 13B and/or one or more slots 1334-1, 1334-2, 1334-3, and 1334-4.

Referring to FIG. 18, in operation 1870, the electronic device according to an embodiment may determine whether the second input based on the second visual object is received. Before receiving the second input 1870-NO, the electronic device may determine whether the second input has been received based on the operation 1870. The second input may include a gesture for allocating a specific application corresponding to the first visual object in one slot of the one or more slots 1334-1, 1334-2, 1334-3, and 1334-4.

Referring to FIG. 18, in the state of receiving the second input of the operation 1870 1870-YES, in operation 1880, the electronic device according to an embodiment may cease display of the first screen. In response to ceasing display of the first screen, the electronic device may display one or more screens other than the first screen among a plurality of screens of the operation 1810 on the display.

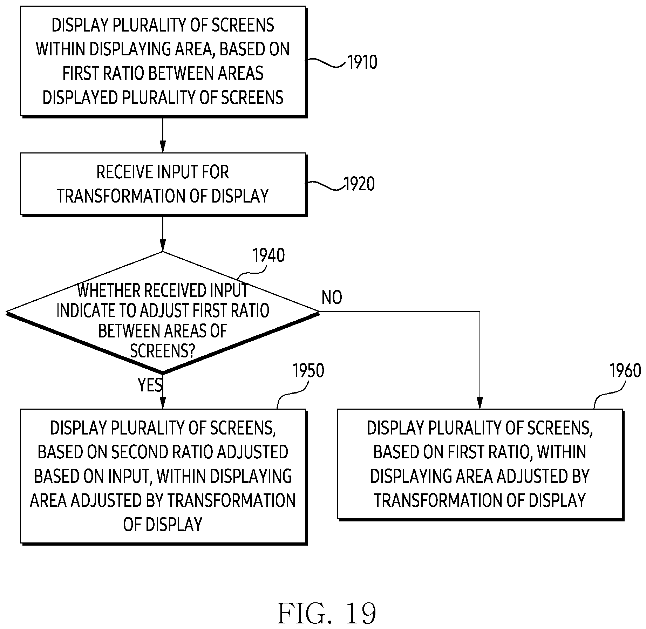

FIG. 19 is a flowchart for describing an operation in which screens adjust a ratio of areas displayed in a displaying area of a display while an electronic device performs the operation of transforming a display, according to an embodiment. The electronic device of FIG. 19 may include the electronic device described above. For example, the electronic device and display of FIG. 19 may include the electronic device 101 and display 140 of FIG. 1. At least one of the operations of FIG. 19 may be performed by the electronic device 101 of FIG. 1 and/or the processor 120 of FIG. 1. It will be understood that one or more of the operations of FIG. 19 may be omitted, and/or the order of the operations of FIG. 19 may be changed, and/or other operations may be performed in addition to, or instead of, one or more of the operations in FIG. 19.

Referring to FIG. 19, in operation 1910, the electronic device according to an embodiment may display a plurality of screens within a displaying area based on a first ratio between areas in which the plurality of screens are displayed. The operation 1910 of FIG. 19 may correspond to the operation 1610 of FIG. 16, the operation 1710 of FIG. 17, and/or the operation 1810 of FIG. 18.

Referring to FIG. 19, in operation 1920, the electronic device according to an embodiment may receive an input for transforming a display. For example, the input may include a gesture of pressing the button 220 of FIGS. 2A and 2B. The electronic device may transform the display based on the input of the operation 1920. The transformation of the display may be performed, for example, based on the actuator 150 of FIG. 1. The transformation of the display may be performed, for example, by inserting the display into a housing of the electronic device (e.g., housing 210 of FIGS. 2A to 2B) or by extracting the display from the housing.

Referring to FIG. 19, in operation 1940, the electronic device according to an embodiment may determine whether the input received based on the operation 1920 indicates to adjust the first ratio between the areas of the screens. For example, the electronic device may identify a gesture of focusing any one screen of a plurality of screens from the input. For example, the electronic device may determine whether to adjust the first ratio based on whether the input of the operation 1920 includes a touch gesture performed within any one screen of the plurality of screens, as FIGS. 10A to 10C, and/or 11A.

In response to identifying that the received input represents an adjustment of the first ratio 1940-YES, in operation 1950, the electronic device according to an embodiment may display a plurality of screens based on a second ratio adjusted based on a second input within the displaying area adjusted by the transformation of the display. The second ratio of the operation 1950 may be different from the first ratio of the operation 1910. By displaying a plurality of screens based on the second ratio different from the first ratio of the operation 1910, the electronic device may display any one screen selected by the second input of the operation 1940, with more emphasis than the other screen. For example, in case that the first ratio is 5:5, the electronic device may extend the display in response to an input of the operation 1920. In the above example, in case that the input indicates adjustment of the first ratio, the electronic device may display screens based on the second ratio different from the first ratio based on the operation 1950. For example, in case that the displaying area is extended by the transformation of the display and the first screen is focused, based on operation 1950, the electronic device may adjust a second ratio between the first screen and the second screen different from the first screen so that the first screen is emphasized more than the second screen such as 6:4 or 7:3.

Referring to the operations 1910 and 1950, according to an embodiment, the electronic device may modify the first ratio, which is a ratio between screens before extending the display, to the second ratio different from the first ratio, based on an input for transform of the display. The second ratio may be a ratio after the display is extended by the operation 1950. The electronic device may modify the ratio of screens from the first ratio to the second ratio based on extending (e.g., while the display is extending) or maintaining (e.g., while the display is reducing) the area of a specific screen focused by the user among the screens.

In response to identifying that the received input indicates maintenance of the first ratio 1940-NO, in operation 1960, the electronic device according to an embodiment may display a plurality of screens based on the first ratio within the displaying area adjusted by a transform of the display. Referring to the operations 1930, 1940, and 1960, in case that the second input is not identified, the electronic device may not adjust the ratio between a plurality of screens before and after the transformation of the display. Referring to the operations 1930, 1940, and 1950, in case that the second input is identified, the electronic device may adjust the ratio between a plurality of screens before and after the transformation of the display based on the second input.

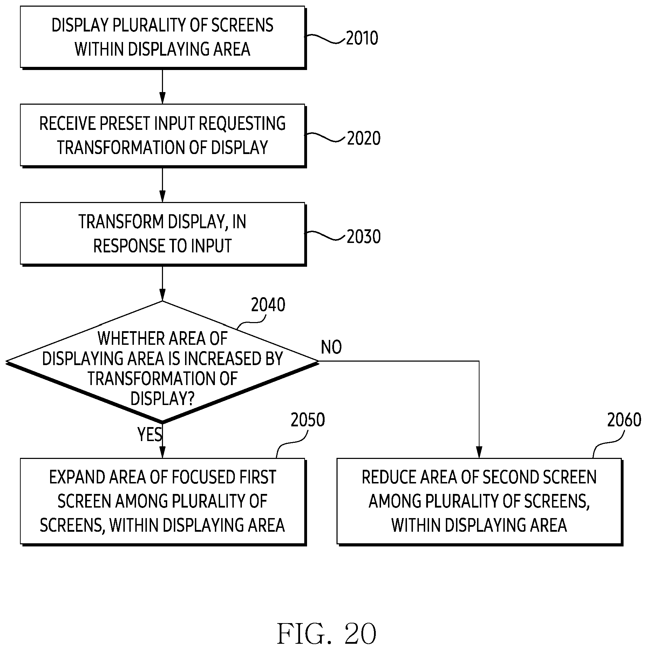

FIG. 20 is a flowchart for describing an operation performed by an electronic device based on a change in an area of a displaying area by a transformation of a display while performing an operation of transforming a display, according to an embodiment. The electronic device of FIG. 20 may include the electronic device described above. For example, the electronic device and display of FIG. 20 may include the electronic device 101 and display 140 of FIG. 1. At least one of the operations of FIG. 20 may be performed by the electronic device 101 of FIG. 1 and/or the processor 120 of FIG. 1. It will be understood that one or more of the operations of FIG. 20 may be omitted, and/or the order of the operations of FIG. 20 may be changed, and/or other operations may be performed in addition to, or instead of, one or more of the operations in FIG. 20.

Referring to FIG. 20, in operation 2010, the electronic device according to an embodiment may display a plurality of screens within the displaying area. The operation 2010 of FIG. 20 may correspond to the operation 1610 of FIG. 16, the operation 1710 of FIG. 17, the operation 1810 of FIG. 18, and/or the operation 1910 of FIG. 19.

Referring to FIG. 20, in the operation 2020, the electronic device according to an embodiment may receive a preset input requesting transform of the display. The preset input may include a gesture of pressing the button 220 of FIGS. 2A to 2B. The preset input may include a gesture performed on the frame 340 and/or the handle 350 of FIGS. 3A and 3B.

Referring to FIG. 20, in operation 2030, the electronic device according to an embodiment may transform the display in response to the preset input of the operation 2020. For example, in response to receiving the preset input of the operation 2020, the electronic device may perform the operation 2030. The electronic device may transform the display by controlling the actuator in FIG1 to roll or unfold the display. The transformation of the display may cause a change in the area of the displaying area of the display exposed to the outside.

Referring to FIG. 20, in operation 2040, the electronic device according to an embodiment may determine whether the area of the displaying area is increased by the transformation of the display. For example, based on the operation 2030, in case that the state of the electronic device is switched from the slide-in state to the slide-out state, the area of the displaying area may be increased. For example, based on the operation 2030, in case that the state of the electronic device is switched from the slide-out state to the slide-in state, the area of the displaying area may be reduced.

In response to identifying that the area of the displaying area is increased 2040-YES, in operation 2050, the electronic device according to an embodiment may extend the area of a focused first screen among a plurality of screens within the displaying area. Among a plurality of screens, a screen corresponding to another input received before the preset input of the operation 2020, and/or an electronic device, and a screen corresponding to a specific application with which a user interacts may be the first screen.

In response to identifying that the area of the displaying area is maintained or reduced 2040-NO, in operation 2060, the electronic device according to an embodiment may reduce the area of a second screen among a plurality of screens within the displaying area. For example, the electronic device may maintain the area of the focused first screen, or reduce the area of the focused first screen with a speed less than the speed at which the area of the displaying area is reduced by reducing the area of the second screen different from the focused first screen. Referring to the operations 2050 and 2060 of FIG. 20, the electronic device according to an embodiment may make the focused first screen more emphasized than other screens such as the second screen.

As described above, according to an embodiment, the electronic device may control the positional relationship of the screen that is simultaneously displayed within the displaying area based on multi-tasking, and the actuator for adjusting the area of the displaying area based on the user's gesture at the same time. For example, the electronic device may improve a user experience related to multitasking based on the gesture. The electronic device may improve user experience related to multitasking by additionally performing physical transform of the display using the gesture.

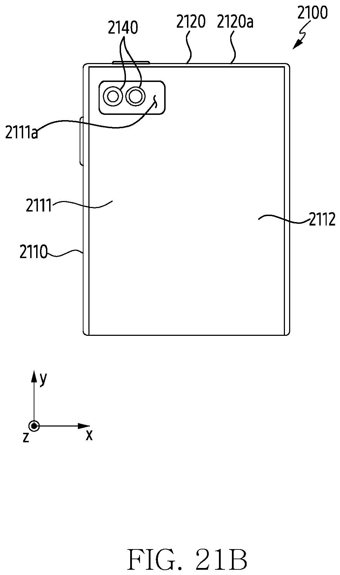

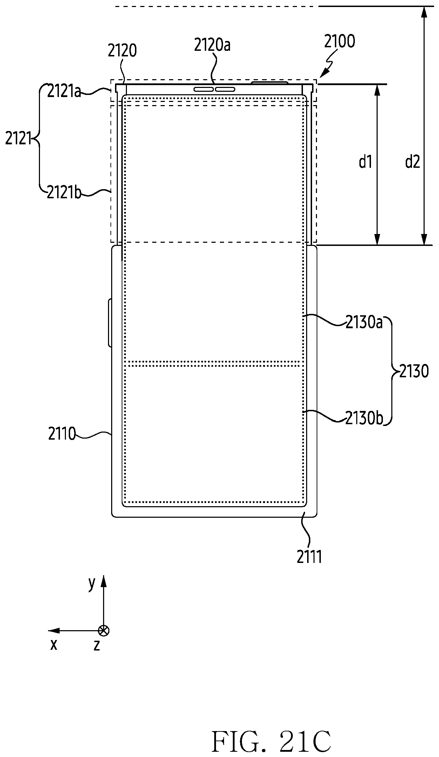

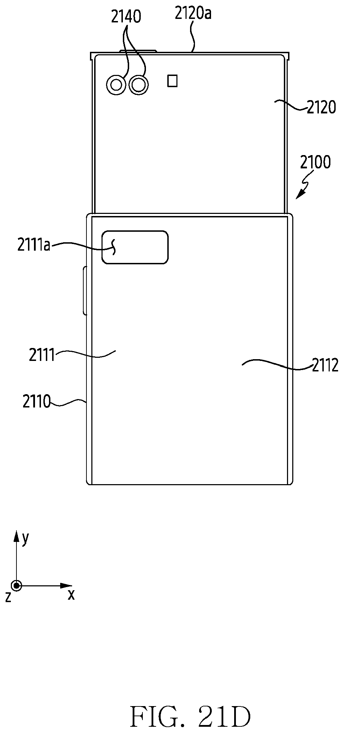

FIG. 21A is a front view of a first state of an electronic device according to an embodiment, FIG. 21B is a rear view of a first state of an electronic device according to an embodiment, FIG. 21C is a front view of a second state of an electronic device according to an embodiment, and FIG. 21D is a rear view of the second state of the electronic device according to an embodiment.

Referring to FIGS. 21A, 21B, 21C, and 21D, the electronic device 2100 (e.g., electronic device 101 of FIG. 1) according to an embodiment may include a first housing 2110 (e.g., corresponding to the first housing 211 of FIGS. 2A and 2B), a second housing 2120 (e.g., corresponding to the second housing 212 of FIGS. 2A and 2B), a display 2130 (e.g., display 140 of FIG. 1), and a camera 2140. According to an embodiment, the second housing 2120 may be slidable with respect to the first housing 2110. For example, the second housing 2120 may move in a range within a preset distance along a first direction (e.g., +y direction) with respect to the first housing 2110. When the second housing 2120 moves along the first direction, a distance between the side surface 2120a of the second housing 2120 facing the first direction and the first housing 2110 may increase. For another example, the second housing 2120 may move in a range within a preset distance along a second direction (e.g., -y direction) opposite to the first direction with respect to the first housing 2110. When the second housing 2120 moves along the second direction, a distance between the side surface 2120a of the second housing 2120 facing the first direction and the first housing 2110 may be reduced. According to an embodiment, the second housing 2120 may linearly reciprocate with respect to the first housing 2110 by relatively sliding with respect to the first housing 2110. For example, at least a portion of the second housing 2120 may be insertable into the first housing 2110 or may be extractable from the first housing 2110.

According to an embodiment, the electronic device 2100 may be referred to as a "slidable electronic device" as the second housing 2120 is designed to be slidable with respect to the first housing 2110. According to an embodiment, the electronic device 2100 may be referred to as a "rollable electronic device" as at least a portion of the display 2130 is designed to be wound inside the second housing 2120 (or the first housing 2110) based on the slide movement of the second housing 2120. For example, at least a portion of the display 2130 may be arranged underneath another portion of the display 2130 when yet another portion of the display 2130 is bent or rolled inside the second housing 2120 (or the first housing 2110) based on the slide movement of the first housing 2110 or the second housing 2120.

According to an embodiment, the first state of the electronic device 2100 may be defined as a state in which the second housing 2120 moves in the second direction (e.g., a contracted state or the slide-in state). For example, in the first state of the electronic device 2100, it may not be substantially movable in the second direction. In the first state of the electronic device 2100, the distance between the side surface 2120a of the second housing 2120 and the first housing 2110 may be not reduced. For another example, in the first state of the electronic device 2100, a portion of the second housing 2120 may not be insertable. According to an embodiment, the first state of the electronic device 2100 may be a state in which the second area 2130b of the display 2130 is not visually exposed outside the electronic device 2100. For example, in the first state of the electronic device 2100, the second area 2130b of the display 2130 may be located inside the internal space (not illustrated) of the electronic device 2100 formed by the first housing 2110 and/or the second housing 2120, and may not be visible outside of the electronic device 2100 or exposed to the outside of the electronic device 2100.

According to an embodiment, the second state of the electronic device 2100 may be defined as a state in which the second housing 2120 has moved in the first direction (e.g., an extract state or the slide-out state). For example, in the second state of the electronic device 2100, the second housing 2120 may not be substantially movable in the first direction. In the second state of the electronic device 2100, the distance between the side surface 2120a of the second housing 2120 and the first housing 2110 may not increase. For another example, in the second state of the electronic device 2100, a portion of the second housing 2120 may not be extractable from the first housing 2110. According to an embodiment, the second state of the electronic device 2100 may be a state in which the second area 2130b of the display 2130 is visually exposed from the outside of the electronic device 2100. For example, in the second state of the electronic device 2100, the second area 2130b of the display 2130 may be extracted from the internal space of the electronic device 2100 and may be visible from the outside of the electronic device 2100 or exposed to the outside of the electronic device 2100.

According to an embodiment, in case that the second housing 2120 moves in the first direction from the first housing 2110, at least a portion of the second housing 2120 and/or the second area 2130b of the display 2130 may be extracted from the first housing 2110 by an extract length d1 corresponding to the moving distance of the second housing 2120. According to an embodiment, the second housing 2120 may reciprocate within a preset distance d2. According to an embodiment, the extract length d1 may have a size in a range from approximately 0 to the preset distance d2.

According to on embodiment, the state of the electronic device 2100 may be convertible between the second state and/or the first state by the manual operation by the user, or by the automatic operation by a driving module (not shown) disposed inside the first housing 2110 or the second housing 2120. According to an embodiment, the driving module may trigger an operation based on a user input. According to an embodiment, a user input for triggering an operation of the driving module may include a touch input through the display 2130, a force touch input, and/or a gesture input. According to another embodiment, a user input for triggering an operation of the driving module may include an audio input (voice input) or an input of a physical button exposed to the outside of the first housing 2110 or the second housing 2120. According to an embodiment, the driving module may be driven in a semi-automatic manner, in which an operation is triggered when a manual operation due to an external force of the user is detected.

According to an embodiment, the first state of the electronic device 2100 may be referred to as a first shape, and the second state of the electronic device 2100 may be referred to as a second shape. For example, the first shape may include a normal state, a reduced state, or a closed state, and the second shape may include an open state. According to an embodiment, the electronic device 2100 may form a third state (e.g., an intermediate state) that is a state between the first state and the second state. For example, the third state may be referred to as a third shape, and the third shape may include a free stop state. Herein, an example of transforming the display or transforming the shape of the display may include changing between two or more of the first shape, the second shape and the third shape.

According to an embodiment, the display 2130 may be visible (or viewable) from the outside through the front direction (e.g., -z direction) of the electronic device 2100 so that visual information may be displayed to the user. For example, the display 2130 may include a flexible display. According to an embodiment, at least a portion of the display 2130 may be disposed in the second housing 2120, and may be extracted from an internal space (not illustrated) of the electronic device 2100 or may be inserted into the internal space of the electronic device 2100 according to the movement of the second housing 2120. The internal space of the electronic device 2100 may refer to a space (or an accommodating portion) in the first housing 2110 and the second housing 2120 formed by the combination of the first housing 2110 and the second housing 2120. For example, in the first state of the electronic device 2100, at least a portion of the display 2130 may be rolled into an internal space of the electronic device 2100 and inserted therein. In a state where at least a portion of the display 2130 is inserted into the internal space of the electronic device 2100, when the second housing 2120 moves in the first direction, at least a portion of the display 2130 may be extracted from the internal space of the electronic device 2100. For another example, when the second housing 2120 moves in the second direction, at least a portion of the display 2130 is rolled into the electronic device 2100, so that it may be inserted into the internal space of the electronic device 2100. As at least a portion of the display 2130 is extracted or inserted, the area of the display 2130 visible from the outside of the electronic device 2100 may be extended or reduced. According to an embodiment, the display 2130 may include a first area 2130a and/or a second area 2130b.

According to an embodiment, the first area 2130a of the display 2130 may refer to an area of the display 2130 that may be fixedly visible from the outside of the electronic device 2100 regardless of whether the electronic device 2100 is in the second state or the first state. For example, the first area 2130a may refer to a partial area of the display 2130 that is not rolled into the internal space of the electronic device 2100. According to an embodiment, when the second housing 2120 moves, the first area 2130a may move together with the second housing 2120. For example, when the second housing 2120 moves along the first direction or the second direction, the first area 2130a may move along the first direction or the second direction on the front surface of the electronic device 2100 together with the second housing 2120.

According to an embodiment, as the second housing 2120 moves, the second area 2130b of the display 2130 may be inserted into the internal space of the electronic device 2100 or may be extracted from the internal space of the electronic device 2100 to the outside. For example, in the first state of the electronic device 2100, at least a portion of the second area 2130b of the display 2130 may be inserted into the internal space of the electronic device 2100, as the rolled state. In the first state of the electronic device 2100, the second area 2130b of the display 2130 is inserted into the internal space of the electronic device 2100 and may not be visible from the outside. For another example, the second area 2130b of the display 2130 may be in a state extracted from the internal space of the electronic device 2100 in the second state of the electronic device 2100. The second area 2130b of the display 2130 may be visible from the outside of the electronic device 2100 in the second state.

According to an embodiment, in the first state of the electronic device 2100, the area of the display 2130 visible from the outside of the electronic device 2100 may include only the first area 2130a of the display 2130. In the second state of the electronic device 2100, the area of the display 2130 visible from the outside of the electronic device 2100 may include at least a portion of the first area 2130a and the second area 2130b of the display 2130.

According to an embodiment, the first housing 2110 of the electronic device 2100 may include a first support member 2111 surrounding the internal space of the first housing 2110, a rear plate 2112 surrounding the rear surface of the first support member 2111, and a first side surface member 2114 surrounding at least a portion of an edge of the first support member 2111. According to an embodiment, the first support member 2111 may be integrally formed with the first side surface member 2114. The first support member 2111 may extend into the electronic device 2100 from at least a portion of one surface of the first side surface member 2114 facing the inside of the electronic device 2100. According to an embodiment, the first support member 2111 and the first side surface member 2114 may be integrally formed or made of the same material.

According to an embodiment, the second housing 2120 of the electronic device 2100 may include a second support member 2121 and a second side surface member 2129 surrounding the internal space of the electronic device 2100.

According to an embodiment, the second side surface member 2129 may form at least a portion of the side surface of the second housing 2120. The second support member 2121 may support an electronic device (e.g., camera 2140 and/or printed circuit board 2124) disposed in the second housing 2120. The second side surface member 2129 may surround at least a portion of the second support member 2121. According to an embodiment, the second support member 2121 may be integrally formed with the second side surface member 2129. The second support member 2121 may extend into the second housing 2120 from at least a portion of one surface of the second side surface member 2124 facing the inside of the second housing 2120. According to an embodiment, the second support member 2121 and the second side surface member 2129 may be integrally formed or made of the same material.

According to an embodiment, the second support member 2121 may include a first cover area 2121a of the second support member 2121 not inserted into the first housing 2110, and a second cover area 2121b inserted into or extracted from the first housing 2110. The first cover area 2121a of the second support member 2121 may always be visible regardless of whether the electronic device 2100 is in the second state or the first state. According to an embodiment, at least a portion of the first cover area 2121a of the second support member 2121 may form a side surface 2120a of the second housing 2120. According to an embodiment, the second cover area 2121b of the second housing 2120 may not be visible in the first state, but may be visible in the second state.

The camera 2140 may obtain an image of a subject based on receiving light from the outside of the electronic device 2100. According to an embodiment, the camera 2140 may include one or a plurality of lenses, an image sensor, and/or an image signal processor. According to an embodiment, the camera 2140 may be disposed in the second housing 2120 to face the rear surface of the electronic device 2100 opposite to the front surface of the electronic device 2100 in which the first area 2130a of the display 2130 is disposed. For example, the camera 2140 may be disposed in the second support member 2121 of the second housing 2120, and may be visible from the outside of the electronic device 2100 through the opening 2111a formed in the first support member 2111 when the electronic device 2100 is in the first state. For another example, the camera 2140 may be disposed in the second support member 2121 of the second housing 2120, and may not be visible from the outside of the electronic device 2100 because it is covered by the first support member 2111 and/or the rear surface plate 2112 when the electronic device 2100 is in the first state.

According to an embodiment, the camera 2140 may include a plurality of cameras. For example, the camera 2140 may include a wide-angle camera, an ultra-wide-angle camera, a telephoto camera, a proximity camera, and/or a depth camera. However, the camera 2140 is not necessarily limited to including a plurality of cameras, and may include one camera.

According to an embodiment, the camera 2140 may further include a camera (not illustrated) facing the front surface of the electronic device 2100 on which the first area 2130a of the display 2130 is disposed. In case that the camera 2140 faces the front surface of the electronic device 2100, the camera 2140 may be an under display camera (UDC) disposed under the display 2130 (e.g., +z direction from the display 2130), but is not limited thereto.

According to an embodiment, the electronic device 2100 may include a sensor module (not illustrated) and/or a camera module (not illustrated) disposed under the display 2130. The sensor module may detect an external environment based on information (e.g., light) received through the display 2130. According to an embodiment, the sensor module may include at least one of a receiver, a proximity sensor, an ultrasonic sensor, a gesture sensor, a gyro sensor, an air pressure sensor, a magnetic sensor, an acceleration sensor, a grip sensor, a color sensor, an IR (infrared) sensor, a biometric sensor, a temperature sensor, a humidity sensor, a motor encoder, or an indicator. According to an embodiment, at least some sensor modules of the electronic device 2100 may be visually exposed from the outside through a partial area of the display 2130. According to an embodiment, the electronic device 2100 may detect an extract length (e.g., length dl) using a sensor module. According to an embodiment, the electronic device 2100 may generate extract information on an extracted degree sensed by the sensor. For example, the electronic device 2100 may sense and/or identify the extracted degree of the second housing 2120 using the extract information. For example, the electronic device 2100 may detect and/or identify the extracted degree of the second housing 2120 using the extract information. According to an embodiment, the extract information may include information on an extract length of the second housing 2120.

According to an embodiment, the coupling form of the first housing 2110 and the second housing 2120 is not limited to the shapes and coupling illustrated in FIGS. 21A, 21B, 21C, and 21D, and may be implemented by a combination and/or coupling of other shapes or components.

FIG. 22A is an exploded perspective view of an electronic device according to an embodiment, and FIG. 22B is a cross-sectional view illustrating an example in which an electronic device according to an embodiment is cut along A-A' of FIG. 15A.

Referring to FIGS. 22A and 22B, an electronic device 2100 according to an embodiment may include a first housing 2110, a second housing 2120, a display 2130, a camera 2140, a battery 2150 (e.g., battery 189 of FIG. 1), and/or a driving unit 2160. According to an embodiment, the first housing 2110 and the second housing 2120 may be coupled to each other to form an internal space 2101 of the electronic device 2100. For example, in the first state of the electronic device 2100, the second area 2130b of the display 2130 may be accommodated in the internal space 2101.

According to an embodiment, the first housing 2110 may include a first support member 2111, a rear plate 2112 and/or a third support member 2113. According to an embodiment, the first support member 2111, the rear plate 2112, and the third support member 2113 included in the first housing 2110 may be coupled to each other and may not move when the second housing 2120 moves with respect to the first housing 2110. According to an embodiment, the first support member 2111 may form at least a portion of an outer surface of the electronic device 2100. For example, the first support member 2111 may form at least a portion of the side surface of the electronic device 2100, and may form at least a portion of the rear surface of the electronic device 2100. According to an embodiment, the first support member 2111 may provide a surface on which the rear plate 2112 is seated. The rear plate 2112 may be mounted on one surface of the first support member 2111.

According to an embodiment, the third support member 2113 may support internal components of the electronic device 2100. For example, the third support member 2113 may accommodate the battery 2150 and the motor 2161 of the driving unit 2160. The battery 2150 and the motor 2161 may be accommodated in at least one of recesses or holes included in the third support member 2113. According to an embodiment, the third support member 2113 may be surrounded by the first support member 2111. For example, in the first state of the electronic device 2100, one surface 2113a of the third support member 2113 on which the battery 2150 is disposed may face the first support member 2111 and/or the second area 2130b of the display 2130. For another example, in the first state of the electronic device 2100, the other surface 2113b of the third support member 2113 facing the opposite direction to the one surface 2113a of the third support member 2113 may face the first area 2130a of the display 2130 or the second support member 2121. For example, the third support member 2113 may include aluminum as a material, but is not limited thereto.

According to an embodiment, the second housing 2120 may include a second support member 2121, a rear cover 2122, and/or a slide cover 2123. According to an embodiment, the second support member 2121, the rear cover 2122, and the slide cover 2123 may be coupled to each other and may move together with the second housing 2120 when the second housing 2120 relatively move with respect to the first housing 2110. The second support member 2121 may support internal components of the electronic device 2100. For example, the printed circuit board 2124 and/or the camera 2140 on which electronic components (e.g., processor 120 in FIG. 1) of the electronic device 2100 are disposed may be disposed on one surface 2121c of the second support member 2121 facing the internal space 2101. The other surface 2121d of the second support member 2121 facing in a direction opposite to the one surface 2121c of the second support member 2121 may face the first area 2130a of the display 2130 when the electronic device 2100 is in the first state. According to an embodiment, the rear cover 2122 may be coupled to the second support member 2121 to protect components of the electronic device 2100 disposed on the second support member 2121. For example, the rear cover 2122 may cover a portion of one surface 2121c of the second support member 2121. According to an embodiment, the slide cover 2123 may be disposed on the rear cover 2122 to form an outer surface of the electronic device 2100 together with the rear plate 2112 and the first support member 2111. The slide cover 2123 may be coupled to one surface of the rear cover 2122 or the second support member 2121 to protect the rear cover 2122 and/or the second support member 2121.

According to an embodiment, when the electronic device 2100 is in the first state, the display 2130 may be bent by at least partially being rolled into the internal space 2101. According to an embodiment, the display 2130 may cover at least a portion of the third support member 2113, and at least a portion of the second support member 2121. For example, when the electronic device 2100 is in the first state, the display 2130 may cover the other surface 2121d of the second support member 2121, may pass between the second support member 2121 and the first support member 2111, and may extend toward the internal space 2101. At least a portion of the display 2130 may surround at least a portion of the third support member 2113, after passing between the second support member 2121 and the first support member 2111. The display 2130 may cover one surface 2113a of the third support member 2113 in the internal space 2101. According to an embodiment, when the second housing 2120 moves in the first direction, the second area 2130b of the display 2130 may be extracted from the internal space 2101. For example, as the second housing 2120 moves in the second direction, the display 2130 may pass between the second support member 2121 and the first support member 2111, and may be extracted from the internal space 2101.

According to an embodiment, the electronic device 2100 may include a support bar 2131 for supporting the display 2130 and a guide rail 2132. For example, the support bar 2131 may include a plurality of bars coupled to each other and may be manufactured in a shape corresponding to the shape of the second area 2130b of the display 2130. According to an embodiment, as the display 2130 moves, the support bar 2131 may move together with the display 2130. According to an embodiment, in the first state in which the second area 2130b of the display 2130 is wound in the internal space 2101, the support bar 2131 may be wound in the internal space 2101 together with the second area 2130b of the display 2130. As the second housing 2120 moves in the first direction, the support bar 2131 may move together with the second area 2130b of the display 2130. According to an embodiment, the guide rail 2132 may guide the movement of the support bar 2131. For example, as the display 2130 moves, the support bar 2131 may move along the guide rail 2132 coupled to the third support member 2113. According to an embodiment, the guide rail 2132 may be coupled to the third support member 2113 or the first support member 2111. For example, the guide rail 2132 may include a plurality of guide rails 2132 disposed to be spaced apart from each other at both edges of the third support member 2113 spaced apart from each other along a third direction perpendicular to the first direction (e.g., +x direction).

According to an embodiment, the driving unit 2160 may provide a driving force to the second housing 2120 so that the second housing 2120 may relatively move with respect to the first housing 2110. According to an embodiment, the driving unit 2160 may include a motor 2161, a pinion gear 2162, and/or a rack gear 2163. The motor 2161 may receive power from the battery 2150 and may provide a driving force to the second housing 2120. According to an embodiment, the motor 2161 may be disposed in the first housing 2110 and not move when the second housing 2120 moves with respect to the first housing 2110. For example, the motor 2161 may be disposed in a recess formed in the third support member 2113. According to an embodiment, the pinion gear 2162 is coupled to the motor 2161 and may rotate by a driving force provided from the motor 2161. According to an embodiment, the rack gear 2163 may engage with the pinion gear 2162, and may move according to rotation of the pinion gear 2162. For example, the rack gear 2163 may reciprocate linearly in the first direction or the second direction according to the rotation of the pinion gear 2162. According to an embodiment, the rack gear 2163 may be disposed in the second housing 2120. For example, the rack gear 2163 may be coupled to the second support member 2121 included in the second housing 2120. According to an embodiment, the rack gear 2163 may be movable inside the operating space 2113p formed in the third support member 2113.

According to an embodiment, when the pinion gear 2162 rotates along the first rotation direction (e.g., clockwise direction in FIG. 22B), the rack gear 2163 may move in the first direction (e.g., +y direction). When the rack gear 2163 moves along the first direction, the second housing 2120 coupled to the rack gear 2163 may move along the first direction. As the second housing 2120 moves along the first direction, the area of the display 2130 visible from the outside of the electronic device 2100 may be extended. When the pinion gear 2162 rotates along the second rotation direction (e.g., counterclockwise direction in FIG. 22B), the rack gear 2163 may move in the second direction (e.g., -y direction). When the rack gear 2163 moves along the second direction, the second housing 2120 coupled to the rack gear 2163 may move along the second direction. As the second housing 2120 moves along the second direction, the area of the display 2130 visible from the outside of the electronic device 2100 may be reduced.

In the above description, it has been described that the motor 2161 and the pinion gear 2162 are disposed in the first housing 2110, and the rack gear 2163 is disposed in the second housing 2120, but embodiments may not be limited thereto. According to embodiments, the motor 2161 and the pinion gear 2162 may be disposed in the second housing 2120 and the rack gear 2163 may be disposed in the first housing 2110.

There follows a description of various embodiments and examples of the present disclosure. It will be appreciated that each and every combination of these various embodiments and examples is envisaged and so should be seen as disclosed herein. In an electronic device including an actuator for transforming a flexible display, a method for driving the actuator while adjusting the positions of screens displayed on the flexible display by the electronic device may be required. As described above, according to an embodiment, an electronic device may comprise a display, and a processor. The processor may display a plurality of screens in a displaying area of the display, based on execution of at least one application. The processor may adjust, in response to an input for transforming the display in a state that a ratio of sizes of the screens is a first ratio, size of the displaying area by transforming the display. The processor may display, in the adjusted displaying area, the screens based on a ratio selected by the input among the first ratio or a second ratio different from the first ratio. According to an embodiment, the electronic device can control driving of the actuator for transforming a shape of the electronic device, based on adjusting positions or areas of screens displayed on the flexible display of the electronic device.

For example, the processor may be configured to extend, in response to the input indicating extending a size of the displaying area, the displaying area based on transformation of the display. The processor may be configured to display, based on identifying a first screen among the screens that is selected by the inputs, the screens based on the second ratio by maintaining a size of a second screen different from the first screen independent from extending of the displaying area.

For example, in the state, the processor may display a preset visual object based on another input indicating that a border line between the screens is selected prior to the input. The processor may initiate the transformation of the display in response to the input indicating that the preset visual object is selected.

For example, the processor may extend the displaying area, based on a first gesture included in the input indicating pressing a preset button of the electronic device. The processor may maintain a size of the second screen independent from expansion of the displaying area, based on a second gesture included in the input indicating selecting the first screen among the screens.

For example, the processor may initiate, in the state that the displaying area is reduced smaller than a preset size, extending the displaying area in response to the input indicating a drag gesture initiated by a preset number of an external objects and initiated on a border line between the screens. The processor may identify, based on a direction of the drag gesture, the first screen among the screens.

For example, the processor may display visual objects for moving the screens, wherein the visual objects are displayed superimposed on the screens. The processor may initiate, in response to the input indicating that a visual object corresponding to the first screen is dragged toward a portion including a preset edge of the displaying area, among the visual object, extending the displaying area.

For example, the processor may reduce the displaying area, in response to the input indicating a reduction in the size of the displaying area, based on the transformation of the above display. The processor may display, based on identifying a first screen among the screens selected by the input, the screens based on the second ratio by maintaining a size of the first screen independent from reducing the displaying area.

For example, the electronic device may further comprise an actuator for adjusting a displaying area of the display by inserting the display into a housing of the electronic device, or by extracting the display from the housing. As described above, according to an embodiment, a method of an electronic device may include an operation of displaying a plurality of screens in a displaying area of the display, based on execution of at least one application. The method of the electronic device may include an operation of adjusting, in response to an input for transforming the display in a state that a ratio of sizes of the screens is a first ratio, size of the displaying area by transforming the display. The method of the electronic device may include an operation of displaying, in the adjusted displaying area, the screens based on a ratio selected by the input among the first ratio, or a second ratio different from the first ratio.

For example, the operation of adjusting may include an operation of extending, in response to the input extending a size of the displaying area, the displaying area based on transformation of the display. The operation of displaying the screens based on the ratio selected by the input may include an operation of displaying, based on identifying a first screen among the screens that is selected by the inputs, the screens based on the screen ratio by maintaining a size of a second screen different from the first screen independent from extending of the displaying area.

For example, the operation of adjusting may include an operation of displaying, based on another input indicating selecting a border line between the screens, and wherein the other input is received before the input, a preset visual object. The operation of adjusting may include an operation of initiating, in response to the input indicating selection of the preset visual object, transformation of the display.

For example, the operation of displaying the screens based on the ratio selected by the input may include an operation of extending, based on a first gesture included in the input indicating pressing a preset button of the electronic device, the displaying area. The operation of displaying the screens based on the ratio selected by the input may include an operation of maintaining, based on a second gesture included in the input indicating selecting the first screen among the screens, a size of the second screen independent from expansion of the displaying area.

For example, the operation of adjusting may include an operation of initiating, in the state that the displaying area is reduced smaller than a preset size, extending the displaying area in response to the input indicating a drag gesture initiated by a preset number of an external objects and initiated on a border line between the screens. The operation of adjusting may include an operation of identifying, based on a direction of the drag gesture, the first screen among the screens.

For example, the operation of displaying the plurality of screens may include displaying visual objects for moving the screens, wherein the visual objects are displayed superimposed on the screens. The operation of adjusting may include initiating, in response to the input indicating that a visual object corresponding to the first screen is dragged toward a portion including a preset edge of the displaying area, extending the displaying area.

For example, the operation of the adjusting may include an operation of reducing, in response to the input indicating reducing a size of the displaying area based on the transforming of the display. The operation of the displaying the screens based on a ratio selected by the input may include an operation of displaying, based on identifying a first screen among the screens selected by the input, the screens based on the second ratio by maintaining a size of the first screen independent from reducing the displaying area.

For example, the operation of the adjusting may include an operation of controlling an actuator for adjusting a displaying area of the display by inserting the display into a housing of the electronic device, or by extracting the display from the housing.

As described above, according to an embodiment, an electronic device may include a display, a memory for storing instructions, and at least one processor operatively coupled to the display and the memory. When the instructions are executed, the at least one processors may display a plurality of screens respectively corresponding to applications are executed by the at least one processor with a visual object for adjusting a position or a size of at least one of the plurality of screens in a displaying area. The at least one processors may transform, in response to receive a first input for adjusting a location of at least one of the plurality of screens by moving the visual object toward a first direction, the display. The at least one processors may modify a location of the at least one of the plurality of screens based on the received first input, in the displaying area adjusted by the transforming of the display. The at least one processors may cease, in response to receive a second input moving the visual object toward a second direction different from the first direction, displaying of at least one of the plurality of screens independent from the transforming of the display.

For example, the at least one processor may transform, in response to receive the first input based on the visual object displayed superimposed on a border line between the plurality of screens, the display.

For example, the at least one processor may extract, in response to receive the first input while a preset portion of the display is inserted into a housing of the electronic device, the preset portion from the housing by transforming the display. The at least one processor may extend, in the displaying area extended by the extraction of the preset portion, an extent of a first screen among the plurality of screens that is selected by a third input received before the first input.

For example, when the instructions are executed, while a portion of the preset is extracted from the housing, the at least one processor may maintain an area of a second screen displayed in the display and different from the first screen among a plurality of screens.

For example, when the instructions are executed, the at least one processor may insert, in response to receive the input while a preset portion of the display is extracted from a housing of the electronic device, the preset portion into the housing by transforming the display. The at least one processor may reduce, in the displaying area reduced by the insertion of the preset portion, an extent of a second screen different from a first screen that is selected by another input received before the first input.

For example, when the instructions are executed, the at least one processor may initiate, in response to receive another input pressing a button exposed outside while receiving the first input by an external object contacted with the visual object, the transforming of the display.

For example, when the instructions are executed, the at least one processor may modify, while the transformation is performed, a location of at least one of the plurality of screens based on a location of the visual object which is adjusted by the external object in the displaying area.

For example, when the instructions are executed, the at least one processor may maintain a ratio of areas of the plurality of screens, during the adjustment of the actuator, based on identifying that the button is pressed independently of the input.

For example, when the instructions are executed, the at least one processor may extend the area of the first screen in the displaying area based on another input selecting a first screen from among the plurality of screens, while extracting at least a portion of the display from the housing based on the first input.

For example, when the instructions are executed, the at least one processor may reduce the area of the second screen different from the first screen in the displaying area based on another input selecting a first screen from among the plurality of screens, while inserting at least a portion of the display into the housing based on the first input.

For example, when the instructions are executed, the at least one processor may extract the display from the housing by transforming the display, in response to identifying that the visual object is dragged to the first edge of the displaying area by the first input.

For example, when the instructions are executed, the at least one processor may insert the display into the housing of the electronic device by transforming the display, in response to identifying that the visual object is dragged to the second edge of the displaying area faced away the first edge by the first input.

For example, when the instructions are executed, the at least one processor may at least temporarily cease the display of the first screen corresponding to the visual object among the plurality of screens, in response to identifying the second input in which the visual object is dragged to the third edge of the displaying area connecting one end of the first edge and one end of the second edge by the input.

For example, the second edge of the displaying area may be formed between the displaying area exposed to the outside and at least a portion of the display rolled by the actuator.

For example, when the instructions are executed, the at least one processor may transform the display, in response to receiving the first input initiated on a border line between the plurality of screens, and including a drag gesture by a preset number of external objects.

For example, when the instructions are executed, the at least one processor may extend the area of the second screen different from the first screen superimposed with the trajectory of the drag gesture, among the plurality of screens, while extracting the display from the housing of the electronic device by transforming the display.

As described above, according to an embodiment, the method of an electronic device may include an operation of displaying a plurality of screens corresponding to each of applications executed by the electronic device, together with a visual object for adjusting the position of at least one of the plurality of screens, in a displaying area of the electronic device. The method of the electronic device may include an operation of transforming the display to adjust the displaying area of the display by inserting the display into the housing of the electronic device or extracting from the housing, in response to receiving a first input to adjust the position of at least one of the plurality of screens by moving the visual object in the first direction. The method of the electronic device may include an operation of modifying a position of at least one of the plurality of screens based on the received first input, in the adjusted displaying area. The method of the electronic device may include an operation of ceasing the display of at least one of the plurality of screens, independently of the transforming of the display, in response to receiving a second input moving the visual object in a second direction different from the first direction.

For example, the operation of adjusting the displaying area may further include an operation of receiving the first input based on the visual object superimposed and displayed on a border line between the plurality of screens.

For example, the operation of adjusting the displaying area may further include an operation of receiving the first input initiated on a border line between the plurality of screens and including a drag gesture by a preset number of external objects.

For example, the modifying operation may further include an operation of increasing an area of a first screen focused by a user among the plurality of screens while extracting the display from the housing by controlling the actuator.

As described above, according to an embodiment, an electronic device may include a housing, a display, an actuator for adjusting a displaying area of the display by inserting the display into the housing or by extracting the display from the housing, a memory for storing instructions, and at least one processor operatively coupled to the display, the actuator, and the memory. When the instructions are executed, the at least one processor may display screens respectively corresponding to the applications executed by the at least one processor in the displaying area. The at least one processor may transform the display, in response to receiving an input for controlling the actuator, while a ratio of areas of the screens corresponds to a first ratio, by controlling the actuator. The at least one processor may display the screens based on a second ratio different from the first ratio in the displaying area adjusted by the transformation of the display.

For example, when the instructions are executed, the at least one processor may display a plurality of icons superimposed on the border line in response to receiving another input touching the border line between the screens. The at least one processor may transform the display by controlling the actuator, in response to receiving the input selecting the preset icon from among the plurality of icons.

For example, the plurality of icons may include a first icon that is the preset icon. The plurality of icons may include a second icon for replacing a first screen among the screens with a second screen different from the first screen. The plurality of icons may include a third icon for adjusting the ratio of the areas independently of controlling the actuator.

For example, when the instructions are executed, the at least one processor may transform the display by controlling the actuator, in response to receiving the input including a first gesture touching a border line between the screens and a second gesture pressing a button formed on the housing. The at least one processor may obtain the second ratio based on a position of the border line in the displaying area adjusted by the first gesture.

For example, when the instructions are executed, the at least one processor may display the screens, based on the second ratio adjusted from the first ratio based on the expansion of the focused first screen among the screens, while the display is extracted from the housing by the actuator.

As described above, according to an embodiment, the method of the electronic device may include an operation of displaying screens corresponding to each of the applications executed by the electronic device within the displaying area of the electronic device. The method of the electronic device may include an operation of controlling the actuator to transform the display, in response to receiving an input for controlling the actuator of the electronic device for inserting the display into the housing of the electronic device or extracting the display from the housing while the ratio of the areas of the screens corresponds to the first ratio. The method of the electronic device may include an operation of displaying the screens based on a second ratio different from the first ratio in the displaying area adjusted by the transformation of the display.

For example, the method of the electronic device may further include an operation of displaying a preset icon superimposed on the border line for receiving the input, in response to receiving another input touching the border line between the screens.

For example, the method of the electronic device may further include an operation of displaying another icon superimposed on the border line with the preset icon in other for adjusting the ratio of the areas, independently of controlling the actuator, in response to receiving the other input.

For example, the transforming operation may include an operation of receiving the input including a first gesture touching a border line between the screens, and a second gesture pressing a button formed on the housing. An operation of displaying the screens based on the second ratio may include an operation of obtaining the second ratio based on a position of the border line in the displaying area adjusted by the first gesture.

For example, an operation of displaying the screens based on the second ratio may include an operation of obtaining the second ratio adjusted from the first ratio based on the expansion of the area of the focused first screen among the screens, while the display extracting from the housing by the actuator. As described above, according to an embodiment, an electronic device comprises: a housing; a display; a processor, wherein the processor is configured to: display, based on execution of at least one application, a plurality of screens in a displaying area of the display; based on receiving a first input for adjusting one or more of the screens or adjusting a size of the displaying area, adjust a size of the displaying area by transforming the display; and display, within the adjusted displaying area, at least one of the screens with at least one of a position or the area of the at least one of the screens modified based on the received first input.

For example, the processor is configured to: display a preset visual object based on a second input including a selection of a border line displayed between the screens, wherein the second input is received before the first input; wherein the first input includes a selection of the preset visual object.

For example, the processor is configured to receive the first input in a state in which a ratio of sizes of areas of the plurality of screens is a first ratio; and displaying the at least one of the screens within the adjusted display area comprises displaying, in the adjusted display area, the plurality of screens based on a ratio selected by the first input among the first ratio or a second ratio different from the first ratio.

For example, the processor is configured to: in response to the first input including an indication to extend a size of the displaying area, extend the displaying area by transforming the display, and display, based on receiving a third input including a selection of a first screen among the screens, the screens based on the second ratio by maintaining a size of a second screen among the screens independent from extending of the displaying area; or in response to the first input including an indication to reduce a size of the displaying area, reducing the displaying area by transforming of the display, and display, based on receiving a third input including a selection of a first screen among the screens, the screens based on the second ratio by maintaining a size of the first screen independent from reducing the displaying area.

For example, the processor is configured to extend, based on the first input including selection of a preset button of the electronic device, the displaying area, and to maintain, based on receiving a third input including a gesture indicating selection of a first screen among the screens, a size of a second screen among the screens independent from expansion of the displaying area; the processor is configured to extend, based on the first input including a drag gesture initiated by a preset number of external objects in a state in which the displaying area is smaller than a preset size, the displaying area, wherein the drag gesture is initiated on a border line displayed between the screens; or the processor is configured to display visual objects for moving the screens, and to extend, based on the first input including a dragging of a visual object corresponding to the first screen toward a portion including a preset edge of the displaying area, the displaying area, wherein the visual objects are displayed superimposed on the screens.

For example, the first input and the third input are included in a same input event.

For example, the electronic device further comprises an actuator for adjusting a displaying area of the display by inserting a portion of the display into the housing, or by extracting a portion of the display from the housing.

For example, transforming the display comprises: in response to receiving the first input while a preset portion of the display is inserted into the housing, extract the preset portion from the housing by transforming the display, and extend, in the displaying area extended by the extraction of the preset portion, an extent of a first screen among the plurality of screens that is selected by a third input received before the first input; or in response to receive the first input while a preset portion of the display is extracted from the housing, insert the preset portion into the housing by transforming the display, and reduce, in the displaying area reduced by the insertion of the preset portion, an extent of a second screen different from a first screen that is selected by another input received before the first input.

For example, the first input includes an input for adjusting at least one of the position of one or more of the screens or an area of one or more of the screens.

As described above, according to an embodiment, a method of an electronic device comprises: displaying, based on execution of at least one application, a plurality of screens in a displaying area of a display of the electronic device; based on receiving a first input for adjusting one or more of the screens or adjusting a size of the displaying area, adjusting a size of the displaying area by transforming the display; and display, within the adjusted displaying area, at least one of the screens with at least one of a position or the area of the at least one of the screens modified based on the received first input.

For example, the method further comprises: displaying, in the displaying area, a visual object for adjusting a position or a size of at least one of the plurality of screens; and wherein first input includes an input for adjusting a location of at least one of the plurality of screens by moving the visual object toward a first direction.

For example, the method further comprises: ceasing, based on receiving a second input moving the visual object toward a second direction different from the first direction, displaying of at least one of the plurality of screens independent from the transforming of the display.

For example, transforming the display comprises one of: in response to receiving the first input based on the visual object, transforming the display, wherein the visual object is displayed superimposed on a border displayed between the plurality of screens; in response to receiving the first input while a preset portion of the display is inserted into a housing of the electronic device, extracting the preset portion from the housing by transforming the display, and extending, in the displaying area extended by the extraction of the preset portion, an extent of a first screen among the plurality of screens that is selected by a third input received before the first input; or in response to receive the first input while a preset portion of the display is extracted from a housing of the electronic device, inserting the preset portion into the housing by transforming the display, and reducing, in the displaying area reduced by the insertion of the preset portion, an extent of a second screen different from a first screen that is selected by another input received before the first input.

For example, transforming the display comprises: based on receiving a third input indicating use of an external button of the electronic device while receiving the first input, initiating the transforming of the display, wherein the first input corresponds to contact of an external object with the displayed visual object; or based on receiving a third input including a selection of a first screen among the plurality of screens, extending an extent of the first screen in the displaying area while extracting at least a portion of the display from a housing of the electronic device based on the first input.

For example, the transforming comprises: based on receiving the third input indicating use of the external button, modifying, while transforming the display, a location of at least one of the plurality of screens based on a location of the visual object which is adjusted by the external object in the displaying area.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit (ALU), digital signal processor, microcomputers, field programmable gate array (FPGA), PLU (programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magnetooptical media such as floppy disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. An electronic device, comprising:
a display;
a processor, wherein the processor is configured to:
display, based on execution of at least one application, a plurality of screens in a displaying area of the display;
adjust, in response to an input for transforming the display in a state that a ratio of sizes of the screens is a first ratio, size of the displaying area by transforming the display;
display, in the adjusted displaying area, the screens based on a ratio selected by the input among the first ratio, or a second ratio different from the first ratio.

2. The electronic device of any one of the preceding claims, wherein the processor is configured to:
extend, in response to the input indicating extending a size of the displaying area, the displaying area based on transformation of the display; and
display, based on identifying a first screen among the screens that is selected by the inputs, the screens based on the second ratio by maintaining a size of a second screen different from the first screen independent from extending of the displaying area.

3. The electronic device of any one of the preceding claims, wherein the processor is configured to:
display, based on another input indicating selecting a border line between the screens, and wherein the another input is received before the input, a preset visual object; and
initiate, in response to the input indicating selection of the preset visual object, transformation of the display.

4. The electronic device of any one of the preceding claims, wherein the processor is configured to:
extend, based on a first gesture included in the input indicating pressing a preset button of the electronic device, the displaying area; and
maintain, based on a second gesture included in the input indicating selecting the first screen among the screens, a size of the second screen independent from expansion of the displaying area.

5. The electronic device of any one of the preceding claims, wherein the processor is configured to:
initiate, in the state that the displaying area is reduced smaller than a preset size, extending the displaying area in response to the input indicating a drag gesture initiated by a preset number of an external objects and initiated on a border line between the screens; and
identify, based on a direction of the drag gesture, the first screen among the screens.

6. The electronic device of any one of the preceding claims, wherein the processor is configured to:
display visual objects for moving the screens, wherein the visual objects are displayed superimposed on the screens;
initiate, in response to the input indicating that a visual object corresponding to the first screen is dragged toward a portion including a preset edge of the displaying area, extending the displaying area.

7. The electronic device of any one of the preceding claims, wherein the processor is configured to:
reducing, in response to the input indicating reducing a size of the displaying area based on the transforming of the display; and
display, based on identifying a first screen among the screens selected by the input, the screens based on the second ratio by maintaining a size of the first screen independent from reducing the displaying area.

8. The electronic device of any one of the preceding claims, further comprising:
an actuator for adjusting a displaying area of the display by inserting the display into a housing of the electronic device, or by extracting the display from the housing.

9. A method of an electronic device, comprising:
displaying, based on execution of at least one application, a plurality of screens in a displaying area of a display of the electronic device;
adjusting, in response to an input for transforming the display in a state that a ratio of sizes of the screens is a first ratio, size of the displaying area by transforming the display;
displaying, in the adjusted displaying area, the screens based on a ratio selected by the input among the first ratio, or a second ratio different from the first ratio.

10. The method of any one of the preceding claims, wherein the adjusting comprises:
extending, in response to the input extending a size of the displaying area, the displaying area based on transformation of the display; and
wherein the displaying the screens based on the ratio selected by the input comprises, displaying, based on identifying a first screen among the screens that is selected by the inputs, the screens based on the screen ratio by maintaining a size of a second screen different from the first screen independent from extending of the displaying area.

11. The method of any one of the preceding claims, wherein the adjusting comprises:
displaying, based on another input indicating selecting a border line between the screens, and wherein the other input is received before the input, a preset visual object; and
initiating, in response to the input indicating selection of the preset visual object, transformation of the display.

12. The method of any one of the preceding claims, wherein the displaying the screens based on the ratio selected by the input comprises:
extending, based on a first gesture included in the input indicating pressing a preset button of the electronic device, the displaying area; and
maintaining, based on a second gesture included in the input indicating selecting the first screen among the screens, a size of the second screen independent from expansion of the displaying area.

13. The method of any one of the preceding claims, wherein the adjusting comprises:
initiating, in the state that the displaying area is reduced smaller than a preset size, extending the displaying area in response to the input indicating a drag gesture initiated by a preset number of an external objects and initiated on a border line between the screens; and
identifying, based on a direction of the drag gesture, the first screen among the screens.

14. The method of any one of the preceding claims, wherein displaying the plurality of screens comprises:
displaying visual objects for moving the screens, wherein the visual objects are displayed superimposed on the screens; and
wherein the adjusting comprises, initiating, in response to the input indicating that a visual object corresponding to the first screen is dragged toward a portion including a preset edge of the displaying area, extending the displaying area.

15. The method of any one of the preceding claims, wherein the adjusting comprises:
reducing, in response to the input indicating reducing a size of the displaying area based on the transforming of the display; and
wherein the displaying the screens based on a ratio selected by the input comprises, displaying, based on identifying a first screen among the screens selected by the input, the screens based on the second ratio by maintaining a size of the first screen independent from reducing the displaying area.
